# EUROPEAN PATENT APPLICATION

(11) **EP 4 811 857 A1**
(43) Date of publication of application: **23.09.2026**
(21) Application number: 24910493.6
(22) Date of filing: 27.11.2024
(51) Int. Cl.: H04W 28/02

(54) **DATA PROCESSING METHOD AND APPARATUS**

(30) Priority: 25.12.2023 CN 202311800910
(71) Applicant: Huawei Technologies Co., Ltd., Shenzhen, Guangdong 518129 (CN)
(72) Inventor: ZHANG, Jian, Shenzhen, Guangdong 518129 (CN); GE, Cuili, Shenzhen, Guangdong 518129 (CN)
(74) Representative: Körber, Martin Hans
(86) International application number: PCT/CN2024/134931
(87) International publication number: WO 2025/139560

(57) **Abstract**

This application provides a data processing method and apparatus. The method includes: obtaining transmission requirement information of a plurality of pieces of data, where one of the plurality of pieces of data is a data stream or a data packet set, and the data packet set includes at least one data packet; determining QUIC encapsulation identifiers of the plurality of pieces of data based on the transmission requirement information of the plurality of pieces of data, where there is a correspondence between the transmission requirement information of the plurality of pieces of data and the QUIC encapsulation identifiers of the plurality of pieces of data; and sending the QUIC encapsulation identifiers of the plurality of pieces of data to a first network element, where the QUIC encapsulation identifiers of the plurality of pieces of data are used to determine identifiers of QoS flows corresponding to the QUIC encapsulation identifiers of the plurality of pieces of data. According to the data processing method and apparatus provided in this application, differentiated QoS control and processing can be performed on QUIC data packets, so that network resources can be appropriately used and scheduled, and application experience can be improved.

## Description

This application claims priority to Chinese Patent Application No. 202311800910.3, filed with the China National Intellectual Property Administration on December 25, 2023 and entitled "DATA PROCESSING METHOD AND APPARATUS", which is incorporated herein by reference in its entirety.

### TECHNICAL FIELD

This application relates to the communication field, and more specifically, to a data processing method and apparatus.

### BACKGROUND

Currently, there are two changing trends in data sent on the internet. First, because a large amount of data is highly latency-sensitive, there are more low-latency applications. Second, as security and privacy problems receive more attention, a proportion of encrypted traffic is increasing, and has increased to nearly 90%. Conventional transmission control protocol (transmission control protocol, TCP)-based internet traffic transmission has problems such as a high connection establishment latency and head-of-line blocking, and cannot meet requirements of current internet applications for a low latency and the like.

Therefore, quick UDP internet connection (Quick UDP Internet Connection, QUIC) emerges. Based on the UDP, the QUIC has advantages such as a low connection latency, multi-stream (stream) multiplexing free of head-of- line blocking, packet header protection and encryption, and seamless connection migration. In a QUIC data transmission process, how to implement appropriate scheduling of network resources is one of problems that urgently need to be resolved currently.

### SUMMARY

This application provides a data processing method and apparatus, to perform differentiated QoS control and processing on QUIC data packets, so that network resources can be appropriately used and scheduled, and application experience can be improved.

According to a first aspect, a data processing method is provided. The method includes: obtaining transmission requirement information of a plurality of pieces of data, where one of the plurality of pieces of data is a data stream or a data packet set, and the data packet set includes at least one data packet; determining QUIC encapsulation identifiers of the plurality of pieces of data based on the transmission requirement information of the plurality of pieces of data, where there is a correspondence between the transmission requirement information of the plurality of pieces of data and the QUIC encapsulation identifiers of the plurality of pieces of data; and sending the QUIC encapsulation identifiers of the plurality of pieces of data to a first network element, where the QUIC encapsulation identifiers of the plurality of pieces of data are used to determine identifiers of QoS flows corresponding to the QUIC encapsulation identifiers of the plurality of pieces of data.

In this embodiment of this application, the QUIC encapsulation identifiers corresponding to the plurality of pieces of data may be determined based on the transmission requirement information of the plurality of pieces of data, and then the QUIC encapsulation identifiers of the plurality of pieces of data are sent to the first network element, to determine the identifiers of the QoS flows of the plurality of pieces of data based on the QUIC encapsulation identifiers of the plurality of pieces of data. Therefore, differentiated QoS control and processing can be performed on QUIC data packets. For example, a QUIC data packet with a high transmission requirement is preferentially scheduled, and a QUIC data packet with a low transmission requirement has a low scheduling priority. Alternatively, selective packet dropping can be performed under network congestion. In this way, network resources can be appropriately used and scheduled when the network resources are limited, and application experience can be improved.

With reference to the first aspect, in some implementations of the first aspect, the plurality of pieces of data include a first service stream and a second service stream, and determining the QUIC encapsulation identifiers of the plurality of pieces of data based on the transmission requirement information of the plurality of pieces of data includes: when transmission requirement information of the first service stream is the same as transmission requirement information of the second service stream, determining that a QUIC encapsulation identifier of the first service stream and a QUIC encapsulation identifier of the second service stream are a first encapsulation identifier; or when transmission requirement information of the first service stream is different from transmission requirement information of the second service stream, determining that a QUIC encapsulation identifier of the first service stream and a QUIC encapsulation identifier of the second service stream are respectively a second encapsulation identifier and a third encapsulation identifier.

In this embodiment of this application, QUIC encapsulation identifiers of a plurality of service streams may be determined based on transmission requirement information of a plurality of data streams, to perform differentiated QoS control and processing on the plurality of service streams. This is applicable to a transmission scenario of a plurality of service streams having different transmission requirements.

With reference to the first aspect, in some implementations of the first aspect, the plurality of pieces of data include a first data packet set and a second data packet set that are of a same service stream, and determining the QUIC encapsulation identifiers of the plurality of pieces of data based on the transmission requirement information of the plurality of pieces of data includes: when transmission requirement information of the first data packet set is the same as transmission requirement information of the second data packet set, determining that a QUIC encapsulation identifier of the first data packet set and a QUIC encapsulation identifier of the second data packet set are a first encapsulation identifier; or when transmission requirement information of the first data packet set is different from transmission requirement information of the second data packet set, determining that a QUIC encapsulation identifier of the first data packet set and a QUIC encapsulation identifier of the second data packet set are respectively a second encapsulation identifier and a third encapsulation identifier.

In this embodiment of this application, QUIC encapsulation identifiers of a plurality of data packet sets may be determined based on transmission requirement information of the plurality of data packet sets in a single data stream, to perform differentiated QoS control and processing on the plurality of data packet sets. This is applicable to a transmission scenario of a plurality of data packet sets having different transmission requirements in a single service stream.

With reference to the first aspect, in some implementations of the first aspect, determining the transmission requirement information of the plurality of pieces of data includes: receiving information about the plurality of pieces of data from an application server, where the information about the plurality of pieces of data includes the transmission requirement information of the plurality of pieces of data; or receiving information about the plurality of pieces of data from an application server, where the information about the plurality of pieces of data includes description information of the plurality of pieces of data and/or transmission requirement information corresponding to the description information; and determining the transmission requirement information of the plurality of pieces of data based on the information about the plurality of pieces of data.

With reference to the first aspect, in some implementations of the first aspect, the QUIC encapsulation identifiers of the plurality of pieces of data include information allocatable by a transmission server and/or a transmission client for indicating a QUIC connection; or the QUIC encapsulation identifiers of the plurality of pieces of data include an IP address and a port number that are allocatable by a transmission server, and/or an IP address and a port number that are allocatable by a transmission client.

In this embodiment of this application, the QUIC encapsulation identifiers may be indicated by the information allocatable by the transmission server and/or the transmission client for indicating the QUIC connection; or the QUIC encapsulation identifiers may be indicated by including the IP address and the port number that are allocatable by the transmission server and/or the IP address and the port number that are allocatable by the transmission client in the QUIC encapsulation identifier. In this way, different manners can be flexibly selected for the QUIC encapsulation identifier, thereby improving diversity of the QUIC encapsulation identifier.

With reference to the first aspect, in some implementations of the first aspect, determining the QUIC encapsulation identifiers of the plurality of pieces of data based on the transmission requirement information of the plurality of pieces of data includes: determining the QUIC encapsulation identifiers of the plurality of pieces of data based on the transmission requirement information of the plurality of pieces of data and first connection information; determining the QUIC encapsulation identifiers of the plurality of pieces of data based on the transmission requirement information of the plurality of pieces of data and second connection information; or determining the QUIC encapsulation identifiers of the plurality of pieces of data based on the transmission requirement information of the plurality of pieces of data, first connection information, and second connection information, where the first connection information is information allocatable by the transmission server for indicating a QUIC connection, the first connection information includes a QUIC connection identifier and/or other information indicating the QUIC connection that are/is allocatable by the transmission server, the second connection information is information allocatable by the transmission client for indicating a QUIC connection, and the second connection information includes a QUIC connection identifier and/or another identifier indicating the QUIC connection that are/is allocatable by the transmission client.

With reference to the first aspect, in some implementations of the first aspect, before determining the QUIC encapsulation identifiers of plurality of pieces of data based on the transmission requirement information of the plurality of pieces of data and the second connection information, or before determining the QUIC encapsulation identifiers of the plurality of pieces of data based on the transmission requirement information of the plurality of pieces of data, the first connection information, and the second connection information, the method further includes: receiving the second connection information sent by the transmission client.

With reference to the first aspect, in some implementations of the first aspect, determining the QUIC encapsulation identifiers of the plurality of pieces of data based on the transmission requirement information of the plurality of pieces of data includes: determining the QUIC encapsulation identifiers of the plurality of pieces of data based on the transmission requirement information of the plurality of pieces of data and first IP information; determining the QUIC encapsulation identifiers of the plurality of pieces of data based on the transmission requirement information of the plurality of pieces of data and second IP information; or determining the QUIC encapsulation identifiers of the plurality of pieces of data based on the transmission requirement information of the plurality of pieces of data, first IP transmission information, and second IP information, where the first IP information includes an IP address and a port number that are allocatable by the transmission server, and the second IP information includes an IP address and a port number that are allocatable by the transmission client.

With reference to the first aspect, in some implementations of the first aspect, before determining the QUIC encapsulation identifiers of the plurality of pieces of data based on the transmission requirement information of the plurality of pieces of data and the second IP information, or before determining the QUIC encapsulation identifiers of the plurality of pieces of data based on the transmission requirement information of the plurality of pieces of data, the first IP information, and the second IP information, the method further includes: receiving the second IP information sent by the transmission client.

With reference to the first aspect, in some implementations of the first aspect, the QUIC encapsulation identifiers of the plurality of pieces of data include information in a QUIC tunnel header.

In this embodiment of this application, identification information may alternatively be the information in the QUIC tunnel header, so that different manners can be flexibly selected for the QUIC encapsulation identifier, thereby improving diversity of the QUIC encapsulation identifier.

With reference to the first aspect, in some implementations of the first aspect, the method further includes: sending the transmission requirement information of the plurality of pieces of data to the first network element.

With reference to the first aspect, in some implementations of the first aspect, the method further includes: receiving the plurality of pieces of data from the application server, where the plurality of pieces of data are downlink data; and encapsulating the plurality of pieces of data by using the QUIC encapsulation identifiers of the plurality of pieces of data, to obtain the plurality of pieces of encapsulated data.

With reference to the first aspect, in some implementations of the first aspect, the method further includes: sending the plurality of pieces of encapsulated data to a second network element, to map the plurality of pieces of encapsulated data to the QoS flows corresponding to the QUIC encapsulation identifiers of the plurality of pieces of data, where the second network element includes a network element responsible for a user plane function.

In this embodiment of this application, the plurality of pieces of encapsulated data are sent to the second network element, so that the second network element can determine the QoS flows corresponding to the data based on the QUIC encapsulation identifiers in the encapsulated data, thereby providing differentiated QoS control and processing for a plurality of pieces of data having different transmission requirements.

With reference to the first aspect, in some implementations of the first aspect, the method further includes: sending the QUIC encapsulation identifiers of the plurality of pieces of data to the transmission client, to encapsulate the plurality of pieces of data through the transmission client by using the QUIC encapsulation identifiers of the plurality of pieces of data, where the plurality of pieces of data are uplink data.

With reference to the first aspect, in some implementations of the first aspect, the application server includes a VAL server.

With reference to the first aspect, in some implementations of the first aspect, the transmission client includes a SEALDD client, and the transmission server includes a SEALDD server.

With reference to the first aspect, in some implementations of the first aspect, the method further includes: the first network element includes a network element responsible for session management, and the identifiers of the QoS flows corresponding to the QUIC encapsulation identifiers of the plurality of pieces of data are determined by the first network element.

With reference to the first aspect, in some implementations of the first aspect, the first network element includes a network element responsible for network capability exposure or a network element responsible for policy control.

According to a second aspect, a data processing method is provided. The method includes: receiving QUIC encapsulation identifiers of a plurality of pieces of data sent by a transmission server, where the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data includes a service stream or a data packet set, and the data packet set includes at least one data packet; and determining, based on the QUIC encapsulation identifiers of the plurality of pieces of data, identifiers of QoS flows corresponding to the QUIC encapsulation identifiers of the plurality of pieces of data.

With reference to the second aspect, in some implementations of the second aspect, the plurality of pieces of data include a first service stream and a second service stream, a QUIC encapsulation identifier of the first service stream and a QUIC encapsulation identifier of the second service stream are a first encapsulation identifier, and transmission requirement information of the first service stream is the same as transmission requirement information of the second service stream; or a QUIC encapsulation identifier of the first service stream and a QUIC encapsulation identifier of the second service stream are respectively a second encapsulation identifier and a third encapsulation identifier, and transmission requirement information of the first service stream is different from transmission requirement information of the second service stream. With reference to the first aspect, in some implementations of the first aspect, the plurality of pieces of data include a first data packet set and a second data packet set that are of a same service stream, a QUIC encapsulation identifier of the first data packet set and a QUIC encapsulation identifier of the second data packet set are a first encapsulation identifier, and transmission requirement information of the first data packet set is the same as transmission requirement information of the second data packet set; or a QUIC encapsulation identifier of the first data packet set and a QUIC encapsulation identifier of the second data packet set are respectively a second encapsulation identifier and a third encapsulation identifier, and transmission requirement information of the first data packet set is different from transmission requirement information of the second data packet set.

With reference to the second aspect, in some implementations of the second aspect, information about the plurality of pieces of data includes the transmission requirement information of the plurality of pieces of data, and the information about the plurality of pieces of data is from an application server; or the transmission requirement information of the plurality of pieces of data is determined based on the information about the plurality of pieces of data, and the information about the plurality of pieces of data includes description information of the plurality of pieces of data and/or transmission requirement information corresponding to the description information.

With reference to the second aspect, in some implementations of the second aspect, the QUIC encapsulation identifiers of the plurality of pieces of data include information allocatable by a transmission server and/or a transmission client for indicating a QUIC connection; the QUIC encapsulation identifiers of the plurality of pieces of data include an IP address and a port number that are allocatable by a transmission server, and/or an IP address and a port number that are allocatable by a transmission client; or the QUIC encapsulation identifiers of the plurality of pieces of data include information in a QUIC tunnel header.

With reference to the second aspect, in some implementations of the second aspect, the QUIC encapsulation identifiers of the plurality of pieces of data are determined based on the transmission requirement information of the plurality of pieces of data and first connection information; the QUIC encapsulation identifiers of the plurality of pieces of data are determined based on the transmission requirement information of the plurality of pieces of data and second connection information; or the QUIC encapsulation identifiers of the plurality of pieces of data are determined based on the transmission requirement information of the plurality of pieces of data, first connection information, and second connection information, where the first connection information is information allocatable by the transmission server for indicating a QUIC connection, the first connection information includes a QUIC connection identifier and/or other information indicating the QUIC connection that are/is allocatable by the transmission server, the second connection information is information allocatable by the transmission client for indicating a QUIC connection, and the second connection information includes a QUIC connection identifier and/or another identifier indicating the QUIC connection that are/is allocatable by the transmission client.

With reference to the second aspect, in some implementations of the second aspect, the second connection information is from the transmission client.

With reference to the second aspect, in some implementations of the second aspect, the QUIC encapsulation identifiers of the plurality of pieces of data are determined based on the transmission requirement information of the plurality of pieces of data and first IP information; the QUIC encapsulation identifiers of the plurality of pieces of data are determined based on the transmission requirement information of the plurality of pieces of data and second IP information; or the QUIC encapsulation identifiers of the plurality of pieces of data are determined based on the transmission requirement information of the plurality of pieces of data, first IP information, and second IP information, where the first IP information includes an IP address and a port number that are allocatable by the transmission server, and the second IP information includes an IP address and a port number that are allocatable by the transmission client.

With reference to the second aspect, in some implementations of the second aspect, the second IP information is from the transmission client.

With reference to the second aspect, in some implementations of the second aspect, the method further includes: receiving the transmission requirement information of the plurality of pieces of data sent by the transmission server.

With reference to the second aspect, in some implementations of the second aspect, the application server includes a VAL server.

With reference to the second aspect, in some implementations of the second aspect, the transmission client includes a SEALDD client, and the transmission server includes a SEALDD server.

With reference to the second aspect, in some implementations of the second aspect, the method further includes: sending, to a second network element, the identifiers of the QoS flows corresponding to the QUIC encapsulation identifiers of the plurality of pieces of data, where the second network element includes a network element responsible for a user plane function.

According to a third aspect, a data processing method is provided. The method includes: receiving a plurality of pieces of encapsulated data sent by a transmission server, where the plurality of pieces of encapsulated data are obtained after encapsulating the plurality of pieces of data based on QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data includes a service stream or a data packet set, and the data packet set includes at least one data packet; and mapping the plurality of pieces of encapsulated data to QoS flows corresponding to the QUIC encapsulation identifiers of the plurality of pieces of data.

With reference to the third aspect, in some implementations of the third aspect, before mapping the plurality of pieces of encapsulated data to the QoS flows corresponding to the QUIC encapsulation identifiers of the plurality of pieces of data, the method further includes: receiving, from a first network element, identifiers of the QoS flows corresponding to the QUIC encapsulation identifiers of the plurality of pieces of data, where the first network element includes a network element responsible for session management.

With reference to the third aspect, in some implementations of the third aspect, the plurality of pieces of data include a first service stream and a second service stream, a QUIC encapsulation identifier of the first service stream and a QUIC encapsulation identifier of the second service stream are a first encapsulation identifier, and transmission requirement information of the first service stream is the same as transmission requirement information of the second service stream; or a QUIC encapsulation identifier of the first service stream and a QUIC encapsulation identifier of the second service stream are respectively a second encapsulation identifier and a third encapsulation identifier, and transmission requirement information of the first service stream is different from transmission requirement information of the second service stream. With reference to the first aspect, in some implementations of the first aspect, the plurality of pieces of data include a first data packet set and a second data packet set that are of a same service stream, a QUIC encapsulation identifier of the first data packet set and a QUIC encapsulation identifier of the second data packet set are a first encapsulation identifier, and transmission requirement information of the first data packet set is the same as transmission requirement information of the second data packet set; or a QUIC encapsulation identifier of the first data packet set and a QUIC encapsulation identifier of the second data packet set are respectively a second encapsulation identifier and a third encapsulation identifier, and transmission requirement information of the first data packet set is different from transmission requirement information of the second data packet set.

With reference to the third aspect, in some implementations of the third aspect, the transmission requirement information of the plurality of pieces of data is determined based on information about the plurality of pieces of data, the information about the plurality of pieces of data includes description information of the plurality of pieces of data, or the information about the plurality of pieces of data includes description information of the plurality of pieces of data and/or transmission requirement information corresponding to the description information, the description information includes descriptor information and/or protocol description information, and the information about the plurality of pieces of data is from an application server.

With reference to the third aspect, in some implementations of the third aspect, the QUIC encapsulation identifiers of the plurality of pieces of data include information allocatable by a transmission server and/or a transmission client for indicating a QUIC connection; the QUIC encapsulation identifiers of the plurality of pieces of data include an IP address and a port number that are allocatable by a transmission server, and/or an IP address and a port number that are allocatable by a transmission client; or the QUIC encapsulation identifiers of the plurality of pieces of data include information in a QUIC tunnel header.

With reference to the third aspect, in some implementations of the third aspect, the QUIC encapsulation identifiers of the plurality of pieces of data are determined based on the transmission requirement information of the plurality of pieces of data and first connection information; the QUIC encapsulation identifiers of the plurality of pieces of data are determined based on the transmission requirement information of the plurality of pieces of data and second connection information; or the QUIC encapsulation identifiers of the plurality of pieces of data are determined based on the transmission requirement information of the plurality of pieces of data, first connection information, and second connection information, where the first connection information is information allocatable by the transmission server for indicating a QUIC connection, the first connection information includes a QUIC connection identifier and/or other information indicating the QUIC connection that are/is allocatable by the transmission server, the second connection information is information allocatable by the transmission client for indicating a QUIC connection, and the second connection information includes a QUIC connection identifier and/or another identifier indicating the QUIC connection that are/is allocatable by the transmission client.

With reference to the third aspect, in some implementations of the third aspect, the second connection information is from the transmission client.

With reference to the third aspect, in some implementations of the third aspect, the QUIC encapsulation identifiers of the plurality of pieces of data are determined based on the transmission requirement information of the plurality of pieces of data and first IP information; the QUIC encapsulation identifiers of the plurality of pieces of data are determined based on the transmission requirement information of the plurality of pieces of data and second IP information; or the QUIC encapsulation identifiers of the plurality of pieces of data are determined based on the transmission requirement information of the plurality of pieces of data, first IP information, and second IP information, where the first IP information includes an IP address and a port number that are allocatable by the transmission server, and the second IP information includes an IP address and a port number that are allocatable by the transmission client.

With reference to the third aspect, in some implementations of the third aspect, the second IP information is from the transmission client.

With reference to the third aspect, in some implementations of the third aspect, the application server includes a VAL server.

With reference to the third aspect, in some implementations of the third aspect, the transmission client includes a SEALDD client, and the transmission server includes a SEALDD server.

According to a fourth aspect, a data processing method is provided. The method includes: obtaining a plurality of pieces of data, where one of the plurality of pieces of data is a service stream or a data packet set, the data packet set includes at least one data packet, and the plurality of pieces of data are uplink data; obtaining QUIC encapsulation identifiers of the plurality of pieces of data, where the QUIC encapsulation identifiers of the plurality of pieces of data are determined based on transmission requirement information of the plurality of pieces of data, and there is a correspondence between the transmission requirement information of the plurality of pieces of data and the QUIC encapsulation identifiers of the plurality of pieces of data; encapsulating the plurality of pieces of data based on the QUIC encapsulation identifiers of the plurality of pieces of data, to obtain the plurality of pieces of encapsulated data; and sending the plurality of pieces of encapsulated data to a user equipment, to map the plurality of pieces of encapsulated data to QoS flows corresponding to the QUIC encapsulation identifiers of the plurality of pieces of data.

In this embodiment of this application, the plurality of pieces of data may be encapsulated based on the QUIC encapsulation identifiers that correspond to the plurality of pieces of data and that have a correspondence with the transmission requirement information, and then the encapsulated data is mapped to the QoS flows corresponding to the QUIC encapsulation identifiers. Therefore, differentiated QoS control and processing can be implemented on QUIC data packets. For example, a QUIC data packet with a high transmission requirement is preferentially scheduled, and a QUIC data packet with a low transmission requirement has a low scheduling priority. Alternatively, selective packet dropping can be performed under network congestion. In this way, network resources can be appropriately used and scheduled when the network resources are limited, and application experience can be improved.

With reference to the fourth aspect, in some implementations of the fourth aspect, obtaining the plurality of pieces of data includes: receiving the plurality of pieces of data from an application client.

With reference to the fourth aspect, in some implementations of the fourth aspect, obtaining the QUIC encapsulation identifiers of the plurality of pieces of data includes: receiving the QUIC encapsulation identifiers of the plurality of pieces of data from a transmission server.

With reference to the fourth aspect, in some implementations of the fourth aspect, the application client includes a VAL client.

According to a fifth aspect, a data processing method is provided. The method includes: receiving a plurality of pieces of encapsulated data sent by a transmission client, where the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data is a service stream or a data packet set, the data packet set includes at least one data packet, and the plurality of pieces of data are uplink data; and mapping the plurality of pieces of encapsulated data to QoS flows corresponding to the QUIC encapsulation identifiers of the plurality of pieces of data.

With reference to the fifth aspect, in some implementations of the fifth aspect, before mapping the plurality of pieces of encapsulated data to the QoS flows of the plurality of pieces of data, the method further includes: receiving, from a first network element, identifiers of the QoS flows corresponding to the QUIC encapsulation identifiers of the plurality of pieces of data, where the first network element includes a network element responsible for network capability exposure.

According to a sixth aspect, a data processing apparatus is provided. The apparatus includes: a processing unit, configured to: determine transmission requirement information of a plurality of pieces of data, where one of the plurality of pieces of data is a service stream or a data packet set, and the data packet set includes at least one data packet; and determine QUIC encapsulation identifiers of the plurality of pieces of data based on the transmission requirement information of the plurality of pieces of data, where there is a correspondence between the transmission requirement information of the plurality of pieces of data and the QUIC encapsulation identifiers of the plurality of pieces of data; and a sending unit, configured to send the QUIC encapsulation identifiers of the plurality of pieces of data to a first network element, where the QUIC encapsulation identifiers of the plurality of pieces of data are used to determine identifiers of QoS flows corresponding to the QUIC encapsulation identifiers of the plurality of pieces of data. According to a seventh aspect, a data processing apparatus is provided. The apparatus includes: a receiving unit, configured to receive QUIC encapsulation identifiers of a plurality of pieces of data sent by a transmission server, where the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data includes a service stream or a data packet set, and the data packet set includes at least one data packet; and a processing unit, configured to determine, based on the QUIC encapsulation identifiers of the plurality of pieces of data, identifiers of QoS flows corresponding to the QUIC encapsulation identifiers of the plurality of pieces of data.

According to an eighth aspect, a data processing apparatus is provided. The apparatus includes: a receiving unit, configured to receive a plurality of pieces of encapsulated data sent by a transmission server, where the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data includes a service stream or a data packet set, and the data packet set includes at least one data packet; and a processing unit, configured to map the plurality of pieces of encapsulated data to QoS flows corresponding to the QUIC encapsulation identifiers of the plurality of pieces of data.

According to a ninth aspect, a data processing apparatus is provided. The apparatus includes: an obtaining unit, configured to: obtain a plurality of pieces of data, where one of the plurality of pieces of data is a service stream or a data packet set, the data packet set includes at least one data packet, and the plurality of pieces of data are uplink data; and obtain QUIC encapsulation identifiers of the plurality of pieces of data, where the QUIC encapsulation identifiers of the plurality of pieces of data are determined based on transmission requirement information of the plurality of pieces of data, and there is a correspondence between the transmission requirement information of the plurality of pieces of data and the QUIC encapsulation identifiers of the plurality of pieces of data; a processing unit, configured to encapsulate the plurality of pieces of data based on the QUIC encapsulation identifiers of the plurality of pieces of data, to obtain the plurality of pieces of encapsulated data; and a sending unit, configured to send the plurality of pieces of encapsulated data to a user equipment, to map the plurality of pieces of encapsulated data to QoS flows corresponding to the QUIC encapsulation identifiers of the plurality of pieces of data.

According to a tenth aspect, a data processing apparatus is provided. The apparatus includes: a receiving unit, configured to receive a plurality of pieces of encapsulated data sent by a transmission client, where the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data is a service stream or a data packet set, the data packet set includes at least one data packet, and the plurality of pieces of data are uplink data; and a processing unit, configured to map the plurality of pieces of encapsulated data to QoS flows corresponding to the QUIC encapsulation identifiers of the plurality of pieces of data.

According to an eleventh aspect, a computer-readable medium is provided. The computer-readable medium stores program code. When the computer program code is run on a computer, the computer is enabled to perform the method according to any one of the possible implementations of the first aspect to the fifth aspect.

According to a twelfth aspect, a communication apparatus is provided. The communication apparatus includes at least one processor. The at least one processor is coupled to a memory, and is configured to read and execute instructions in the memory, to perform the method according to any one of the possible implementations of the first aspect to the fifth aspect.

### BRIEF DESCRIPTION OF DRAWINGS

FIG. 1 is a diagram of an architecture of a 5G mobile communication system according to an embodiment of this application;
FIG. 2 is a diagram of a 5G QoS architecture according to an embodiment of this application;
FIG. 3 is a diagram of mapping of a 5G QoS flow according to an embodiment of this application;
FIG. 4 is a diagram of QUIC protocol encryption according to an embodiment of this application;
FIG. 5 is a diagram of an architecture of QoS processing at a granularity of a PDU set according to an embodiment of this application;
FIG. 6 is a diagram of an architecture of a SEALDD enhancement layer according to an embodiment of this application;
FIG. 7 is a diagram of data processing of a SEALDD enhancement layer according to an embodiment of this application;
FIG. 8 to FIG. 15A and FIG. 15B are schematic flowcharts of data processing methods according to embodiments of this application; and
FIG. 16 to FIG. 21 are diagrams of data processing apparatuses according to embodiments of this application.

### DESCRIPTION OF EMBODIMENTS

The following describes technical solutions of this application with reference to accompanying drawings.

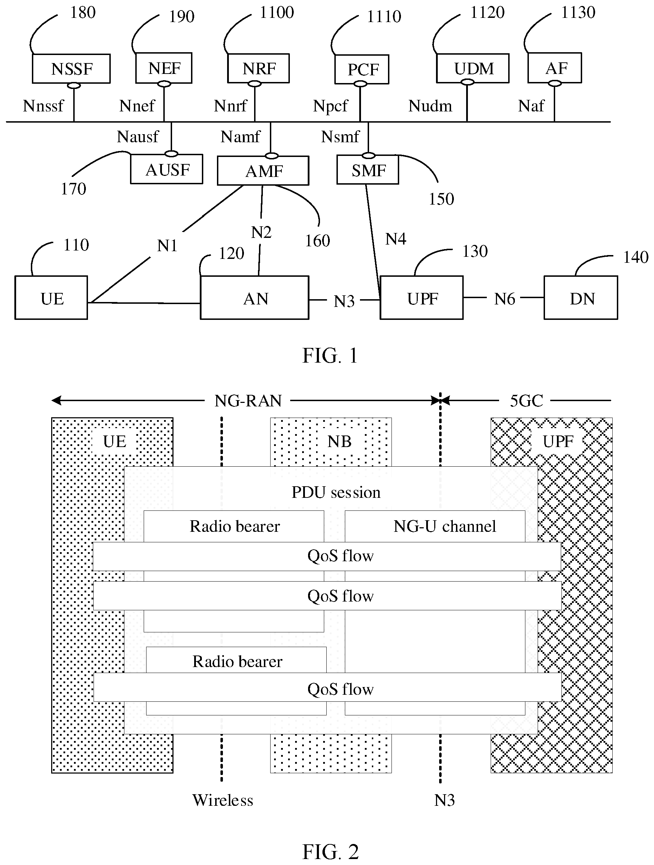

FIG. 1 is a diagram of an architecture of a 5G mobile communication system, including a user equipment (user equipment, UE) 110, an access network (access network, AN) 120, a core network (core network, CN), and a data network (data network, DN) 140. The architecture mainly includes the UE 110, the AN 120, and the CN. Logically, the UE, the AN, and the CN each may be divided into two parts: a user plane and a control plane. The control plane is responsible for mobile network management, and the user plane is responsible for service data transmission. In the figure, an N2 reference point is located between a control plane of the access network and a control plane of the core network, an N3 reference point is located between a user plane of the access network and a user plane of the core network, and an N6 reference point is located between the user plane of the core network and the data network. The network architecture shown in FIG. 1 may specifically include the following components.

The UE 110 is an entry point for interaction between a mobile user and a network, and can provide a basic computing capability and storage capability, display a service window for the user, and receive a user operation input. The UE 110 establishes a signal connection and a data connection to the AN 120 by using the new radio technology, to transmit a control signal and service data to a mobile network.

The user equipment in embodiments of this application may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The UE 110 may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a future 5G network, a terminal device in a future evolved public land mobile network (public land mobile network, PLMN), or the like; or may be an end device, a logical network element, an intelligent device such as a mobile phone, an intelligent terminal, or another terminal device, a communication device such as a server, a gateway, a base station, or a controller, or an internet of things (Internet of things, IoT) device such as a sensor, an electricity meter, or a water meter. The UE may alternatively be a wired device such as a computer or a notebook computer. This is not limited in embodiments of this application.

The AN 120 is similar to a base station in a conventional network, is deployed near the UE 110, provides a network access function for an authorized user in a specific area, and can determine transmission tunnels with different quality based on user levels, service requirements, and the like to transmit user data. The AN 120 can manage and appropriately use resources of the AN, provide an access service for the UE 110 as required, and is responsible for forwarding a control signal and user data between the UE and the core network.

The access network may be access networks using different access technologies. Currently, there are two types of radio access technologies: a 3rd generation partnership project (3rd Generation Partnership Project, 3GPP) access technology (for example, a radio access technology used in a 3G, 4G, or 5G system) and a non-3rd generation partnership project (non-3GPP) access technology. The 3GPP access technology is an access technology that complies with a 3GPP standard specification. An access network using the 3GPP access technology is referred to as a radio access network (Radio Access Network, RAN), and an access network device in a 5G system is referred to as a next generation node base station (next generation Node Base station, gNB). The non-3GPP access technology is an access technology that does not comply with the 3GPP standard specification, for example, an air interface technology represented by a Wi-Fi access point (access point, AP).

An access network that implements a network access function based on a wired communication technology may be referred to as a wired access network.

An access network that implements a network access function based on a wireless communication technology may be referred to as a radio access network (radio access network, RAN). The radio access network can manage radio resources, and provide an access service for a terminal, to further complete forwarding of a control signal and user data between the terminal and the core network.

A radio access network device may be, for example, a NodeB (NodeB), an evolved NodeB (evolved NodeB, eNB or eNodeB), a gNB (gNB) in a 5G mobile communication system, a base station in a future mobile communication system, or an AP in a Wi-Fi system; or may be a radio controller in a cloud radio access network (cloud radio access network, CRAN) scenario. Alternatively, the access network device may be a relay station, an access point, a vehicle-mounted device, a wearable device, a network device in a future 5G network, a network device in a future evolved PLMN, or the like. A specific technology and a specific device form that are used by the radio access network device are not limited in embodiments of this application. It may be understood that all or some functions of the radio access network device in this application may alternatively be implemented by using a software function running on hardware, or may be implemented by using a virtualized function instantiated on a platform (for example, a cloud platform).

The CN is responsible for maintaining subscription data of the mobile network, managing network elements of the mobile network, and providing the UE 110 with functions such as session management, mobility management, policy management, and security authentication. The CN provides network access authentication for the UE 110 when the UE 110 attaches; allocates a network resource to the UE 110 when the UE 110 has a service request; updates a network resource for the UE 110 when the UE 110 moves; provides a fast recovery mechanism for the UE 110 when the UE 110 is idle; releases a network resource for the UE 110 when the UE 110 detaches; and provides a data routing function for the UE 110 when the UE 110 has service data, for example, forwards uplink data to the DN 140, or receives downlink data of the UE 110 from the DN 140 and forwards the downlink data to the AN 120, to send the data to the UE 110.

The DN 140 is a data network providing a service for the user. Usually, a client is located in the UE, and a server is located in the data network. The data network may be a private network, for example, a local area network; an external network that is not managed and controlled by an operator, for example, the internet; or a dedicated network jointly deployed by operators, for example, a network that provides an IP multimedia subsystem (IP multimedia subsystem, IMS) service.

To facilitate understanding of the 5G network architecture, the following further describes the core network in the 5G network architecture.

The control plane of the core network uses a service-oriented architecture. Control plane network elements interact with each other in a service invoking manner instead of a point-to-point communication manner in a conventional architecture. In the service-oriented architecture, a control plane network element opens a service to another control plane network element for invoking by the another control plane network element. In point-to-point communication, a set of specific messages exist in a communication interface between control plane network elements, and can be used only by control plane network elements at two ends of the interface during communication. Functions (network elements) of functional network elements in the core network are as follows:
A user plane function (user plane function, UPF) network element 130 is a data plane gateway. The user plane function network element may be configured to: perform packet routing and forwarding, perform quality of service (quality of service, QoS) processing on user plane data, or the like. User data can be accessed to the DN 140 through this network element. In embodiments of this application, the user plane function network element may be configured to implement a function of a user plane gateway.

A session management function (session management function, SMF) network element 150 is mainly configured to perform session management, internet protocol (internet protocol, IP) address allocation and management of the UE 110, selection and management of a user plane function, termination of an interface toward a policy control or charging function, downlink data notification, and the like. In embodiments of this application, the session management function network element may be configured to implement a function of a session management network element. The session management function network element is mainly configured to perform selection of a user plane network element, redirection of a user plane network element, IP address allocation of a terminal device, session establishment, modification, and release, and QoS control.

An access and mobility management function (access and mobility management function, AMF) network element 160 is mainly configured to perform mobility management, access management, and the like, and may be configured to implement a function, for example, lawful interception or access authorization (or authentication), other than session management in functions of a mobility management entity (mobility management entity, MME). In embodiments of this application, the access and mobility management function network element may be configured to implement a function of an access and mobility management network element.

An authentication server function (authentication server function, AUSF) network element 170 is mainly configured to perform user authentication and the like.

A network slice selection function (network slice selection function, NSSF) network element 180 is configured to perform selection of a network slice instance set serving the UE 110, determining of allowed network slice selection assistance information (network slice selection assistance information, NSSAI), and the like.

A network exposure function (network exposure function, NEF) network element 190 is configured to securely expose, to the outside, a service, a capability, and the like that are provided by a 3GPP network function.

A network repository function (network repository function, NRF) network element 1100 is configured to: store a network function network element and description information of a service provided by the network function network element, and support service discovery, network element discovery, and the like.

A policy control function (policy control function, PCF) network element 1110 is a unified policy framework for instructing network behavior, and provides policy rule information and the like for control plane function network elements (such as the AMF network element 160 and the SMF network element 150).

A unified data management (unified data management, UDM) network element 1120 is configured to perform user identifier processing, access authentication, registration, mobility management, and the like.

An application function (application function, AF) network element 1130 is configured to support application influence on data routing, accessing a network exposure function network element, interacting with a policy framework for policy control, and the like.

The network architecture in FIG. 1 may further include another network element, for example, the NRF network element 1100 or a device. This is not specifically limited in this application. Certainly, in a future communication system, the functional network elements may have the foregoing names, or may have other names. This is not limited in this application.

In the network architecture, an N1 interface is a reference point between the UE 110 and the AMF network element 160; an N2 interface is a reference point between the AN 120 and the AMF network element 160, and is configured to send a non-access stratum (non-access stratum, NAS) message and the like; an N3 interface is a reference point between the AN 120 and the UPF network element 130, and is configured to transmit user plane data and the like; an N4 interface is a reference point between the SMF network element 150 and the UPF network element 130, and is configured to transmit information such as tunnel identification information of an N3 connection, data buffering indication information, and a downlink data notification message; and an N6 interface is a reference point between the UPF network element 130 and the DN 140, and is configured to transmit user plane data and the like.

In a 5G network, to ensure quality of service (Quality of service, QoS) of services, a QoS flow-based 5G QoS architecture is provided.

The following describes, with reference to FIG. 2, the 5G QoS architecture provided in this application.

QoS is a mechanism for guaranteeing service transmission quality, and intends to provide end-to-end quality of service guarantees for different requirements of various services. In one protocol data unit (protocol data unit, PDU) session (session), a QoS flow is a finest granularity for QoS differentiation. In a 5G system, a QoS flow identifier (QoS flow identifier, QFI) is used to identify a QoS flow, and the QFI needs to be unique in one PDU session. In other words, one PDU session may have a plurality of (a maximum of 64) QoS flows, but each QoS flow has a different QFI. In one PDU session, user plane service flows that have a same QFI use a same service forwarding processing manner (for example, scheduling).

In terms of configuration granularity, one PDU session may correspond to a plurality of data radio bearers (data radio bearers, DRBs). One DRB may further include a plurality of QoS flows.

For each PDU session, there is still a single NG-U channel between a 5GC and an AN, and a DRB is used between the AN and a UE. The AN controls to map a QoS flow to a specific DRB.

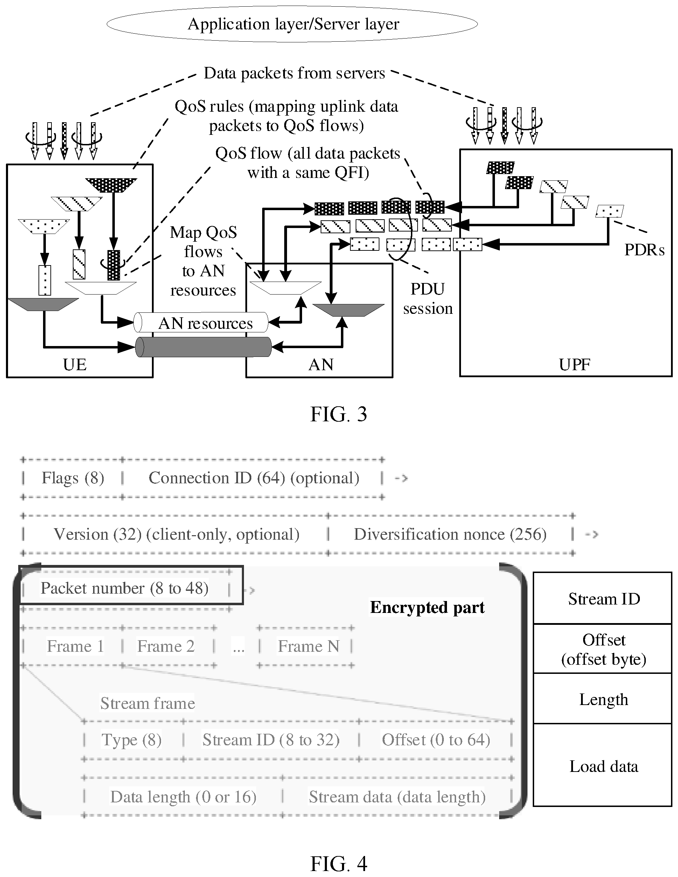

FIG. 3 is a diagram of mapping of a 5G QoS flow according to an embodiment of this application. A 5GC and an AN map a data packet to an appropriate QoS flow and an appropriate DRB to ensure quality of service.

A UPF implements mapping from an internet protocol (Internet Protocol, IP) flow to a QoS flow, and the AN implements mapping from the QoS flow to a DRB. QoS mapping may include three parts: UPF mapping, AN mapping, and UE mapping.

UPF mapping: After receiving downlink data, the UPF maps the data to a corresponding QoS flow according to the packet detection rule (packet detection rule, PDR) and the QoS enforcement rule (QoS enforcement rule, QER); then performs QoS control of the QoS flow, and marks the data with a QFI; and sends the data to the AN through an N3 interface corresponding to the QoS flow.

AN mapping: After receiving downlink data, the AN determines a DRB corresponding to a QFI; and then performs QoS control corresponding to a QoS flow, and sends the data to a UE through the DRB. Alternatively, after receiving uplink data, the AN determines a QoS flow corresponding to a QFI; and then performs QoS control corresponding to the QoS flow, and sends the data to the UPF through an N3 interface corresponding to the QoS flow.

UE mapping: When needing to send uplink data, the UE maps the data to a corresponding QoS flow according to a QoS rule; and then sends the uplink data through a DRB corresponding to the QoS flow.

It should be understood that an SMF is responsible for controlling a QoS flow. When one PDU session is established, the SMF may configure corresponding QoS parameters for the UPF, the AN, and the UE. The QoS flow may be established and modified via the PDU session, or defined through pre-configuration. Corresponding configuration parameters of a QoS flow include three parts:
1. QoS configuration (QoS profile): The SMF may provide the QoS configuration for the AN through an N2 interface, or the QoS configuration may be pre-configured in the AN.

It should be understood that a QoS configuration of a QoS flow may also be referred to as a QoS profile. Specific parameters of the QoS configuration are shown in Table 1.

**Table 1 Specific parameters of the QoS configuration**

| QoS flow parameter | Specific description |
|---|---|
| 5G QoS identifier | |
| (5G QoS identifier, 5QI) | indicates radio characteristics of a QoS flow, where each QoS flow has a 5QI |
| Allocation and retention priority (allocation and retention priority, ARP) | indicates a priority of a QoS flow on an NG interface, where each QoS flow has an ARP, and the ARP is applicable between different UEs or between QoS flows of one UE |
| Guaranteed flow bit rate (guaranteed flow bit rate, GFBR) | indicates a guaranteed data rate, where only guaranteed bit rate (Guaranteed Bit Rate, GBR) QoS flows have GFBRs, for both uplink transmission and downlink transmission |
| Maximum flow bit rate (maximum flow bit rate, MFBR) | indicates a maximum data rate, where only GBR QoS flows have MFBRs, for both uplink transmission and downlinktransmission |
| Notification control | indicates whether a gNB reports to the 5GC when QoS cannot be met, where notification control is applicable to only GBR QoS flows |
| Maximum packet loss rate (maximum packet loss rate, MPLR) | indicates a maximum packet loss rate that is acceptable for a QoS flow, where the MPLR may be provided for only GBR QoS flows |
| Reflective QoS attribute (reflective QoS attribute, RQA) | indicates whether uplink transmission complies with mirror mapping, where only non-guaranteed bit rate (non-guaranteed bit rate, non-GBR) QoS flows haveRQAs |

The 5QI is a scalar used to index a 5G QoS characteristic. The 5QI may be standardized, pre-configured, or dynamically defined. 5QI attributes are shown in the following Table 2.

**Table 2 5QI attribute parameters**

| 5QI attribute | Description |
|---|---|
| Resource | type GBR, delay-critical GBR, or non-GBR |
| Priority | Radio interface scheduling priority, where the priority is applicable between UEs or between QoS flows of a UE |
| Packet delay budget | For a GBR QoS flow, when a GFBR is met, 98% of data packets should not exceed a maximum delay (delay-critical GBR); and when a GBER is met, a data packet that exceeds the data delay is considered lost |
| Packet error rate | Packet loss rate of a GBR QoS flow |
| Averaging window | Time period for calculating a GFBR and an MFBR of a GBR QoS flow |
| Maximum data burst volume | Maximum volume of data that needs to be served under an air interface packet delay budget of a next generation radio access network NG-RAN (next generation-radio access network) |

2. QoS rule (QoS rule): The SMF may provide the QoS rule for the UE through an N1 interface. Alternatively, the UE may obtain the QoS rule through derivation by using a QoS mechanism.

It should be understood that the UE performs classification and marking on an uplink user plane data service, that is, maps uplink data to a corresponding QoS flow according to the QoS rule. The QoS rule may be explicitly provided for the UE (that is, explicitly configured for the UE through signaling in a PDU session establishment/modification procedure), may be pre-configured on the UE, or may be implicitly derived by the UE by using a reflective QoS mechanism. The QoS rule has the following characteristics.

One QoS rule includes a QFI associated with a QoS flow, a data packet filter set (a filter list), and a priority.

One QoS flow may have a plurality of QoS rules.

One default QoS rule needs to be configured for each PDU session, and the default QoS rule is associated with one QoS flow.

3. Uplink and downlink data packet detection rules (packet detection rules, PDRs): The SMF network element provides the PDR(s) for the UPF network element through an N4 interface.

Currently, there are two changing trends in data transmitted on a network. First, because a large amount of data is highly latency-sensitive, there are more low-latency applications. Second, as security and privacy problems receive more attention, a proportion of encrypted data is increasing, and a proportion of traffic of the encrypted data has increased to nearly 90%. Conventional transmission control protocol (transmission control protocol, TCP)-based internet traffic transmission has problems such as a high connection establishment latency and head-of-line blocking, and cannot meet requirements of current internet applications for a low latency and the like.

Therefore, quick UDP internet connection (quick UDP internet connection, QUIC) emerges. Based on the UDP, the QUIC aims to resolve problems such as a high connection latency and head-of-line blocking in conventional TCP-based transmission. The QUIC protocol has the following advantages:
Low connection latency: In the conventional TCP, one round-trip time (round-trip time, RTT) is required during initial connection establishment, and then a second RTT is required to perform key exchange negotiation in transport layer security (transport layer security, TLS) such as TLS 1.2. The QUIC protocol is based on the UDP transmission protocol and the TLS 1.3 protocol, to perform key exchange negotiation during initial connection establishment. Therefore, in the QUIC protocol, only one RTT is required during initial connection establishment and key exchange, and no RTT is required for a subsequent connection, so that a connection latency can be reduced.

Multi-stream multiplexing free of head-of- line blocking: The conventional TCP is connection-oriented, and it needs to be ensured that data packets can be sent to a receive end in order and accurately. However, if a TCP data packet is lost, a subsequently arrived TCP data packet needs to wait for retransmission of the lost data packet, resulting in head-of-line blocking of data packets at the receive end until the lost data packet is recovered. In contrast, the QUIC protocol is based on the UDP, and does not need to ensure a time sequence of data packets. There is no waiting for a lost data packet to be recovered, and therefore there is no head-of-line blocking of data packets. In the QUIC protocol, there is no dependency relationship between a plurality of data packets, and there is a multi-stream multiplexing feature. In other words, there may be a plurality of service streams (streams) on one QUIC connection, and there is no dependency relationship between the plurality of service streams.

Packet header protection and encryption: As shown in FIG. 4, the QUIC protocol complies with a principle of encrypting a payload and encrypting a packet header as much as possible, to avoid problems such as data parsing and interception by network middleware, and enhance data processing security.

Seamless connection migration: The QUIC protocol is based on connectionless UDP and QUIC connections indicated by connection identifiers (connection IDs), and can support connection migration imperceptible to applications. For example, when an application client is handed over from a cellular network to a Wi-Fi network, a quintuple of an application connection changes, but an application connection identifier remains unchanged. Therefore, the application client may remain in a connected state in a new quintuple, to implement seamless connection migration.

In the 5G QoS architecture, the UPF network element or the UE needs to perform data packet detection and QoS flow mapping based on a data packet filter (filter). For example, the data packet filter is an IP quintuple, and includes a source/destination IP address, a source/destination port number, and a transport layer protocol type. For data packets of a same service flow (corresponding to a same quintuple), QoS flow mapping is performed in a 5G network. The same service flow corresponds to QoS flows with a same QFI, and has same QoS control and processing.

For QUIC data transmission, because multi-stream multiplexing exists, data packets with a same IP quintuple include a plurality of different service streams, and usually different service streams have different transmission requirements in a 5G network. Therefore, a current manner of performing packet filtering and QoS flow mapping based on an IP quintuple cannot provide differentiated QoS control and processing for QUIC data transmission.

In addition, currently emerging extended reality (extended reality, XR) services, such as virtual reality (virtual reality, VR), augmented reality (augmented reality, AR), mixed reality (mixed reality, MR), and cloud gaming, have strict requirements on an end-to-end latency, and data processing corresponding to upper-layer media services during encoding and transmission is no longer performed at a granularity of a data packet. For example, when encoding is performed at a media layer, encoding may be independently performed for a media frame, a slice, or the like; and at the same time, decoding and displaying may also be performed on a receiving side at the same granularity of a media frame, a slice, or the like. A basic data unit such as the media frame or the slice usually includes a plurality of IP data packets (due to limitation on a size of the IP data packet). Such a basic data unit at a media service layer is referred to as a protocol data unit set (protocol data unit Set, PDU Set), which is a basic unit that can be independently processed by an upper service layer. Once a PDU data packet is lost or damaged, the entire PDU set may be difficult to be correctly decoded and displayed.

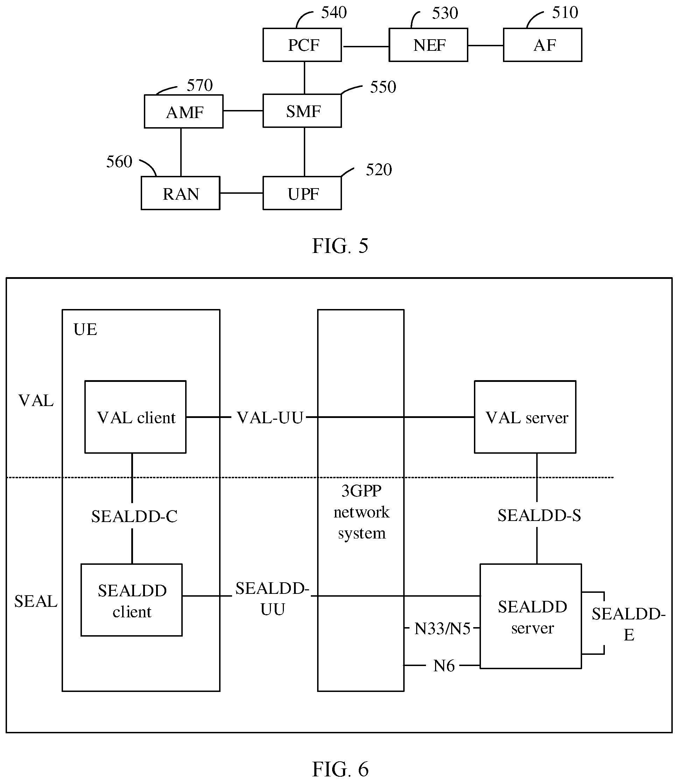

FIG. 5 is a diagram of an architecture of QoS processing at a granularity of a PDU set. An AF network element 510 provides, for a 5G network, a protocol format corresponding to current XR service transmission. The protocol format includes a format indicating a transport layer protocol (for example, the RTP or SRTP), a transport layer extension header (for example, an RTP extension header), and a payload (payload) (for example, H.264 or H.265). A UPF network element 520 receives, through an NEF network element 530, a PCF network element 540, and an SMF network element 550, protocol descriptions of an XR service sent by the AF network element 510, and then performs PDU set identification. PDU set information obtained through identification includes information such as a sequence number of a PDU set, an end of a PDU data packet in the PDU set, a sequence number of the PDU data packet in the PDU set, a size of the data packet in the PDU set, and importance of the PDU set. The PDU set information is transmitted to a RAN 560 via a GTP-U (user plane part of GPRS tunneling protocol) header. The SMF network element 550 may send a QoS parameter corresponding to the PDU set to the RAN 560 through an AMF network element 570. The RAN 560 may perform QoS processing at a granularity of a PDU set, for example, integrity transmission of the PDU set (if a data packet in the PDU set is discarded, the entire PDU set may be discarded, to reduce a waste of air interface transmission resources), and differentiated transmission of the PDU set (different QoS processing is selected for an importance difference between PDU sets. For example, a PDU set data packet with high importance is preferentially scheduled on an air interface, and a PDU set data packet with low importance has a low scheduling priority on the air interface; or when an air interface network of a base station is congested, a PDU set data packet with low importance may be selectively discarded, to reduce network congestion).

The UPF performs PDU set identification and marking by using the transmission protocol format under an assumption, that is, a transmission protocol (for example, the transport layer protocol or the payload (payload)) of the XR service needs to be unencrypted. Therefore, the UPF network element may perform PDU set identification by using the transmission protocol format. However, a QUIC service stream has a data encryption attribute, that is, has features such as packet header protection and payload encryption. Therefore, in a QoS control manner based on the transmission protocol format of the XR service, it is difficult for the UPF network element in the 5G network to identify features (for example, an importance difference between different data packets) of data packets with an encryption attribute. Therefore, the QoS control manner is not applicable to QUIC data transmission.

In conclusion, due to data encryption and multi-stream multiplexing in QUIC data packets, it is difficult for the 5G network to determine features of the data packets, for example, an importance difference between the data packets. Consequently, differentiated QoS control and processing cannot be provided for the QUIC data packets.

To resolve the foregoing problem, embodiments of this application provide a data processing method and apparatus, to perform differentiated QoS control and processing on QUIC data packets, so that network resources can be appropriately used and scheduled, and application experience can be improved.

A service enabler architecture layer data delivery (service enabler architecture layer data delivery, SEALDD) enhancement layer is applicable to processing and transmission of QUIC data packets. The following describes an architecture of the SEALDD enhancement layer with reference to FIG. 6.

The SEALDD enhancement layer (or a data processing enhancement layer) includes a SEALDD client and a SEALDD server. The SEALDD client is deployed on a UE in a form of software or a system component, and the SEALDD server is deployed between a UPF network element and an application server (application server, AS) or a vertical application layer server (VAL server) in a form of an independent or integrated server.

For a SEALDD interface, the SEALDD client communicates with a VAL client through a SEALDD-C interface, and the SEALDD server communicates with the VAL server through a SEALDD-S interface. The SEALDD client and the SEALDD server perform user plane data processing through a SEALDD-UU interface, and the SEALDD-UU interface is carried on a user plane session constructed by a 3GPP network system. SEALDD servers interact with each other through a SEALDD-E interface, for example, provide control plane context transmission and user plane data forwarding.

An AF network element, for example, the SEALDD server, may exchange a control plane message with a PCF network element in the 3GPP network system through an N33/N5 interface. N33 is an interface between the AF network element and an NEF network element, and N5 is an interface between the AF network element and the PCF network element. The AF network element may indirectly communicate with the PCF network element through the NEF network element. The SEALDD server may send an AF network element request or perform notification subscription to the PCF network element through the N33/N5 interface. In another aspect, the SEALDD server may perform user plane data processing with the UPF network element through an N6 interface.

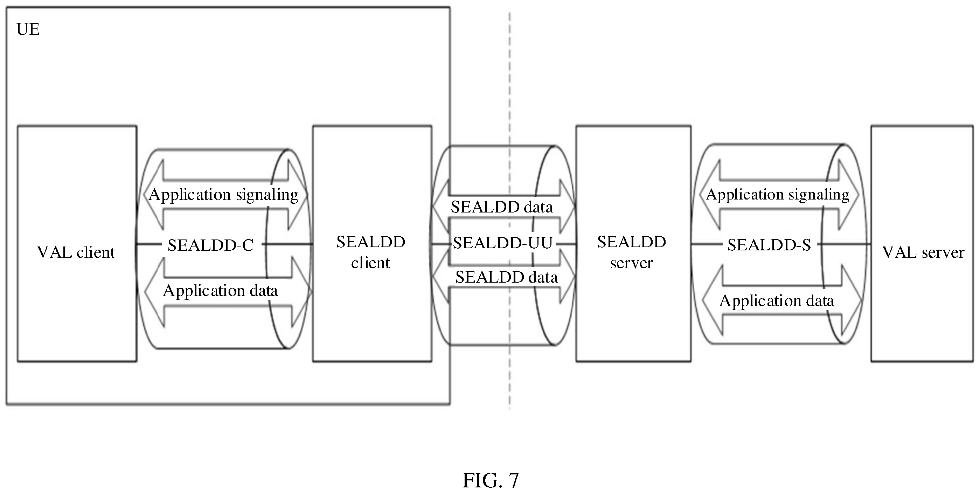

As the data processing enhancement layer, the SEALDD enhancement layer provides communication connection and data processing functions (for example, transmission of applications, media data, and signaling data) for VAL applications. Data processing of the SEALDD enhancement layer is shown in FIG. 7.

For uplink data processing, the VAL client transmits a data packet to the SEALDD client through the SEALDD-C interface. After encapsulating the data packet, the SEALDD client sends the encapsulated data packet to the SEALDD server through the SEALDD-UU interface. After parsing/decapsulating the data packet, the SEALDD server sends the parsed/decapsulated data packet to the VAL server through the SEALDD-S interface. Downlink data processing is similar to uplink data processing. The VAL server transmits a data packet to the SEALDD server through the SEALDD-S interface. After encapsulating the data packet, the SEALDD server sends the encapsulated data packet to the SEALDD client through the SEALDD-UU interface. After parsing/decapsulating the data packet, the SEALDD client sends the parsed/decapsulated data packet to the VAL client through the SEALDD-C interface.

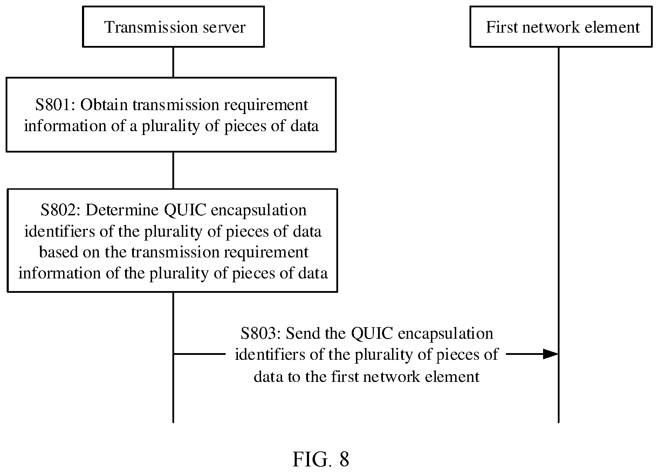

FIG. 8 is a diagram of a QUIC data processing method according to an embodiment of this application.

S801: A transmission server obtains transmission requirement information of a plurality of pieces of data.

One of the plurality of pieces of data is a service stream or a data packet set, and the data packet set includes at least one data packet.

In other words, the plurality of pieces of data may include a plurality of service streams, or may include a plurality of data packet sets, or may include a plurality of service streams and at least one data packet in at least one other service stream.

For example, the plurality of pieces of data may include a plurality of service streams, for example, a first service stream and a second service stream.

For example, the plurality of pieces of data may include a plurality of data packet sets in one service stream, for example, a first data packet set and a second data packet set.

In some embodiments, the data may include uplink data or downlink data.

For example, the first service stream and the second service stream may be both uplink service streams, or may be both downlink service streams.

For another example, the plurality of data packet sets in the service stream may be a plurality of data packet sets in an uplink service stream or a quantity of data packet sets in a downlink service stream.

In some embodiments, the transmission server may receive information about the plurality of pieces of data that is sent by an application server, where the information about the plurality of pieces of data includes the transmission requirement information of the plurality of pieces of data.

For example, for data packet sets in a same service stream, the transmission server may receive information about a plurality of pieces of data, for example, protocol description information, sent by the application server. The protocol description information may include transmission requirement information of the plurality of pieces of data, for example, importance information of the plurality of pieces of data.

For example, the protocol description information may be an RTP extension header, and the extension header may mark a data packet with high importance. For PDU set importance (PSI) in the RTP extension header, values 0 to 15 may indicate importance of data packet sets. A smaller value indicates higher importance of a data packet, and a data packet set corresponding to PSI 0 has highest importance. In this way, based on the RTP extension header, the transmission server may obtain transmission requirement information of a plurality of data packets. For example, data packets with a same PSI value may be determined as data packets with same transmission requirement information, or data packets with PSI values in a specific range (for example, 0 to 3) may be determined as data packets with a same transmission requirement.

In some embodiments, the transmission server may receive information about the plurality of pieces of data that is sent by an application server, where the information about the plurality of pieces of data may include description information of the plurality of pieces of data and/or transmission requirement information corresponding to the description information. Then, the transmission server may determine the transmission requirement information of the plurality of pieces of data based on the information about the plurality of pieces of data.

In some embodiments, the description information of the plurality of pieces of data includes descriptor information of the plurality of pieces of data and/or protocol description information of the plurality of pieces of data.

For example, for a plurality of service streams, the transmission server may receive description information, for example, descriptor information, of a plurality of pieces of data and transmission requirement information corresponding to the description information that are sent by the application server, and then determine transmission requirement information of the plurality of pieces of data based on the description information of the plurality of pieces of data and the transmission requirement information corresponding to the description information.

For example, descriptor information of a service stream #1 is an IP quintuple #1, and the IP quintuple #1 corresponds to a transmission requirement #1; descriptor information of a service stream #2 is an IP quintuple #2, and the IP quintuple #2 corresponds to a transmission requirement #2; and descriptor information of a service stream #3 is an IP quintuple #3, and the IP quintuple #1 corresponds to the transmission requirement #1. In this case, it may be determined that both the service stream #1 and the service stream 3 correspond to the transmission requirement #1, and the service stream #2 corresponds to the transmission requirement #2.

For different service streams, the transmission requirement may include QoS requirement information, for example, latency information or packet loss rate information. For example, service streams with a same QoS requirement information value have same QoS requirement information; or service streams with QoS requirement information values in a specific range have same QoS requirement information.

For example, for a plurality of data packet sets of a same service stream, the transmission server may receive description information (for example, stream protocol description information) of the plurality of data packet sets and transmission requirement information corresponding to the description information (for example, characteristic parameter information of the data packet sets that corresponds to the stream protocol description information) that are sent by the application server, and then determine transmission requirement information of the plurality of data packet sets based on the description information (for example, the stream protocol description information) of the plurality of pieces of data and the transmission requirement information corresponding to the description information (for example, the characteristic parameter information of the data packet sets).

S802: The transmission server determines QUIC encapsulation identifiers of the plurality of pieces of data based on the transmission requirement information of the plurality of pieces of data.

There is a correspondence between the transmission requirement information of the plurality of pieces of data and the QUIC encapsulation identifiers of the plurality of pieces of data.

In some embodiments, the plurality of pieces of data include a first service stream and a second service stream, and when transmission requirement information of the first service stream is the same as transmission requirement information of the second service stream, it is determined that a QUIC encapsulation identifier of the first service stream and a QUIC encapsulation identifier of the second service stream are a first encapsulation identifier; or when transmission requirement information of the first service stream is different from transmission requirement information of the second service stream, it is determined that a QUIC encapsulation identifier of the first service stream and a QUIC encapsulation identifier of the second service stream are respectively a second encapsulation identifier and a third encapsulation identifier.

Service streams with same transmission requirement information have a same QUIC encapsulation identifier, and service streams with different transmission requirement information have different QUIC encapsulation identifiers. For example, a service stream #1 corresponds to transmission requirement information #1, a service stream #2 corresponds to a transmission requirement #2, and a service stream #3 corresponds to the transmission requirement information #1. In this case, a QUIC encapsulation identifier corresponding to the service stream #1 and a QUIC encapsulation identifier corresponding to the service stream #3 may be an encapsulation identifier #1, and a QUIC encapsulation identifier corresponding to the service stream #2 is an encapsulation identifier #2.

In some embodiments, the plurality of pieces of data include a first data packet set and a second data packet set that are in a same service stream. When transmission requirement information of the first data packet set is the same as transmission requirement information of the second data packet set, it is determined that a QUIC encapsulation identifier of the first data packet set and a QUIC encapsulation identifier of the second data packet set are a first encapsulation identifier; or when transmission requirement information of the first data packet set is different from transmission requirement information of the second data packet set, it is determined that a QUIC encapsulation identifier of the first data packet set and a QUIC encapsulation identifier of the second data packet set are respectively a second encapsulation identifier and a third encapsulation identifier.

Data packet sets with same transmission requirement information in a same service stream have a same QUIC encapsulation identifier; and data packet sets with different transmission requirement information in a same service stream have different QUIC encapsulation identifiers. For example, a data packet set #1 corresponds to transmission requirement information #1, a data packet set #2 corresponds to the transmission requirement information #1, and a data packet set #3 corresponds to transmission requirement information #2. In this case, a QUIC encapsulation identifier corresponding to the data packet set #1 and a QUIC encapsulation identifier corresponding to the data packet set #2 may be an encapsulation identifier #1, and a QUIC encapsulation identifier corresponding to the data packet set #3 may be an encapsulation identifier #2.

In some embodiments, the QUIC encapsulation identifier may include information indicating a QUIC connection, information in a QUIC tunnel header, information in an IP triplet, or information in an IP quintuple.

In other words, the information indicating the QUIC connection may be used as the QUIC encapsulation identifier, the information in the QUIC tunnel header may be used as the QUIC encapsulation identifier, the information in the IP triplet may be used as the QUIC encapsulation identifier, or the information in the IP quintuple may be used as the QUIC encapsulation identifier.

The information indicating the QUIC connection includes at least one of the following: a QUIC connection identifier allocatable by the transmission server; an identifier, other than the QUIC connection identifier, allocatable by the transmission server for indicating the QUIC connection; a QUIC connection identifier allocatable by a transmission client; or an identifier, other than QUIC connection identifier, allocatable by the transmission server for indicating the QUIC connection.

The IP triplet may include information about an IP address, a protocol, and a port.

The IP quintuple may include information about a source IP address, a source port, a destination IP address, a destination port, and a transport layer protocol.

For example, the QUIC encapsulation identifier includes information allocatable by the transmission server and/or the transmission client for indicating the QUIC connection.

In other words, the information allocatable by the transmission server and/or the transmission client for indicating the QUIC connection may be used as the QUIC encapsulation identifier.

In some embodiments, the transmission server determines the QUIC encapsulation identifiers of the plurality of pieces of data based on the transmission requirement information of the plurality of pieces of data and first connection information and/or second connection information.

The first connection information is information allocatable by the transmission server for indicating a QUIC connection, and the first connection information includes a QUIC connection identifier and/or other information indicating the QUIC connection that are/is allocatable by the transmission server. The second connection information is information allocatable by the transmission client for indicating a QUIC connection, and the second connection information includes a QUIC connection identifier and/or other information indicating the QUIC connection that are/is allocatable by the transmission client.

For example, the QUIC encapsulation identifiers of the plurality of pieces of data may be determined based on the transmission requirement information of the plurality of pieces of data and the first connection information.

For example, the QUIC encapsulation identifiers of the plurality of pieces of data may be determined based on the transmission requirement information of the plurality of pieces of data and the second connection information.

For example, the QUIC encapsulation identifiers of the plurality of pieces of data may be determined based on the transmission requirement information of the plurality of pieces of data, the first connection information, and the second connection information.

For example, the QUIC encapsulation identifiers of the plurality of pieces of data may be determined based on the transmission requirement information of the plurality of pieces of data, the QUIC connection identifier allocatable by the transmission server, and the QUIC connection identifier allocatable by the transmission client.

QUIC encapsulation identifiers of downlink data are used as an example. For example, for different QUIC connections, QUIC connection identifiers allocatable by the transmission server are a connection ID #1 and a connection ID #2, and QUIC connection identifiers allocatable by the transmission client are a connection ID #3 and a connection ID #4. In this case, QUIC encapsulation identifiers may include <connection ID #1>, <connection ID #2>, <connection ID #1, connection ID #3>, <connection ID #1, connection ID #4>, <connection ID #2, connection ID #3>, and <connection ID #2, connection ID #4>. The first two QUIC encapsulation identifiers each include a source connection identifier (for downlink data, the source connection identifier is a QUIC connection identifier allocatable by the transmission server), and the last four QUIC encapsulation identifiers each include a source connection identifier and a destination connection identifier (for downlink data, the destination connection identifier is a QUIC connection identifier allocatable by the transmission client).

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier corresponding to the downlink service stream #1 and a QUIC encapsulation identifier corresponding to the downlink service stream #3 may be an encapsulation identifier #1, and a QUIC encapsulation identifier corresponding to the downlink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the downlink service stream #1 and the QUIC encapsulation identifier of the downlink service stream #3 may be <connection ID #1>, and the QUIC encapsulation identifier corresponding to the downlink service stream #2 may be <connection ID #2>.

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be an encapsulation identifier #1, and a QUIC encapsulation identifier corresponding to the downlink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the downlink data packet set #1 and the QUIC encapsulation identifier corresponding to the data packet set #2 may be <connection ID #1, connection ID #3>, and the QUIC encapsulation identifier corresponding to the downlink data packet set #3 may be <connection ID #1, connection ID #4>.

QUIC encapsulation identifiers of uplink data are used as an example. For example, for different QUIC connections, QUIC connection identifiers allocatable by the transmission client are a connection ID #1 and a connection ID #2, and QUIC connection identifiers allocatable by the transmission client are a connection ID #3 and a connection ID #4. In this case, QUIC encapsulation identifiers may include <connection ID #3>, <connection ID #4>, <connection ID #3, connection ID #1>, <connection ID #4, connection ID #1>, <connection ID #3, connection ID #2>, and <connection ID #4, connection ID #4>. The first two encapsulation identifiers each include a source connection identifier (for uplink data, the source connection identifier is a QUIC connection identifier allocatable by the transmission client), and the last four identifiers each include a source connection identifier and a destination connection identifier (for uplink data, the destination connection identifier is a QUIC connection identifier allocatable by the transmission server).

If a plurality of uplink service streams correspond to a plurality of different pieces of transmission requirement information, for example, an uplink service stream #1 corresponds to transmission requirement information #1, an uplink service stream #2 corresponds to a transmission requirement #2, and an uplink service stream #3 corresponds to the transmission requirement information #1, a QUIC encapsulation identifier corresponding to the uplink service stream #1 and a QUIC encapsulation identifier corresponding to the uplink service stream #3 may be an encapsulation identifier #1, and a QUIC encapsulation identifier corresponding to the uplink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the uplink service stream #1 and the QUIC encapsulation identifier of the downlink service stream #3 may be <connection ID #3>, and the QUIC encapsulation identifier corresponding to the uplink service stream #2 may be <connection ID #4>.

If a plurality of uplink data packet sets in one uplink service stream correspond to a plurality of different transmission requirements, for example, an uplink data packet set #1 corresponds to transmission requirement information #1, an uplink data packet set #2 corresponds to the transmission requirement information #1, and an uplink data packet set #3 corresponds to transmission requirement information #2, a QUIC encapsulation identifier corresponding to the uplink data packet set #1 and a QUIC encapsulation identifier corresponding to the uplink data packet set #2 may be an encapsulation identifier #1, and a QUIC encapsulation identifier corresponding to the uplink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the uplink data packet set #1 and the QUIC encapsulation identifier corresponding to the data packet set #2 may be <connection ID #3, connection ID #1>, and the QUIC encapsulation identifier corresponding to the uplink data packet set #3 may be <connection ID #4, connection ID #1>.

For a same QUIC connection, there is only one identifier obtained based on a QUIC connection identifier allocatable by the transmission server and/or a QUIC connection identifier allocatable by the transmission client. Therefore, new identifiers, for example, other information indicating the QUIC connection, needs to be further introduced and combined with the identifier, to serve as QUIC encapsulation identifiers of data with a plurality of different transmission requirements in the same QUIC connection. Therefore, the QUIC encapsulation identifiers of the plurality of pieces of data may be determined based on the transmission requirement information of the plurality of pieces of data, the QUIC connection identifier allocatable by the transmission server, other information indicating the QUIC connection, the QUIC connection identifier allocatable by the transmission client, and other information indicating the QUIC connection.

QUIC encapsulation identifiers of downlink data are used as an example. For example, for a same QUIC connection, an identifier obtained based on QUIC connection identifiers allocatable by the transmission server and the transmission client is a connection ID, other identifiers allocatable by the transmission server are an ID #1 and an ID #2, and other identifiers allocatable by the transmission client are an ID #3 and an ID #4. In this case, encapsulation identifiers may be <connection ID+ID #1>, <connection ID+ID #2>, <connection ID+<ID #1, ID #3>>, <connection ID+<ID #1, ID #4>>, <connection ID+<ID #2, ID #3>>, and <connection ID+<ID #2, ID #4>>. The first two encapsulation identifiers each include the connection ID and another allocatable source connection identifier (for downlink data, the another source connection identifier is other information allocatable by the transmission server for indicating the QUIC connection), and the last four identifiers each include the connection ID, another source connection identifier, and another destination connection identifier (for downlink data, the another destination connection identifier is other information allocatable by the transmission client for indicating the QUIC connection).

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier corresponding to the downlink service stream #1 and a QUIC encapsulation identifier corresponding to the downlink service stream #3 may be an encapsulation identifier #1, and a QUIC encapsulation identifier corresponding to the downlink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the downlink service stream #1 and the QUIC encapsulation identifier of the downlink service stream #3 may be <connection ID+ID #1>, and the QUIC encapsulation identifier corresponding to the downlink service stream #2 may be <connection ID+ID #2>.

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be an encapsulation identifier #1, and a QUIC encapsulation identifier corresponding to the downlink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the downlink data packet set #1 and the QUIC encapsulation identifier corresponding to the data packet set #2 may be <connection ID+<ID #1, ID #3>>, and the QUIC encapsulation identifier corresponding to the downlink data packet set #3 may be <connection ID+<ID #1, ID #4>>.

QUIC encapsulation identifiers of uplink data are used as an example. For example, for a same QUIC connection, an identifier obtained based on a QUIC connection identifier allocatable by the transmission server and/or a QUIC connection identifier allocatable by the transmission client is a connection ID. Other identifiers allocatable by the transmission server are an ID #1 and an ID #2, and other identifiers allocatable by the transmission client are an ID #3 and an ID #4. In this case, encapsulation identifiers may be <connection ID+ID #3>, <connection ID+ID #4>, <connection ID+<ID #3, ID #1>>, <connection ID+<ID #4, ID #1>>, <connection ID+<ID #3, ID #2>>, and <connection ID+<ID #4, ID #2>>. The first two encapsulation identifiers each include the connection ID and another allocatable source connection identifier (for uplink data, the another source connection identifier is other information allocatable by the transmission client for indicating the QUIC connection), and the last four identifiers each include the connection ID, another source connection identifier, and another destination connection identifier (for uplink data, the another destination connection identifier is other information allocatable by the transmission server for indicating the QUIC connection).

If a plurality of uplink service streams correspond to a plurality of different pieces of transmission requirement information, for example, an uplink service stream #1 corresponds to transmission requirement information #1, an uplink service stream #2 corresponds to a transmission requirement #2, and an uplink service stream #3 corresponds to the transmission requirement information #1, a QUIC encapsulation identifier corresponding to the uplink service stream #1 and a QUIC encapsulation identifier corresponding to the uplink service stream #3 may be an encapsulation identifier #1, and a QUIC encapsulation identifier corresponding to the uplink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the uplink service stream #1 and the QUIC encapsulation identifier of the uplink service stream #3 may be <connection ID+ID #3>, and the QUIC encapsulation identifier corresponding to the uplink service stream #2 may be <connection ID #4>.

If a plurality of uplink data packet sets in one uplink service stream correspond to a plurality of different transmission requirements, for example, an uplink data packet set #1 corresponds to transmission requirement information #1, an uplink data packet set #2 corresponds to the transmission requirement information #1, and an uplink data packet set #3 corresponds to transmission requirement information #2, a QUIC encapsulation identifier corresponding to the uplink data packet set #1 and a QUIC encapsulation identifier corresponding to the uplink data packet set #2 may be an encapsulation identifier #1, and a QUIC encapsulation identifier corresponding to the uplink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the uplink data packet set #1 and the QUIC encapsulation identifier corresponding to the data packet set #2 may be <connection ID+<ID #3, ID #1>>, and the QUIC encapsulation identifier corresponding to the uplink data packet set #3 may be <connection ID+<ID #4, ID #1>>.

In some embodiments, the QUIC encapsulation identifiers of the plurality of pieces of data may be determined based on the transmission requirement information of the plurality of pieces of data and first IP information and/or second IP information. The first IP information includes an IP address and a port number that are allocatable by the transmission server, and the second IP information includes an IP address and a port number that are allocatable by the transmission client.

In other words, the IP address and the port number that are allocatable by the transmission server and/or the IP address and the port number that are allocatable by the transmission client may be used as the encapsulation identifiers.

For example, the QUIC encapsulation identifiers of the plurality of pieces of data may be determined based on the transmission requirement information of the plurality of pieces of data and the first IP information.

For example, the QUIC encapsulation identifiers of the plurality of pieces of data may be determined based on the transmission requirement information of the plurality of pieces of data and the second IP information.

For example, the QUIC encapsulation identifiers of the plurality of pieces of data may be determined based on the transmission requirement information of the plurality of pieces of data, the first IP information, and the second IP information.

QUIC encapsulation identifiers of downlink data are used as an example. An IP address and port numbers that are allocatable by the transmission server are <IP #1, port #1> and <IP #1, port #2>, and an IP address and port numbers that are allocatable by the transmission client are <IP #2, port #3> and <IP #2, port #4>. In this case, QUIC encapsulation identifiers may include [IP #1, port #1], [IP #1, port #2], [<IP #1, port #1>, <IP #2, port #3>], [<IP #1, port #1>, <IP #2, port #4>], [<IP #1, port #2>, <IP #2, port #3>], and [<IP #1, port #2>, <IP #2, port #4>]. The first two identifiers each include a source address and a source port number (for downlink data, the source address and the source port number are an IP address and a port number that are allocatable by the transmission server), and the last four identifiers each include a source address and a source port number, and a destination address and a destination port number (for downlink data, the destination address and the destination port number are an address and a port number that are allocatable by the transmission client).

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier corresponding to the downlink service stream #1 and a QUIC encapsulation identifier corresponding to the downlink service stream #3 may be an encapsulation identifier #1, and a QUIC encapsulation identifier corresponding to the downlink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the downlink service stream #1 and the QUIC encapsulation identifier of the downlink service stream #3 may be [IP #1, port #1], and the QUIC encapsulation identifier corresponding to the downlink service stream #2 may be [IP #1, port #2].

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be an encapsulation identifier #1, and a QUIC encapsulation identifier corresponding to the downlink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the downlink data packet set #1 and the QUIC encapsulation identifier corresponding to the data packet set #2 may be [<IP #1, port #1>, <IP #2, port #3>], and the QUIC encapsulation identifier corresponding to the downlink data packet set #3 may be [<IP #1, port #1>, <IP #2, port #4>].

QUIC encapsulation identifiers of uplink data are used as an example. An IP address and port numbers that are allocatable by the transmission server are <IP #1, port #1> and <IP #1, port #2>, and an IP address and port numbers that are allocatable by the transmission client are <IP #2, port #3> and <IP #2, port #4>. In this case, QUIC encapsulation identifiers may include [IP #2, port #3], [IP #2, port #4], [<IP #2, port #3>, <IP #1, port #1>], [<IP #2, port #4>, <IP #1, port #1>], [<IP #2, port #3>, <IP #1, port #2>], and [<IP #2, port #4>, <IP #1, port #2>]. The first two identifiers each include a source address and a source port number (for uplink data, the source address and the source port number are an IP address and a port number that are allocatable by the transmission client), and the last four identifiers each include a source address and a source port number, and a destination address and a destination port number (for uplink data, the destination address and the destination port number are an address and a port number that are allocatable by the transmission server).

If a plurality of uplink service streams correspond to a plurality of different pieces of transmission requirement information, for example, an uplink service stream #1 corresponds to transmission requirement information #1, an uplink service stream #2 corresponds to a transmission requirement #2, and an uplink service stream #3 corresponds to the transmission requirement information #1, a QUIC encapsulation identifier corresponding to the uplink service stream #1 and a QUIC encapsulation identifier corresponding to the uplink service stream #3 may be an encapsulation identifier #1, and a QUIC encapsulation identifier corresponding to the uplink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the uplink service stream #1 and the QUIC encapsulation identifier of the uplink service stream #3 may be [IP #2, port #3], and the QUIC encapsulation identifier corresponding to the uplink service stream #2 may be [IP #2, port #4].

If a plurality of uplink data packet sets in one uplink service stream correspond to a plurality of different transmission requirements, for example, an uplink data packet set #1 corresponds to transmission requirement information #1, an uplink data packet set #2 corresponds to the transmission requirement information #1, and an uplink data packet set #3 corresponds to transmission requirement information #2, a QUIC encapsulation identifier corresponding to the uplink data packet set #1 and a QUIC encapsulation identifier corresponding to the uplink data packet set #2 may be an encapsulation identifier #1, and a QUIC encapsulation identifier corresponding to the uplink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the uplink data packet set #1 and the QUIC encapsulation identifier corresponding to the data packet set #2 may be [<IP #2, port #3>, <IP #1, port #1>], and the QUIC encapsulation identifier corresponding to the uplink data packet set #3 may be [<IP #2, port #4>, <IP #1, port #1>].

In this embodiment of this application, all QUIC encapsulation identifiers may be first determined, and then corresponding QUIC encapsulation identifiers are selected and determined from all the QUIC encapsulation identifiers based on data with different transmission requirements. Alternatively, corresponding QUIC encapsulation identifiers may be directly determined based on data with different transmission requirements.

For example, the encapsulation identifier includes information in a QUIC tunnel header.

The encapsulation identifier may be encapsulated in the QUIC tunnel header (also referred to as an N6 tunnel header). For example, the QUIC tunnel header carries the transmission requirement information of the data, and the transmission requirement information of the data is directly used as the QUIC encapsulation identifier of the data.

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier of the downlink service stream #1 and a QUIC encapsulation identifier of the downlink service stream #3 may be the transmission requirement information #1, and a QUIC tunnel header carries the transmission requirement information #1; and a QUIC encapsulation identifier corresponding to the downlink service stream #2 may be the transmission requirement information #2, and a QUIC tunnel header carries the transmission requirement information #2.

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be the transmission requirement information #1, and a QUIC tunnel header carries the transmission requirement information #1; and a QUIC encapsulation identifier corresponding to the downlink data packet set #3 may be the transmission requirement information #2, and a QUIC tunnel header carries the transmission requirement information #2.

S803: The transmission server sends the QUIC encapsulation identifiers of the plurality of pieces of data to a first network element.

Correspondingly, the first network element receives the QUIC encapsulation identifiers of the plurality of pieces of data.

In some embodiments, the transmission server may further send the transmission requirement information of the plurality of pieces of data to the first network element.

In some embodiments, the first network element determines, based on the QUIC encapsulation identifiers of the plurality of pieces of data, identifiers of QoS flows corresponding to the QUIC encapsulation identifiers of the plurality of pieces of data.

The first network element may include a network element responsible for session management, for example, an SMF network element.

Optionally, the first network element may further determine the identifiers of the QoS flows of the plurality of pieces of data based on the QUIC encapsulation identifiers of the plurality of pieces of data and the transmission requirement information of the plurality of pieces of data.

For example, the identifier of the QoS flow may include a QoS class identifier (QoS class identifier, QCI), a QFI, and the like.

In some embodiments of this application, the QUIC encapsulation identifiers of the plurality of pieces of data may include a first encapsulation identifier and a second encapsulation identifier. In this case, it is determined that an identifier of a QoS flow of data corresponding to the first encapsulation identifier and an identifier of a QoS flow of data corresponding to the second encapsulation identifier are respectively a first QoS flow identifier and a second QoS flow identifier. Alternatively, the QUIC encapsulation identifiers of the plurality of pieces of data include only a first encapsulation identifier. In this case, it is determined that identifiers of QoS flows of data corresponding to the first encapsulation identifier are all a first QoS flow identifier.

For example, a QUIC encapsulation identifier of a service stream #1 and a QUIC encapsulation identifier of a service stream #3 may be an encapsulation identifier #1, and a QUIC encapsulation identifier corresponding to a service stream #2 may be an encapsulation identifier #2. In this case, a QFI of a QoS flow of the service stream #1 and a QFI of a QoS flow of the service stream #3 are both a QFI #1, that is, the QoS flow of the service stream #1 is the same as the QoS flow of the downlink service stream #3; and a QFI of a QoS flow of the service stream #2 is a QFI #2, that is, the QoS flow of the service stream #1 and the QoS flow of the service stream #3 are different from the QoS flow of the service stream #2.

For example, a QUIC encapsulation identifier of a data packet set #1 and a QUIC encapsulation identifier of a downlink data packet set #3 may be an encapsulation identifier #1, and a QUIC encapsulation identifier corresponding to a data packet set #2 may be an encapsulation identifier #2. In this case, a QFI of a QoS flow of the data packet set #1 and a QFI of a QoS flow of the data packet set #3 are both a QFI #1, that is, the QoS flow of the data packet set #1 is the same as the QoS flow of the downlink data packet set #3; and a QFI of a QoS flow of the data packet set #2 is a QFI #2, that is, the QoS flow of the data packet set #1 and the QoS flow of the data packet set #3 are different from the QoS flow of the data packet set #2.

In some embodiments, the first network element may include a network element responsible for policy control, a network element responsible for network capability exposure, and the like.

For example, the first network element may be a PCF network element or an NEF network element. The PCF network element may generate a policy and charging control (policy and charging control, PCC) rule based on the QUIC encapsulation identifiers corresponding to the plurality of pieces of data and the transmission requirement information of the plurality of pieces of data.

In some embodiments, if the first network element is a network element responsible for policy control, for example, a PCF network element, the transmission server may directly send the QUIC encapsulation identifiers of the plurality of pieces of data to the first network element, or may indirectly send the QUIC encapsulation identifiers of the plurality of pieces of data to the first network element. For example, if the transmission server is an entity trusted by an operator network, the transmission server may directly interact with the PCF network element; or if the transmission server is an entity untrusted by an operator network, the transmission server needs to first interact with a network element responsible for network capability exposure, for example, an NEF network element, and then the network element responsible for network capability exposure interacts with the PCF network element.

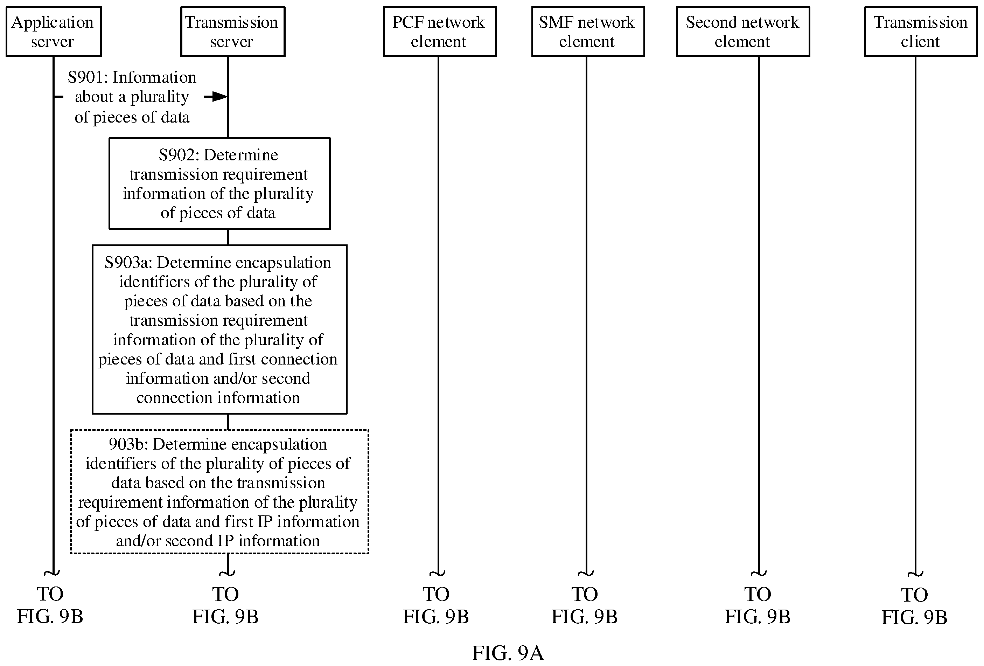

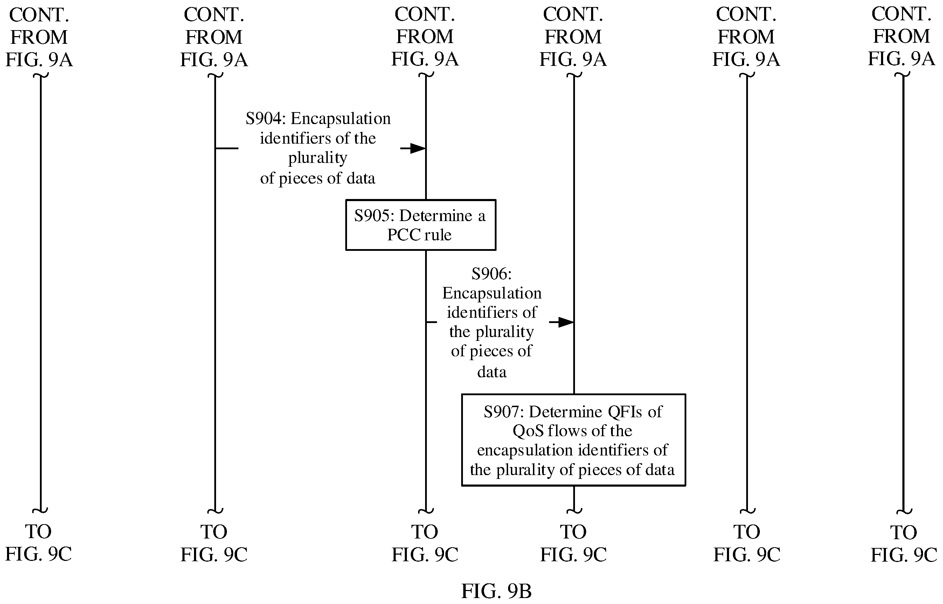

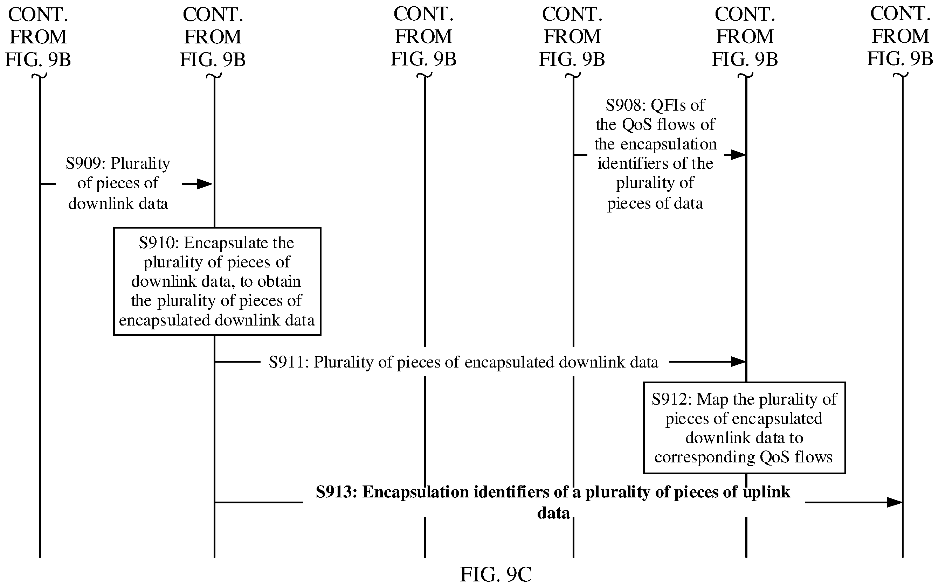

FIG. 9A to FIG. 9C are a diagram of a QUIC data processing method according to an embodiment of this application. In the method shown in FIG. 9A to FIG. 9C, a first network element may include a network element responsible for session management, for example, an SMF network element, and a network element responsible for policy control, for example, a PCF network element.

S901: A transmission server receives information about a plurality of pieces of data from an application server.

One of the plurality of pieces of data is a service stream or a data packet set, and the data packet set includes at least one data packet.

In other words, the plurality of pieces of data may include a plurality of service streams, or may include a plurality of data packet sets, or may include a plurality of service streams and at least one data packet in at least one other service stream.

For example, the plurality of pieces of data may include a plurality of service streams, for example, a first service stream and a second service stream.

For example, the plurality of pieces of data may include a plurality of data packet sets in one service stream, for example, a first data packet set and a second data packet set.

In some embodiments, the data may include uplink data or downlink data.

For example, the first service stream and the second service stream may be both uplink service streams, or may be both downlink service streams.

For another example, the plurality of data packet sets in the service stream may be a plurality of data packet sets in an uplink service stream or a quantity of data packet sets in a downlink service stream.

In some embodiments, the information about the plurality of pieces of data may include transmission requirement information of the plurality of pieces of data.

For example, the information about the plurality of pieces of data may be protocol description information, and the protocol description information may include the transmission requirement information of the plurality of pieces of data, for example, importance information of the plurality of pieces of data.

For example, the protocol description information may be an RTP extension header, and the extension header may mark a data packet with high importance. For PDU set importance (PSI) in the RTP extension header, values 0 to 15 may indicate importance of data packet sets. A smaller value indicates higher importance of a data packet, and a data packet set corresponding to PSI 0 has highest importance.

In this way, based on the RTP extension header, the transmission server may obtain transmission requirement information of a plurality of data packets. For example, data packets with a same PSI value may be determined as data packets with same transmission requirement information, or data packets with PSI values in a specific range (for example, 0 to 3) may be determined as data packets with a same transmission requirement.

In some embodiments, the information about the plurality of pieces of data may include description information of the plurality of pieces of data and/or transmission requirement information corresponding to the description information.

For example, the information about the plurality of pieces of data may include description information (for example, descriptor information) of the plurality of pieces of data and transmission requirement information (for example, QoS requirement information) corresponding to the description information. For example, descriptor information of a service stream #1 is an IP quintuple #1, and the IP quintuple #1 corresponds to a transmission requirement #1; descriptor information of a service stream #2 is an IP quintuple #2, and the IP quintuple #2 corresponds to a transmission requirement #2; and descriptor information of a service stream #3 is an IP quintuple #3, and the IP quintuple #1 corresponds to the transmission requirement #1.

For different service streams, the transmission requirement information may include QoS requirement information, for example, latency information or packet loss rate information. For example, service streams with a same QoS requirement information value have same QoS requirement information; or service streams with QoS requirement information values in a specific range have same QoS requirement information.

For example, the information about the plurality of pieces of data may include description information (for example, stream protocol information) of the plurality of pieces of data and characteristic parameter information that is of data packet sets and that corresponds to the description information.

S902: The transmission server determines the transmission requirement information of the plurality of pieces of data based on the information about the plurality of pieces of data.

When the information about the plurality of pieces of data includes the transmission requirement information of the plurality of pieces of data, S902 may be omitted.

In some embodiments, the transmission server may receive the description information of the plurality of pieces of data and/or the transmission requirement information corresponding to the description information that are/is sent by the application server, and then determine the transmission requirement information of the plurality of pieces of data based on the description information of the plurality of pieces of data and/or the transmission requirement information corresponding to the description information.

For example, for a plurality of service streams, transmission requirement information of a plurality of pieces of data may be determined based on description information (for example, descriptor information) of the plurality of service streams and transmission requirement information corresponding to the description information. For example, descriptor information of a service stream #1 is an IP quintuple #1, and the IP quintuple #1 corresponds to a transmission requirement #1; descriptor information of a service stream #2 is an IP quintuple #2, and the IP quintuple #2 corresponds to a transmission requirement #2; and descriptor information of a service stream #3 is an IP quintuple #3, and the IP quintuple #1 corresponds to the transmission requirement #1. In this case, it may be determined that both the service stream #1 and the service stream 3 correspond to the transmission requirement #1, and the service stream #2 corresponds to the transmission requirement #2.

For example, for a plurality of data packet sets of a same service stream, the transmission server may receive description information (for example, stream protocol description information) of the plurality of data packet sets and transmission requirement information corresponding to the description information (for example, characteristic parameter information of the data packet sets that corresponds to the stream protocol description information) that are sent by the application server, and then determine transmission requirement information of the plurality of data packet sets based on the description information (for example, the stream protocol description information) of the plurality of pieces of data and the transmission requirement information corresponding to the description information (for example, the characteristic parameter information of the data packet sets).

S903a: The transmission server determines QUIC encapsulation identifiers of the plurality of pieces of data based on the transmission requirement information of the plurality of pieces of data and first connection information and/or second connection information.

In some embodiments, the transmission server determines the first connection information.

The first connection information is information allocatable by the transmission server for indicating a QUIC connection, and the first connection information includes a QUIC connection identifier and/or other information indicating the QUIC connection that are/is allocatable by the transmission server.

In some embodiments, the transmission server receives the second connection information sent by a transmission client.

The second connection information is information allocatable by the transmission client for indicating a QUIC connection, and the second connection information includes a QUIC connection identifier and/or another identifier indicating the QUIC connection that are/is allocatable by the transmission client.

In some embodiments, the transmission server may receive a QUIC connection or handshake request message sent by the transmission client, where the request message may include the second connection information.

For content of the first connection information, the second connection information, and determining the QUIC encapsulation identifiers of the plurality of pieces of data in S903a, refer to related descriptions in S802. Details are not described herein in this application.

903b: Determine QUIC encapsulation identifiers of the plurality of pieces of data based on the transmission requirement information of the plurality of pieces of data and first IP information and/or second IP information.

In some embodiments, the transmission server may receive a QUIC connection or handshake request message sent by a transmission client, where the request message may include the second IP information.

In some embodiments, the transmission server determines the first IP information.

The first IP information includes an IP address and a port number that are allocatable by the transmission server.

In some embodiments, the transmission server receives the second IP information sent by the transmission client.

The second IP information includes an IP address and a port number that are allocatable by the transmission client.

For content of the first IP information, the second IP information, and determining the QUIC encapsulation identifiers of the plurality of pieces of data in S903b, refer to related descriptions in S802. Details are not described herein in this application.

It should be understood that S903a and S903b are two different manners of determining the encapsulation identifiers. Usually, one of the manners is selected to perform QUIC data processing provided in embodiments of this application. In other words, S901, S902, S903a, and S904 to S913 are performed, or S901, S902, S903b, and S904 to S913 are performed.

S904: The transmission server sends the QUIC encapsulation identifiers and the transmission requirement information of the plurality of pieces of data to a PCF network element.

Correspondingly, the PCF network element receives the QUIC encapsulation identifiers of the plurality of pieces of data.

The QUIC encapsulation identifiers of the plurality of pieces of data are used to determine identifiers of QoS flows corresponding to the QUIC encapsulation identifiers of the plurality of pieces of data.

For example, the identifier of the QoS flow may include a QCI, a QFI, and the like.

If the plurality of pieces of data are a plurality of downlink service streams, the transmission server may send QUIC encapsulation identifiers and transmission requirement information of the plurality of downlink service streams to the PCF network element. If the plurality of pieces of data are a plurality of downlink data packet sets in a same downlink service stream, the transmission server may send QUIC encapsulation identifiers and transmission requirement information of the plurality of downlink data packet sets to the PCF network element.

If the plurality of pieces of data are a plurality of uplink service streams, the transmission server may send QUIC encapsulation identifiers and transmission requirement information of the plurality of uplink service streams to the PCF network element. If the plurality of pieces of data are a plurality of uplink data packet sets in a same uplink service stream, the transmission server may send QUIC encapsulation identifiers and transmission requirement information of the plurality of uplink data packet sets to the PCF network element.

The transmission server may directly send the QUIC encapsulation identifiers of the plurality of pieces of data to the PCF network element, or may indirectly send the QUIC encapsulation identifiers of the plurality of pieces of data to the PCF network element, for example, through an NEF network element. For example, if the transmission server is trusted by a 5G network, the transmission server may directly send, to the PCF network element, QUIC encapsulation identifiers and transmission requirement information that correspond to service streams. If the transmission server is untrusted by a 5G network, the transmission server needs to send, to the PCF network element through the NEF network element, QUIC encapsulation identifiers and transmission requirement information that correspond to service streams.

S905: The PCF network element determines a PCC rule based on the QUIC encapsulation identifiers and the transmission requirement information of the plurality of pieces of data.

For example, the plurality of pieces of data are uplink data, including an uplink service stream #1, an uplink service stream #2, and an uplink service stream #3. The PCF network element may learn that the uplink service stream #1 corresponds to transmission requirement information #1, the uplink service stream #2 corresponds to a transmission requirement #2, the uplink service stream #3 corresponds to the transmission requirement information #1, the uplink service stream #1 and the uplink service stream #3 correspond to an encapsulation identifier #1, and the uplink service stream #2 corresponds to an encapsulation identifier #2. The PCF network element may generate a PCC rule based on the information.

For another example, the plurality of pieces of data are downlink data, including a downlink data packet set #1, a downlink data packet set #2, and a downlink data packet set #3 that are of a same downlink service stream. The PCF network element may learn that the downlink data packet set #1 corresponds to transmission requirement information #1, the downlink data packet set #2 corresponds to a transmission requirement #2, the downlink data packet set #3 corresponds to the transmission requirement information #1, the downlink data packet set #1 and the downlink data packet set #3 correspond to an encapsulation identifier #1, and the downlink data packet set #2 corresponds to an encapsulation identifier #2. The PCF network element may generate a PCC rule based on the information.

S906: The PCF network element sends the QUIC encapsulation identifiers and the transmission requirement information of the plurality of pieces of data to an SMF network element.

For example, the PCF network element sends the PCC rule to the SMF network element. The PCC rule includes the QUIC encapsulation identifiers of the plurality of pieces of data and the transmission requirement information of the plurality of pieces of data.

S907: The SMF network element determines, based on the QUIC encapsulation identifiers of the plurality of pieces of data, the identifiers of the QoS flows corresponding to the QUIC encapsulation identifiers of the plurality of pieces of data.

In some embodiments, the QUIC encapsulation identifiers of the plurality of pieces of data include a first encapsulation identifier and a second encapsulation identifier. In this case, it is determined that an identifier of a QoS flow of data corresponding to the first encapsulation identifier and an identifier of a QoS flow of data corresponding to the second encapsulation identifier are respectively a first QoS flow identifier and a second QoS flow identifier. Alternatively, the QUIC encapsulation identifiers of the plurality of pieces of data include only a first encapsulation identifier. In this case, it is determined that identifiers of QoS flows of data corresponding to the first encapsulation identifier are all a first QoS flow identifier.

For example, a QUIC encapsulation identifier of an uplink service stream #1 and a QUIC encapsulation identifier of an uplink service stream #3 are an encapsulation identifier #1, and a QUIC encapsulation identifier of an uplink service stream #2 is an encapsulation identifier #2. In this case, a QFI of a QoS flow of the uplink service stream #1 and a QFI of a QoS flow of the uplink service stream #3 are both a QFI #1, that is, the QoS flow of the uplink service stream #1 is the same as the QoS flow of the uplink service stream #3; and a QFI of a QoS flow of the uplink service stream #2 is a QFI #2, that is, the QoS flow of the uplink service stream #1 and the QoS flow of the uplink service stream #3 are different from the QoS flow of the uplink service stream #2.

For example, a QUIC encapsulation identifier of a downlink data packet set #1 and a QUIC encapsulation identifier of a downlink data packet set #3 are an encapsulation identifier #1, and a QUIC encapsulation identifier of a downlink data packet set #2 is an encapsulation identifier #2. In this case, a QFI of a QoS flow of the downlink data packet set #1 and a QFI of a QoS flow of the downlink data packet set #3 are both a QFI #1, that is, the QoS flow of the downlink data packet set #1 is the same as the QoS flow of the downlink data packet set #3; and a QFI of a QoS flow of the downlink data packet set #2 is a QFI #2, that is, the QoS flow of the downlink data packet set #1 and the QoS flow of the downlink data packet set #3 are different from the QoS flow of the downlink data packet set #2.

In some embodiments, the SMF network element may generate a PDR rule based on the QUIC encapsulation identifiers, the transmission requirement information, and the like of the plurality of pieces of data. The PDR rule includes the QUIC encapsulation identifiers and the transmission requirement information of the plurality of pieces of data.

S908: The SMF network element sends, to a second network element, the identifiers of the QoS flows corresponding to the QUIC encapsulation identifiers of the plurality of pieces of data.

The plurality of pieces of data are downlink data.

In some embodiments, the second network element includes a network element responsible for a user plane function, for example, a UPF network element.

In some embodiments, the SMF network element may further send the QUIC encapsulation identifiers of the plurality of pieces of data to the second network element. For example, the SMF network element sends, to the UPF network element, the PDR rule of the plurality of pieces of data and the identifiers of the QoS flows corresponding to the plurality of pieces of data.

S911: The transmission server receives the plurality of pieces of data sent by the application server.

The plurality of pieces of data are downlink data.

In some embodiments, the plurality of pieces of data include a plurality of downlink service streams. For example, the transmission server may receive the plurality of downlink service streams from the application server.

In some embodiments, the plurality of pieces of data include a plurality of downlink data packet sets in a same downlink service stream, and each data packet set includes at least one data packet. The transmission server may receive the plurality of pieces of data from the application server. For example, the transmission server may receive the plurality of downlink data packet sets in the same downlink service stream from the application server.

S912: The transmission server encapsulates a plurality of pieces of downlink data by using QUIC encapsulation identifiers of the plurality of pieces of downlink data, to obtain the plurality of pieces of encapsulated downlink data.

When receiving the downlink data, the transmission server encapsulates the downlink data based on the QUIC encapsulation identifier corresponding to the downlink data, that is, the QUIC encapsulation identifier determined in S903a or S903b.

For example, a QUIC encapsulation identifier corresponding to a downlink service stream #2 (IP quintuple #2) may be <connection ID #2>. The transmission server encapsulates the downlink service stream #2 from the application server, and encapsulated data carries the QUIC connection identifier <connection ID #2>.

S913: The transmission server sends the plurality of pieces of encapsulated downlink data to the second network element.

Correspondingly, the second network element receives the plurality of pieces of encapsulated downlink data.

In some embodiments, the second network element may include a network element responsible for a user plane function, for example, a UPF network element.

S914: The second network element maps the plurality of pieces of encapsulated downlink data to corresponding QoS flows based on the QUIC encapsulation identifiers in the plurality of pieces of encapsulated downlink data.

For example, when receiving the encapsulated downlink data such as a downlink service stream, the second network element may determine a QUIC encapsulation identifier in the downlink service stream. Then, the second network element may map, based on an identifier of a QoS flow (the identifier of the QoS flow in S908) corresponding to the QUIC encapsulation identifier that is of the downlink service stream and that is sent by the network element responsible for session management such as the SMF network element, the encapsulated downlink service stream to the QoS flow corresponding to the encapsulation identifier.

In some embodiments, the second network element may perform, based on the PDR rule and the identifier of the QoS flow corresponding to the encapsulation identifier that are sent by the network element responsible for session management such as the SMF network element, data packet detection and corresponding QoS flow identifier marking on the downlink data such as the downlink service stream.

For example, the plurality of pieces of downlink data are a service stream #1, a service stream #2, and a service stream #3. A QUIC encapsulation identifier of the service stream #1 and a QUIC encapsulation identifier of the service stream #3 may be an encapsulation identifier #1, and a QUIC encapsulation identifier corresponding to the service stream #2 may be an encapsulation identifier #2. In this case, a QFI of a QoS flow of the encapsulation identifier #1 is a QFI #1, and a QFI of a QoS flow of the encapsulation identifier #2 is a QFI #2. The UPF network element may determine that a QUIC encapsulation identifier in the encapsulated service stream #1 and a QUIC encapsulation identifier in the encapsulated service stream #3 are the encapsulation identifier #1, and a QUIC encapsulation identifier in the encapsulated service stream #2 is the encapsulation identifier #2. In this case, the UPF network element maps the service stream #1 and the service stream #3 to the QoS flow with the QFI #1, and maps the service stream #2 to the QoS flow with the QFI #2.

For example, the plurality of pieces of downlink data are a data packet set #1, a data packet set #2, and a data packet set #3 in a same service stream. A QUIC encapsulation identifier of the data packet set #1 and a QUIC encapsulation identifier of the data packet set #3 may be an encapsulation identifier #1, and a QUIC encapsulation identifier corresponding to the data packet set #2 may be an encapsulation identifier #2. In this case, a QFI of a QoS flow of the encapsulation identifier #1 is a QFI #1, and a QFI of a QoS flow of the encapsulation identifier #2 is a QFI #2. The UPF network element may determine that a QUIC encapsulation identifier in the encapsulated data packet set #1 and a QUIC encapsulation identifier in the encapsulated data packet set #3 are the encapsulation identifier #1, and a QUIC encapsulation identifier in the encapsulated data packet set #2 is the encapsulation identifier #2. In this case, the UPF network element maps the data packet set #1 and the data packet set #3 to the QoS flow with the QFI #1, and maps the data packet set #2 to the QoS flow with the QFI #2.

S915: The transmission server sends the QUIC encapsulation identifiers of the plurality of pieces of data to the transmission client.

The transmission server sends QUIC encapsulation identifiers of a plurality of pieces of uplink data to the transmission client.

The transmission server may encapsulate the plurality of pieces of uplink data by using the QUIC encapsulation identifiers of the plurality of pieces of uplink data.

In some embodiments, the application server includes a VAL server.

In some embodiments, the transmission client includes a SEALDD client.

In some embodiments, the transmission server includes a SEALDD server.

It should be understood that, in step S901 to step S907, the plurality of pieces of data may be uplink data, or may be downlink data. In step S907 to step S912, the plurality of pieces of data are downlink data. In step S913, the plurality of pieces of data are uplink data.

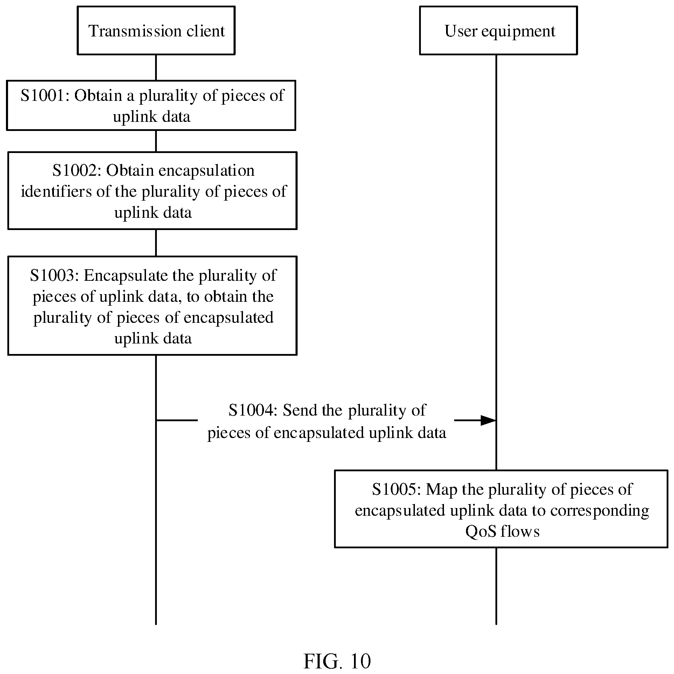

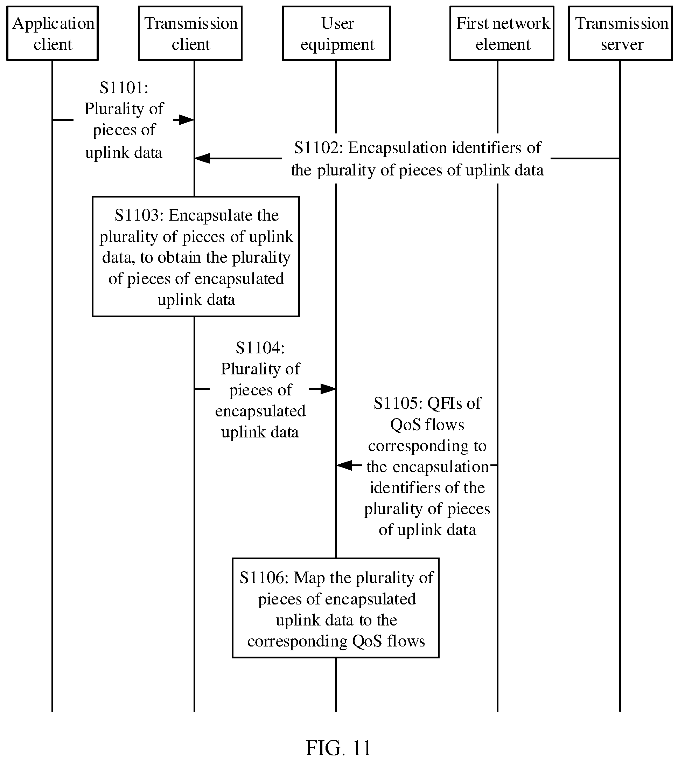

The following describes, with reference to FIG. 10 and FIG. 11, uplink QUIC data processing of a transmission client and a user equipment by using examples.

FIG. 10 is a diagram of an uplink QUIC data processing method according to an embodiment of this application.

S1001: A transmission client obtains a plurality of pieces of data.

One of the plurality of pieces of data is a service stream or a data packet set, the data packet set includes at least one data packet, and the plurality of pieces of data are a plurality of pieces of uplink data.

In some embodiments, the plurality of pieces of data include a plurality of uplink service streams.

In some embodiments, the plurality of pieces of data include a plurality of uplink data packet sets in a same uplink service stream, and each data packet set includes at least one data packet.

In some embodiments, the transmission client may obtain the plurality of pieces of data from an application client.

1002: The transmission client obtains QUIC encapsulation identifiers of the plurality of pieces of data.

In some embodiments, the transmission client receives the QUIC encapsulation identifiers of the plurality of pieces of data sent by a transmission server. The QUIC encapsulation identifiers of the plurality of pieces of data are determined by the transmission server. For content of determining the encapsulation identifiers by the transmission server, refer to related descriptions in S802. Details are not described herein in this application.

S1003: The transmission client encapsulates the plurality of pieces of data based on the QUIC encapsulation identifiers of the plurality of pieces of data, to obtain the plurality of pieces of encapsulated data.

When receiving the uplink data, the transmission client encapsulates the uplink data based on the QUIC encapsulation identifier corresponding to the uplink data.

For example, a QUIC encapsulation identifier corresponding to an uplink service stream #2 (IP quintuple #2) is <connection ID #2>. The transmission client encapsulates the uplink service stream #2 from the application client, and encapsulated data carries the QUIC connection identifier <connection ID #2>.

S1004: The transmission client sends the plurality of pieces of encapsulated data to a user equipment.

Correspondingly, the user equipment receives the plurality of pieces of encapsulated data.

S1005: The user equipment maps the plurality of pieces of encapsulated data to corresponding QoS flows by using the QUIC encapsulation identifiers in the plurality of pieces of encapsulated data.

When receiving the encapsulated uplink data such as an uplink service stream, the user equipment may determine a QUIC encapsulation identifier in the uplink service stream. Then, the user equipment may map, based on an identifier of a QoS flow corresponding to the QUIC encapsulation identifier that is of the uplink service stream and that is sent by a first network element such as an SMF network element, the encapsulated uplink service stream to the QoS flow corresponding to the encapsulation identifier.

In some embodiments, the user equipment may perform, based on a PDR rule and the identifier of the QoS flow corresponding to the encapsulation identifier that are sent by the first network element such as the SMF network element, data packet detection and corresponding QoS flow identifier marking on the uplink data such as the uplink service stream.

For example, the plurality of pieces of uplink data are a service stream #1, a service stream #2, and a service stream #3. A QUIC encapsulation identifier of the service stream #1 and a QUIC encapsulation identifier of the service stream #3 may be an encapsulation identifier #1, and a QUIC encapsulation identifier corresponding to the service stream #2 may be an encapsulation identifier #2. In this case, a QFI of a QoS flow of the encapsulation identifier #1 is a QFI #1, and a QFI of a QoS flow of the encapsulation identifier #2 is a QFI #2. The user equipment may determine that a QUIC encapsulation identifier in the encapsulated service stream #1 and a QUIC encapsulation identifier in the encapsulated service stream #3 are the encapsulation identifier #1, and a QUIC encapsulation identifier in the encapsulated service stream #2 is the encapsulation identifier #2. In this case, the user equipment maps the service stream #1 and the service stream #3 to the QoS flow with the QFI #1, and maps the service stream #2 to the QoS flow with the QFI #2.

For example, the plurality of pieces of uplink data are a data packet set #1, a data packet set #2, and a data packet set #3 in a same service stream. A QUIC encapsulation identifier of the data packet set #1 and a QUIC encapsulation identifier of the data packet set #3 may be an encapsulation identifier #1, and a QUIC encapsulation identifier corresponding to the data packet set #2 may be an encapsulation identifier #2. In this case, a QFI of a QoS flow of the encapsulation identifier #1 is a QFI #1, and a QFI of a QoS flow of the encapsulation identifier #2 is a QFI #2. The user equipment may determine that a QUIC encapsulation identifier in the encapsulated data packet set #1 and a QUIC encapsulation identifier in the encapsulated data packet set #3 are the encapsulation identifier #1, and a QUIC encapsulation identifier in the encapsulated data packet set #2 is the encapsulation identifier #2. In this case, the user equipment maps the data packet set #1 and the data packet set #3 to the QoS flow with the QFI #1, and maps the data packet set #2 to the QoS flow with the QFI #2.

FIG. 11 is a diagram of an uplink QUIC data processing method according to an embodiment of this application.

S1101: A transmission client receives a plurality of pieces of data from an application client.

In some embodiments, the application client includes a VAL client.

In some embodiments, the transmission client includes a SEALDD client.

In some embodiments, the plurality of pieces of data include a plurality of uplink service streams. For example, the transmission client may receive the plurality of uplink service streams from the application client.

In some embodiments, the plurality of pieces of data include a plurality of uplink data packet sets in a same uplink service stream, and each data packet set includes at least one data packet. For example, the transmission client may receive the plurality of uplink data packet sets in the same uplink service stream from the application client.

S1102: The transmission client receives QUIC encapsulation identifiers of the plurality of pieces of data from a transmission server.

The QUIC encapsulation identifiers of the plurality of pieces of data are determined based on transmission requirement information of the plurality of pieces of data, and there is a correspondence between the transmission requirement information of the plurality of pieces of data and the QUIC encapsulation identifiers of the plurality of pieces of data.

For content of determining the encapsulation identifiers by the transmission server, refer to related descriptions in S802. Details are not described herein in this application.

S1103: The transmission client encapsulates the plurality of pieces of data based on the QUIC encapsulation identifiers of the plurality of pieces of data, to obtain the plurality of pieces of encapsulated data.

When receiving the uplink data, the transmission client encapsulates the uplink data based on the QUIC encapsulation identifier corresponding to the uplink data.

For example, a QUIC encapsulation identifier corresponding to an uplink service stream #2 (IP quintuple #2) may be <connection ID #2>. The transmission client encapsulates the uplink service stream #2 from the application client, and encapsulated data carries the QUIC connection identifier <connection ID #2>.

S1104: The transmission client sends the plurality of pieces of encapsulated data to a user equipment.

Correspondingly, the user equipment receives the plurality of pieces of encapsulated data.

S1105: A first network element sends, to the user equipment, identifiers of QoS flows corresponding to the QUIC encapsulation identifiers of the plurality of pieces of data.

In some embodiments, the first network element is a network element responsible for session management, for example, an SMF network element. The first network element may determine, based on the QUIC encapsulation identifiers of the plurality of pieces of data, the identifiers of the QoS flows corresponding to the QUIC encapsulation identifiers of the plurality of pieces of data.

For example, the identifier of the QoS flow may include a QCI, a QFI, and the like.

S1106: The user equipment maps the plurality of pieces of encapsulated data to the QoS flows of the plurality of pieces of data based on the QUIC encapsulation identifiers in the plurality of pieces of encapsulated data.

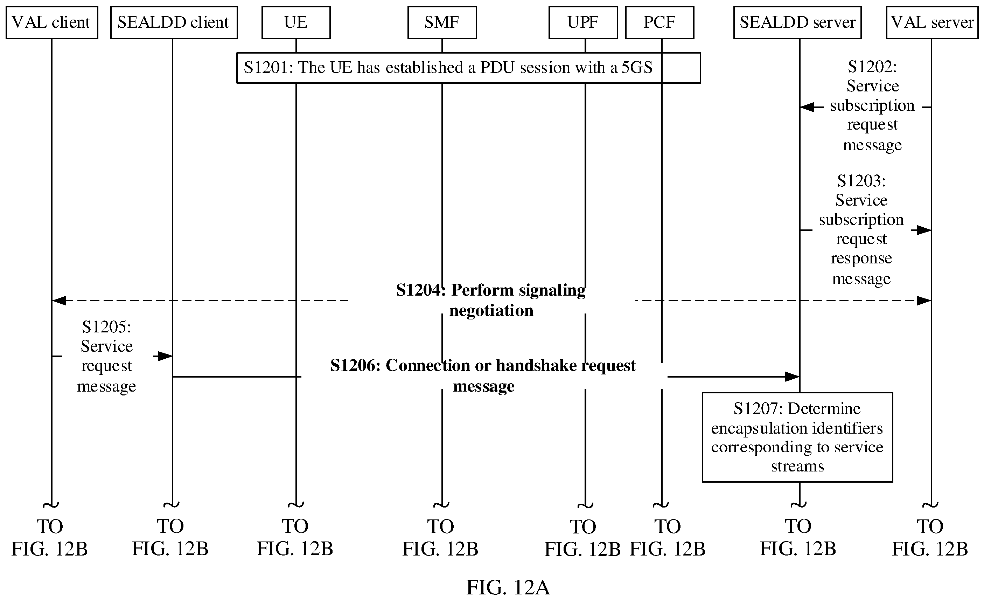

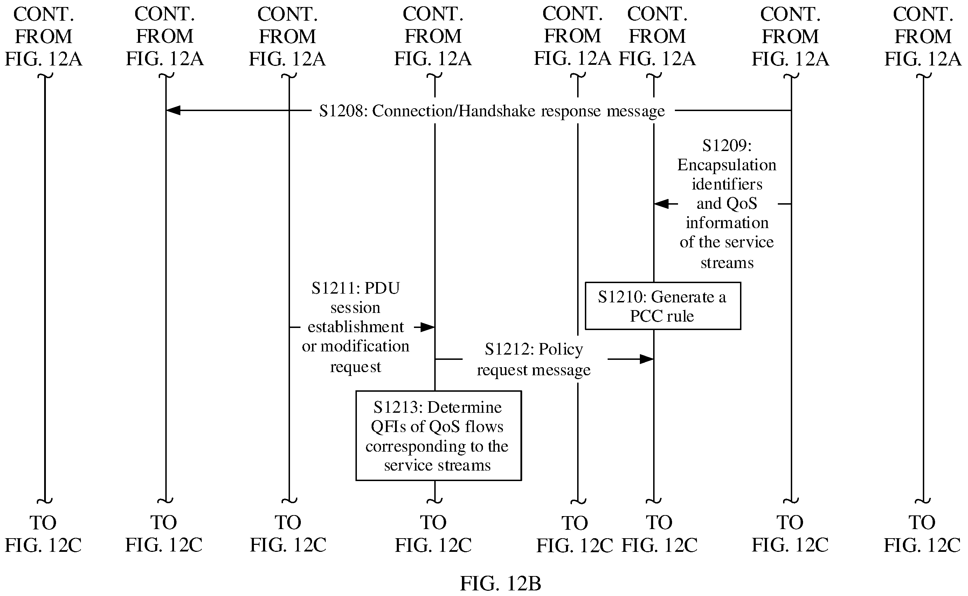

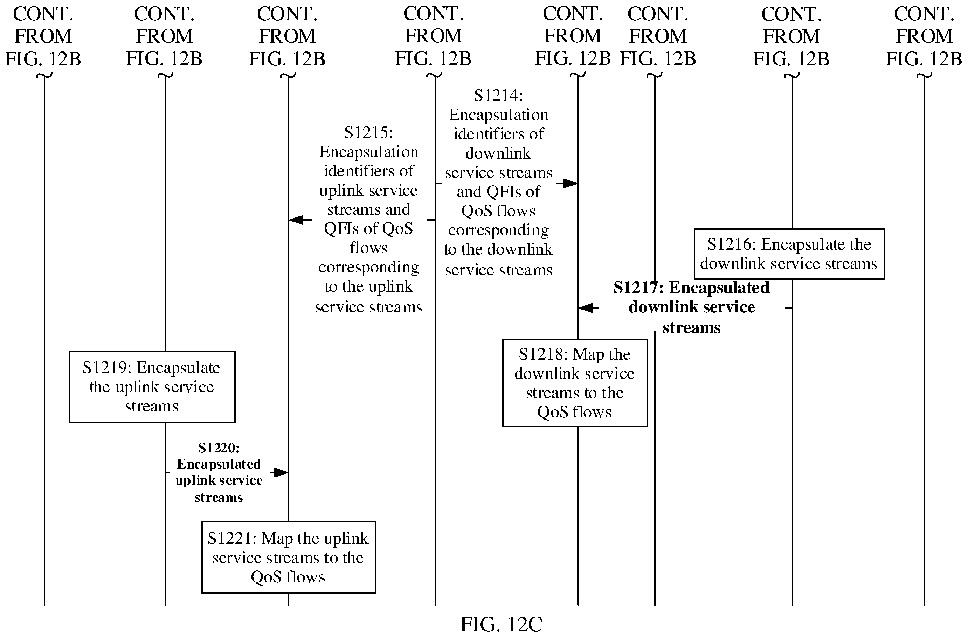

FIG. 12A to FIG. 12C are a diagram of a QUIC data processing method according to an embodiment of this application. FIG. 12A to FIG. 12C show a scenario of a plurality of service streams.

S1201: A UE establishes a PDU session with a 5G core network.

The PDU session is established to implement network connection between the UE, a RAN, a UPF network element, and a DN.

S1202: A VAL server sends a service subscription request message to a SEALDD server.

The request message includes information about a plurality of service streams. For example, the information about the service streams may include descriptor information (for example, IP quintuple information) of the service streams, QoS information corresponding to the descriptor information, and the like. The QoS information may include QoS requirement information and/or QoS importance information.

For example, the plurality of service streams include a service stream #1 and a service stream #2. Descriptor information (IP quintuple #1) of the service stream #1 corresponds to QoS information #1, and descriptor information (IP quintuple #2) of the service stream #2 corresponds to QoS information #2.

S1203: The SEALDD server sends a service subscription request response message to the VAL server.

S1204: A VAL client and the VAL server perform signaling negotiation to determine a data processing manner between the VAL client and the VAL server.

For example, in this embodiment of this application, after signaling negotiation, it is determined to use a SEALDD enabling layer to perform QUIC data processing.

S1205: The VAL client sends a service request message to a SEALDD client.

S1206: The SEALDD client sends a connection or handshake request message to the SEALDD server.

In some embodiments, content of the request message includes identification information allocatable by the SEALDD client for indicating a QUIC connection, for example, an allocatable connection ID(s) or other allocatable identification information.

In some embodiments, the content of the request message includes an IP address and/or a port number that are/is allocatable by the SEALDD client.

S1207: The SEALDD server determines, based on the QoS information corresponding to the service streams, QUIC encapsulation identifiers corresponding to the service streams.

In some embodiments, the QUIC encapsulation identifier may include information indicating a QUIC connection, information in an IP triplet, or information in an IP quintuple.

In other words, the information indicating the QUIC connection may be used as the encapsulation identifier, the information in the IP triplet may be used as the encapsulation identifier, or the information in the IP quintuple may be used as the encapsulation identifier.

The information indicating the QUIC connection includes an allocatable QUIC connection identifier and an identifier, other than the allocatable QUIC connection identifier, that indicates the QUIC connection.

The IP triplet may include information about an IP address, a protocol, and a port.

The IP quintuple may include information about a source IP address, a source port, a destination IP address, a destination port, and a transport layer protocol.

For example, the encapsulation identifier includes information allocatable by a transmission server and/or a transmission client for indicating the QUIC connection.

In other words, the information allocatable by the transmission server and/or the transmission client for indicating the QUIC connection may be used as the encapsulation identifier.

In some embodiments, the transmission server may determine the QUIC encapsulation identifiers of the plurality of service streams based on transmission requirement information of the plurality of service streams and first connection information and/or second connection information.

The first connection information is information allocatable by the transmission server for indicating a QUIC connection, and the first connection information includes a QUIC connection identifier and/or other information indicating the QUIC connection that are/is allocatable by the transmission server. The second connection information is information allocatable by the transmission client for indicating a QUIC connection, and the second connection information includes a QUIC connection identifier and/or other information indicating the QUIC connection that are/is allocatable by the transmission client.

For example, the QUIC encapsulation identifiers of the plurality of service streams may be determined based on the transmission requirement information of the plurality of service streams, the QUIC connection identifier allocatable by the transmission server, and the QUIC connection identifier allocatable by the transmission client.

QUIC encapsulation identifiers of downlink service streams are used as an example. For example, for different QUIC connections, QUIC connection identifiers allocatable by the transmission server are a connection ID #1 and a connection ID #2, and QUIC connection identifiers allocatable by the transmission client are a connection ID #3 and a connection ID #4. In this case, QUIC encapsulation identifiers may include <connection ID #1>, <connection ID #2>, <connection ID #1, connection ID #3>, <connection ID #1, connection ID #4>, <connection ID #2, connection ID #3>, and <connection ID #2, connection ID #4>. The first two encapsulation identifiers each include a source connection identifier (for downlink service streams, the source connection identifier is a QUIC connection identifier allocatable by the transmission server), and the last four identifiers each include a source connection identifier and a destination connection identifier (for downlink service streams, the destination connection identifier is a QUIC connection identifier allocatable by the transmission client).

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier corresponding to the downlink service stream #1 and a QUIC encapsulation identifier corresponding to the downlink service stream #3 may be an encapsulation identifier #1, and a QUIC encapsulation identifier corresponding to the downlink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the downlink service stream #1 and the QUIC encapsulation identifier of the downlink service stream #3.

QUIC encapsulation identifiers of uplink service streams are used as an example. For example, for different QUIC connections, QUIC connection identifiers allocatable by the transmission client are a connection ID #1 and a connection ID #2, and QUIC connection identifiers allocatable by the transmission client are a connection ID #3 and a connection ID #4. In this case, QUIC encapsulation identifiers may include <connection ID #3>, <connection ID #4>, <connection ID #3, connection ID #1>, <connection ID #4, connection ID #1>, <connection ID #3, connection ID #2>, and <connection ID #4, connection ID #4>. The first two encapsulation identifiers each include a source connection identifier (for uplink service streams, the source connection identifier is a QUIC connection identifier allocatable by the transmission client), and the last four identifiers each include a source connection identifier and a destination connection identifier (for uplink service streams, the destination connection identifier is a QUIC connection identifier allocatable by the transmission server).

If a plurality of uplink service streams correspond to a plurality of different pieces of transmission requirement information, for example, an uplink service stream #1 corresponds to transmission requirement information #1, an uplink service stream #2 corresponds to a transmission requirement #2, and an uplink service stream #3 corresponds to the transmission requirement information #1, a QUIC encapsulation identifier corresponding to the uplink service stream #1 and a QUIC encapsulation identifier corresponding to the uplink service stream #3 may be an encapsulation identifier #1, and a QUIC encapsulation identifier corresponding to the uplink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the uplink service stream #1 and the QUIC encapsulation identifier of the downlink service stream #3 may be <connection ID #3>, and the QUIC encapsulation identifier corresponding to the uplink service stream #2 may be <connection ID #4>.

For a same QUIC connection, there is only one identifier obtained based on a QUIC connection identifier allocatable by the transmission server and/or a QUIC connection identifier allocatable by the transmission client. Therefore, new identifiers, for example, other information indicating the QUIC connection, needs to be further introduced and combined with the identifier, to serve as QUIC encapsulation identifiers of service streams with a plurality of different transmission requirements in the same QUIC connection. Therefore, the QUIC encapsulation identifiers of the plurality of service streams may be determined based on the transmission requirement information of the plurality of service streams, the QUIC connection identifier allocatable by the transmission server, the other information indicating the QUIC connection, the QUIC connection identifier allocatable by the transmission client, and the other information indicating the QUIC connection.

QUIC encapsulation identifiers of downlink service streams are used as an example. For example, for a same QUIC connection, an identifier obtained based on QUIC connection identifiers allocatable by the transmission server and the transmission client is a connection ID, other identifiers allocatable by the transmission server are an ID #1 and an ID #2, and other identifiers allocatable by the transmission client are an ID #3 and an ID #4. In this case, encapsulation identifiers may be <connection ID+ID #1>, <connection ID+ID #2>, <connection ID+<ID #1, ID #3>>, <connection ID+<ID #1, ID #4>>, <connection ID+<ID #2, ID #3>>, and <connection ID+<ID #2, ID #4>>. The first two encapsulation identifiers each include the connection ID and another allocatable source connection identifier (for downlink service streams, the another source connection identifier is other information allocatable by the transmission server for indicating the QUIC connection), and the last four identifiers each include the connection ID, another source connection identifier, and another destination connection identifier (for downlink service streams, the another destination connection identifier is other information allocatable by the transmission client for indicating the QUIC connection).

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier corresponding to the downlink service stream #1 and a QUIC encapsulation identifier corresponding to the downlink service stream #3 may be an encapsulation identifier #1, and a QUIC encapsulation identifier corresponding to the downlink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the downlink service stream #1 and the QUIC encapsulation identifier of the downlink service stream #3 may be <connection ID+ID #1>, and the QUIC encapsulation identifier corresponding to the downlink service stream #2 may be <connection ID+ID #2>.

QUIC encapsulation identifiers of uplink service streams are used as an example. For example, for a same QUIC connection, an identifier obtained based on a QUIC connection identifier allocatable by the transmission server and/or a QUIC connection identifier allocatable by the transmission client is a connection ID. Other identifiers allocatable by the transmission server are an ID #1 and an ID #2, and other identifiers allocatable by the transmission client are an ID #3 and an ID #4. In this case, encapsulation identifiers may be <connection ID+ID #3>, <connection ID+ID #4>, <connection ID+<ID #3, ID #1>>, <connection ID+<ID #4, ID #1>>, <connection ID+<ID #3, ID #2>>, and <connection ID+<ID #4, ID #2>>. The first two encapsulation identifiers each include the connection ID and another allocatable source connection identifier (for uplink service streams, the another source connection identifier is other information allocatable by the transmission client for indicating the QUIC connection), and the last four identifiers each include the connection ID, another source connection identifier, and another destination connection identifier (for uplink service streams, the another destination connection identifier is other information allocatable by the transmission server for indicating the QUIC connection).

If a plurality of uplink service streams correspond to a plurality of different pieces of transmission requirement information, for example, an uplink service stream #1 corresponds to transmission requirement information #1, an uplink service stream #2 corresponds to a transmission requirement #2, and an uplink service stream #3 corresponds to the transmission requirement information #1, a QUIC encapsulation identifier corresponding to the uplink service stream #1 and a QUIC encapsulation identifier corresponding to the uplink service stream #3 may be an encapsulation identifier #1, and a QUIC encapsulation identifier corresponding to the uplink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the uplink service stream #1 and the QUIC encapsulation identifier of the uplink service stream #3 may be <connection ID+ID #3>, and the QUIC encapsulation identifier corresponding to the uplink service stream #2 may be <connection ID #4>.

In some embodiments, the QUIC encapsulation identifiers of the plurality of service streams may be determined based on transmission requirement information of the plurality of service streams and first IP information and/or second IP information. The first IP information includes an IP address and a port number that are allocatable by the transmission server, and the second IP information includes an IP address and a port number that are allocatable by the transmission client.

In other words, the IP address and the port number that are allocatable by the transmission server and/or the IP address and the port number that are allocatable by the transmission client may be used as the encapsulation identifiers.

QUIC encapsulation identifiers of downlink service streams are used as an example. An IP address and port numbers that are allocatable by the transmission server are <IP #1, port #1> and <IP #1, port #2>, and an IP address and port numbers that are allocatable by the transmission client are <IP #2, port #3> and <IP #2, port #4>. In this case, QUIC encapsulation identifiers may include [IP #1, port #1], [IP #1, port #2], [<IP #1, port #1>, <IP #2, port #3>], [<IP #1, port #1>, <IP #2, port #4>], [<IP #1, port #2>, <IP #2, port #3>], and [<IP #1, port #2>, <IP #2, port #4>]. The first two identifiers each include a source address and a source port number (for downlink data, the source address and the source port number are an IP address and a port number that are allocatable by the transmission server), and the last four identifiers each include a source address and a source port number, and a destination address and a destination port number (for downlink service streams, the destination address and the destination port number are an address and a port number that are allocatable by the transmission client).

If a plurality of downlink service streams correspond to a plurality of different pieces of transmission requirement information, for example, a downlink service stream #1 corresponds to transmission requirement information #1, a downlink service stream #2 corresponds to a transmission requirement #2, and a downlink service stream #3 corresponds to the transmission requirement information #1, a QUIC encapsulation identifier corresponding to the downlink service stream #1 and a QUIC encapsulation identifier corresponding to the downlink service stream #3 may be an encapsulation identifier #1, and a QUIC encapsulation identifier corresponding to the downlink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the downlink service stream #1 and the QUIC encapsulation identifier of the downlink service stream #3 may be [IP #1, port #1], and the QUIC encapsulation identifier corresponding to the downlink service stream #2 may be [IP #1, port #2].

QUIC encapsulation identifiers of uplink service streams are used as an example. An IP address and port numbers that are allocatable by the transmission server are <IP #1, port #1> and <IP #1, port #2>, and an IP address and port numbers that are allocatable by the transmission client are <IP #2, port #3> and <IP #2, port #4>. In this case, QUIC encapsulation identifiers may include [IP #2, port #3], [IP #2, port #4], [<IP #2, port #3>, <IP #1, port #1>], [<IP #2, port #4>, <IP #1, port #1>], [<IP #2, port #3>, <IP #1, port #2>], and [<IP #2, port #4>, <IP #1, port #2>]. The first two identifiers each include a source address and a source port number (for uplink service streams, the source address and the source port number are an IP address and a port number that are allocatable by the transmission client), and the last four identifiers each include a source address and a source port number, and a destination address and a destination port number (for uplink service streams, the destination address and the destination port number are an address and a port number that are allocatable by the transmission server).

If a plurality of uplink service streams correspond to a plurality of different pieces of transmission requirement information, for example, an uplink service stream #1 corresponds to transmission requirement information #1, an uplink service stream #2 corresponds to a transmission requirement #2, and an uplink service stream #3 corresponds to the transmission requirement information #1, a QUIC encapsulation identifier corresponding to the uplink service stream #1 and a QUIC encapsulation identifier corresponding to the uplink service stream #3 may be an encapsulation identifier #1, and a QUIC encapsulation identifier corresponding to the uplink service stream #2 is an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier of the uplink service stream #1 and the QUIC encapsulation identifier of the uplink service stream #3 may be [IP #2, port #3], and the QUIC encapsulation identifier corresponding to the uplink service stream #2 may be [IP #2, port #4].

In this embodiment of this application, all QUIC encapsulation identifiers may be first determined, and then corresponding QUIC encapsulation identifiers are selected and determined from all the QUIC encapsulation identifiers based on service streams with different transmission requirements. Alternatively, corresponding QUIC encapsulation identifiers may be directly determined based on service streams with different transmission requirements.

S1208: The SEALDD server sends a connection/handshake response message to the SEALDD client.

In some embodiments, content of the response message may include uplink service stream information and corresponding uplink QUIC encapsulation identifiers, and is used by the SEALDD client to process uplink service streams from the VAL client.

S1209: The SEALDD server sends the QUIC encapsulation identifiers and the QoS information that correspond to the service streams to a PCF.

The SEALDD server sends, to the PCF, QUIC encapsulation identifiers and QoS information (for example, QoS importance information) that correspond to uplink service streams, and/or QUIC encapsulation identifiers and QoS information (for example, QoS importance information) that correspond to downlink service streams.

If the SEALDD server is trusted by a 5G network, the SEALDD server may directly send, to the PCF network element, the QUIC encapsulation identifiers and the QoS information that correspond to the service streams. If the SEALDD server is untrusted by a 5G network, the SEALDD server needs to send, to the PCF network element through an NEF network element, the QUIC encapsulation identifiers and the QoS information that correspond to the service streams.

Correspondingly, the PCF network element receives the QUIC encapsulation identifiers and the QoS information that correspond to the service streams.

S1210: The PCF network element may generate a PCC rule based on the QUIC encapsulation identifiers and the QoS information that correspond to the service streams.

The PCC rule may include the QUIC encapsulation identifiers and the QoS information that correspond to the service streams.

S1211: The UE initiates a PDU session establishment or modification request to an SMF network element.

S1212: The SMF network element sends a policy request message to the PCF network element, to request to obtain the QUIC encapsulation identifiers corresponding to the service streams.

In some embodiments, the policy request message may be further used to request to obtain the QoS information corresponding to the service streams.

S1213: The SMF network element receives a policy response message sent by the PCF network element, and determines QFIs of QoS flows corresponding to the service streams.

The policy response message includes the QUIC encapsulation identifiers corresponding to the service streams. The SMF network element may determine, based on the QUIC encapsulation identifiers corresponding to the service streams, the QFIs of the QoS flows corresponding to the service streams, that is, QoS flows of service streams with a same QUIC encapsulation identifier have a same QFI.

In some embodiments, the policy response message further includes the QoS information corresponding to the service streams.

In some embodiments, the SMF network element may further generate a PDR rule based on the QUIC encapsulation identifiers, the QoS information, and the like that correspond to the service streams. The PDR rule includes the QUIC encapsulation identifiers corresponding to the service streams.

S1214: The SMF network element sends, to the UPF network element, the QUIC encapsulation identifiers corresponding to the downlink service streams and QFIs of QoS flows corresponding to the downlink service streams.

In some embodiments, the SMF network element may further send, to the UPF network element, the QoS information corresponding to the downlink service streams.

For example, the SMF network element sends, to the UPF network element, a PDR rule corresponding to the downlink service streams and the QFIs of the QoS flows corresponding to the downlink service streams.

S1215: The SMF network element sends, to the UE, the QUIC encapsulation identifiers corresponding to the uplink service streams and QFIs of QoS flows corresponding to the uplink service streams.

In some embodiments, the SMF network element sends, to the UE, the QoS information corresponding to the uplink service streams.

For example, the SMF network element sends QoS enforcement rule information of the uplink service streams to the UE. The QoS enforcement rule information includes a PDR rule (for example, the QUIC encapsulation identifiers and the QoS information) corresponding to the uplink service streams and the QFIs of the QoS flows corresponding to the uplink service streams.

S1216: The SEALDD server encapsulates the downlink service streams based on the downlink QUIC encapsulation identifiers.

After PDU session establishment or modification is completed, when the downlink service streams of the VAL server arrive, the SEALDD server encapsulates the downlink service streams based on the downlink QUIC encapsulation identifiers determined in S1207.

For example, if a QUIC encapsulation identifier corresponding to a downlink service stream #1 is <connection ID #1>, the SEALDD server may encapsulate a downlink QUIC data packet for the service stream with an IP quintuple #1 from the VAL server based on <connection ID #1>. That is, the encapsulated QUIC data packet of the downlink service stream carries the QUIC connection identifier <connection ID #1>.

S1217: The SEALDD server sends the encapsulated downlink service streams to the UPF network element.

Correspondingly, the UPF network element receives the downlink service streams sent by the SEALDD server.

S1218: The UPF network element maps the downlink service streams to the QoS flows based on the QUIC encapsulation identifiers in the downlink service streams and the QFIs of the QoS flows corresponding to the downlink service streams.

For example, when receiving the downlink service streams, the UPF network element may perform QUIC data packet detection and corresponding QFI marking on the downlink service streams according to the PDR rule, that is, may determine the downlink QUIC encapsulation identifiers in the downlink service streams, and map downlink service streams with a same QUIC encapsulation identifier to QoS flows with a same QFI.

S1219: The SEALDD client encapsulates the uplink service streams based on the uplink QUIC encapsulation identifiers.

After PDU session establishment or modification is completed, when the uplink service streams of the VAL client arrive, the SEALDD client encapsulates the uplink service streams based on the uplink QUIC encapsulation identifiers obtained in S1208.

For example, if an uplink QUIC encapsulation identifier corresponding to an uplink service stream #3 is <connection ID #3>, the SEALDD client may encapsulate an uplink QUIC data packet for the service stream from the VAL client based on <connection ID #3>. That is, the encapsulated QUIC data packet of the uplink service stream carries the QUIC connection identifier <connection ID #3>.

S1220: The SEALDD client sends the encapsulated uplink service streams to the UE.

Correspondingly, the UE receives the encapsulated uplink service streams sent by the SEALDD client.

S1221: The UE maps the uplink service streams to the QoS flows based on the QUIC encapsulation identifiers in the uplink service streams and the QFIs of the QoS flows corresponding to the uplink service streams.

For example, when receiving the uplink service streams, the UE may perform QUIC data packet detection and QFI marking corresponding to the uplink service streams, that is, may determine the QUIC encapsulation identifiers in the uplink service streams and the QFIs of the QoS flows corresponding to the uplink service streams, and map uplink service streams with a same QUIC encapsulation identifier to QoS flows with a same QFI.

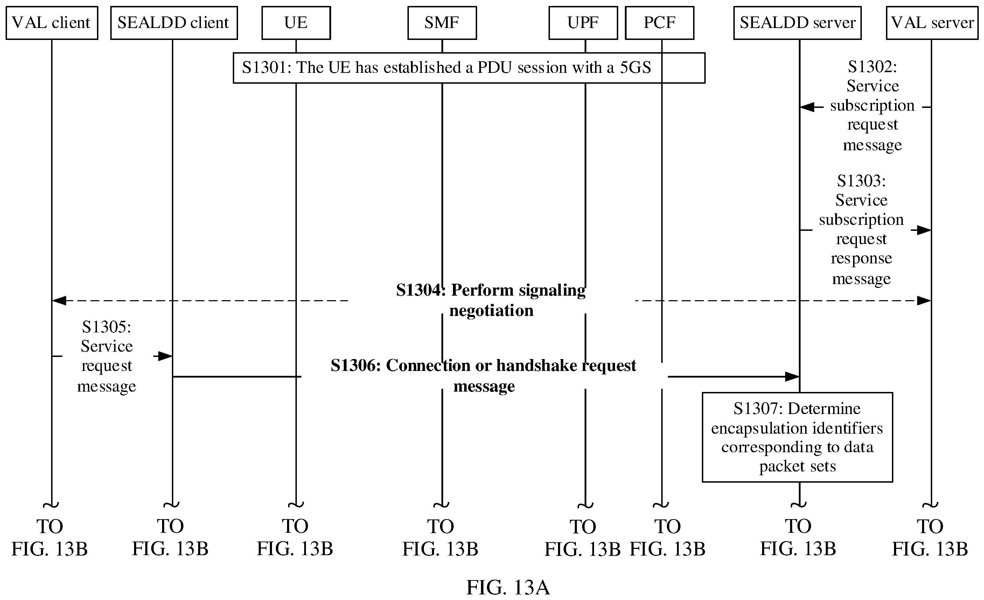

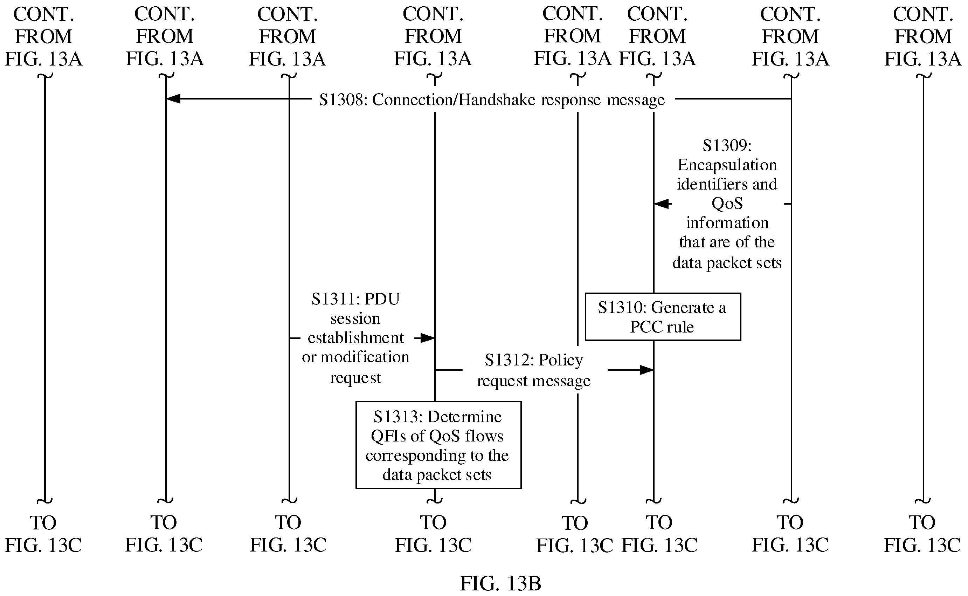

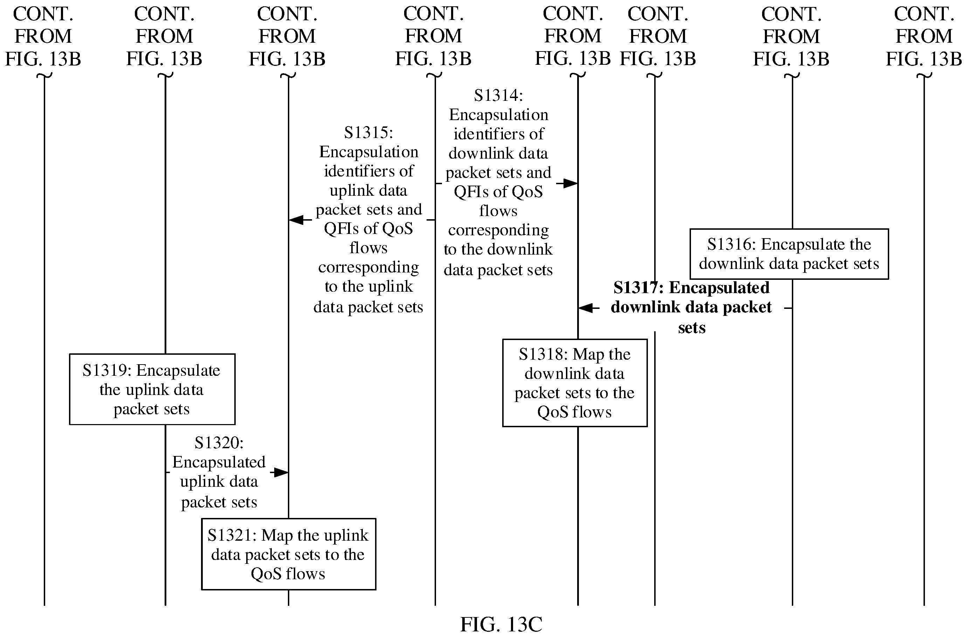

FIG. 13A to FIG. 13C are a diagram of a QUIC data processing method according to an embodiment of this application. FIG. 13A to FIG. 13C show an application scenario of a single service stream. For example, the single service stream includes data packet sets with different QoS information.

S1301: A UE has established a PDU session with a 5G core network.

In this way, network connection between the UE and a RAN, a UPF, and a DN is implemented.

S1302: A VAL server sends a service subscription request message to a SEALDD server.

The request message may include information about the service stream. For example, the information about the service stream may include protocol description information of the service stream (the service stream is transmitted by using the RTP), or the information about the service stream may include protocol description information of the service stream, QoS information of the data packet sets that corresponds to the protocol description information, and the like. The QoS information may include QoS requirement information and/or QoS importance information.

For example, QoS information corresponding to a data packet set #1 is QoS information #1, and QoS information corresponding to a data packet set #2 is QoS information #2.

S1303: The SEALDD server sends a service subscription request response message to the VAL server.

S1304: A VAL client and the VAL server perform signaling negotiation to determine a data processing manner between the VAL client and the VAL server.

For example, in this embodiment of this application, after signaling negotiation, it is determined to use a SEALDD enabling layer to perform QUIC data processing.

S1305: The VAL client sends a service request message to a SEALDD client.

S1306: The SEALDD client sends a connection or handshake request message to the SEALDD server.

In some embodiments, content of the request message includes identification information allocatable by the SEALDD client for indicating a QUIC connection, for example, an allocatable connection ID(s) or other allocatable identification information.

S1307: The SEALDD server determines, based on the QoS information corresponding to the data packet sets, QUIC encapsulation identifiers corresponding to the data packet sets.

In some embodiments, the encapsulation identifier may include information indicating a QUIC connection, information in a QUIC tunnel header, information in an IP triplet, or information in an IP quintuple.

In other words, the information indicating the QUIC connection may be used as the encapsulation identifier, the information in the QUIC tunnel header may be used as the encapsulation identifier, the information in the IP triplet may be used as the encapsulation identifier, or the information in the IP quintuple may be used as the encapsulation identifier.

The information indicating the QUIC connection includes an allocatable QUIC connection identifier and an identifier, other than the allocatable QUIC connection identifier, that indicates the QUIC connection.

The IP triplet may include information about an IP address, a protocol, and a port.

The IP quintuple may include information about a source IP address, a source port, a destination IP address, a destination port, and a transport layer protocol.

For example, the encapsulation identifier includes information allocatable by a transmission server and/or a transmission client for indicating the QUIC connection.

In other words, the information allocatable by the transmission server and/or the transmission client for indicating the QUIC connection may be used as the encapsulation identifier.

In some embodiments, the transmission server determines the QUIC encapsulation identifiers of the plurality of data packet sets based on transmission requirement information of the plurality of data packet sets and first connection information and/or second connection information.

The first connection information is information allocatable by the transmission server for indicating a QUIC connection, and the first connection information includes a QUIC connection identifier and/or other information indicating the QUIC connection that are/is allocatable by the transmission server. The second connection information is information allocatable by the transmission client for indicating a QUIC connection, and the second connection information includes a QUIC connection identifier and/or other information indicating the QUIC connection that are/is allocatable by the transmission client.

For example, the QUIC encapsulation identifiers of the plurality of data packet sets may be determined based on the transmission requirement information of the plurality of data packet sets, the QUIC connection identifier allocatable by the transmission server, and the QUIC connection identifier allocatable by the transmission client.

QUIC encapsulation identifiers of downlink data packet sets are used as an example. For example, for different QUIC connections, QUIC connection identifiers allocatable by the transmission server are a connection ID #1 and a connection ID #2, and QUIC connection identifiers allocatable by the transmission client are a connection ID #3 and a connection ID #4. In this case, QUIC encapsulation identifiers may include <connection ID #1>, <connection ID #2>, <connection ID #1, connection ID #3>, <connection ID #1, connection ID #4>, <connection ID #2, connection ID #3>, and <connection ID #2, connection ID #4>. The first two encapsulation identifiers each include a source connection identifier (for downlink data packet sets, the source connection identifier is a QUIC connection identifier allocatable by the transmission server), and the last four identifiers each include a source connection identifier and a destination connection identifier (for downlink data packet sets, the destination connection identifier is a QUIC connection identifier allocatable by the transmission client).

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be an encapsulation identifier #1, and a QUIC encapsulation identifier corresponding to the downlink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the downlink data packet set #1 and the QUIC encapsulation identifier corresponding to the data packet set #2 may be <connection ID #1, connection ID #3>, and the QUIC encapsulation identifier corresponding to the downlink data packet set #3 may be <connection ID #1, connection ID #4>.

QUIC encapsulation identifiers of uplink data packet sets are used as an example. For example, for different QUIC connections, QUIC connection identifiers allocatable by the transmission client are a connection ID #1 and a connection ID #2, and QUIC connection identifiers allocatable by the transmission client are a connection ID #3 and a connection ID #4. In this case, QUIC encapsulation identifiers may include <connection ID #3>, <connection ID #4>, <connection ID #3, connection ID #1>, <connection ID #4, connection ID #1>, <connection ID #3, connection ID #2>, and <connection ID #4, connection ID #4>. The first two encapsulation identifiers each include a source connection identifier (for uplink data packet sets, the source connection identifier is a QUIC connection identifier allocatable by the transmission client), and the last four identifiers each include a source connection identifier and a destination connection identifier (for uplink data packet sets, the destination connection identifier is a QUIC connection identifier allocatable by the transmission server).

If a plurality of uplink data packet sets in one uplink service stream correspond to a plurality of different transmission requirements, for example, an uplink data packet set #1 corresponds to transmission requirement information #1, an uplink data packet set #2 corresponds to the transmission requirement information #1, and an uplink data packet set #3 corresponds to transmission requirement information #2, a QUIC encapsulation identifier corresponding to the uplink data packet set #1 and a QUIC encapsulation identifier corresponding to the uplink data packet set #2 may be an encapsulation identifier #1, and a QUIC encapsulation identifier corresponding to the uplink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the uplink data packet set #1 and the QUIC encapsulation identifier corresponding to the data packet set #2 may be <connection ID #3, connection ID #1>, and the QUIC encapsulation identifier corresponding to the uplink data packet set #3 may be <connection ID #4, connection ID #1>.

For a same QUIC connection, there is only one identifier obtained based on a QUIC connection identifier allocatable by the transmission server and/or a QUIC connection identifier allocatable by the transmission client. Therefore, new identifiers, for example, other information indicating the QUIC connection, needs to be further introduced and combined with the identifier, to serve as QUIC encapsulation identifiers of data packet sets with a plurality of different transmission requirements in the same QUIC connection. Therefore, the QUIC encapsulation identifiers of the plurality of data packet sets may be determined based on the transmission requirement information of the plurality of data packet sets, the QUIC connection identifier allocatable by the transmission server, the other information indicating the QUIC connection, the QUIC connection identifier allocatable by the transmission client, and the other information indicating the QUIC connection.

QUIC encapsulation identifiers of downlink data packet sets are used as an example. For example, for a same QUIC connection, an identifier obtained based on QUIC connection identifiers allocatable by the transmission server and the transmission client is a connection ID, other identifiers allocatable by the transmission server are an ID #1 and an ID #2, and other identifiers allocatable by the transmission client are an ID #3 and an ID #4. In this case, encapsulation identifiers may be <connection ID+ID #1>, <connection ID+ID #2>, <connection ID+<ID #1, ID #3>>, <connection ID+<ID #1, ID #4>>, <connection ID+<ID #2, ID #3>>, and <connection ID+<ID #2, ID #4>>. The first two encapsulation identifiers each include the connection ID and another allocatable source connection identifier (for downlink data packet sets, the another source connection identifier is other information allocatable by the transmission server for indicating the QUIC connection), and the last four identifiers each include the connection ID, another source connection identifier, and another destination connection identifier (for downlink data packet sets, the another destination connection identifier is other information allocatable by the transmission client for indicating the QUIC connection).

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be an encapsulation identifier #1, and a QUIC encapsulation identifier corresponding to the downlink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the downlink data packet set #1 and the QUIC encapsulation identifier corresponding to the data packet set #2 may be <connection ID+<ID #1, ID #3>>, and the QUIC encapsulation identifier corresponding to the downlink data packet set #3 may be <connection ID+<ID #1, ID #4>>.

QUIC encapsulation identifiers of uplink data packet sets are used as an example. For example, for a same QUIC connection, an identifier obtained based on a QUIC connection identifier allocatable by the transmission server and/or a QUIC connection identifier allocatable by the transmission client is a connection ID. Other identifiers allocatable by the transmission server are an ID #1 and an ID #2, and other identifiers allocatable by the transmission client are an ID #3 and an ID #4. In this case, encapsulation identifiers may be <connection ID+ID #3>, <connection ID+ID #4>, <connection ID+<ID #3, ID #1>>, <connection ID+<ID #4, ID #1>>, <connection ID+<ID #3, ID #2>>, and <connection ID+<ID #4, ID #2>>. The first two encapsulation identifiers each include the connection ID and another allocatable source connection identifier (for uplink data packet sets, the another source connection identifier is other information allocatable by the transmission client for indicating the QUIC connection), and the last four identifiers each include the connection ID, another source connection identifier, and another destination connection identifier (for uplink data, the another destination connection identifier is other information allocatable by the transmission server for indicating the QUIC connection).

If a plurality of uplink data packet sets in one uplink service stream correspond to a plurality of different transmission requirements, for example, an uplink data packet set #1 corresponds to transmission requirement information #1, an uplink data packet set #2 corresponds to the transmission requirement information #1, and an uplink data packet set #3 corresponds to transmission requirement information #2, a QUIC encapsulation identifier corresponding to the uplink data packet set #1 and a QUIC encapsulation identifier corresponding to the uplink data packet set #2 may be an encapsulation identifier #1, and a QUIC encapsulation identifier corresponding to the uplink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the uplink data packet set #1 and the QUIC encapsulation identifier corresponding to the data packet set #2 may be <connection ID+<ID #3, ID #1>>, and the QUIC encapsulation identifier corresponding to the uplink data packet set #3 may be <connection ID+<ID #4, ID #1>>.

In some embodiments, the QUIC encapsulation identifiers of the plurality of pieces of data may be determined based on the transmission requirement information of the plurality of data packet sets and first IP information and/or second IP information. The first IP information includes an IP address and a port number that are allocatable by the transmission server, and the second IP information includes an IP address and a port number that are allocatable by the transmission client.

In other words, the IP address and the port number that are allocatable by the transmission server and/or the IP address and the port number that are allocatable by the transmission client may be used as the encapsulation identifiers.

QUIC encapsulation identifiers of downlink data packet sets are used as an example. An IP address and port numbers that are allocatable by the transmission server are <IP #1, port #1> and <IP #1, port #2>, and an IP address and port numbers that are allocatable by the transmission client are <IP #2, port #3> and <IP #2, port #4>. In this case, QUIC encapsulation identifiers may include [IP #1, port #1], [IP #1, port #2], [<IP #1, port #1>, <IP #2, port #3>], [<IP #1, port #1>, <IP #2, port #4>], [<IP #1, port #2>, <IP #2, port #3>], and [<IP #1, port #2>, <IP #2, port #4>]. The first two identifiers each include a source address and a source port number (for downlink data packet sets, the source address and the source port number are an IP address and a port number that are allocatable by the transmission server), and the last four identifiers each include a source address and a source port number, and a destination address and a destination port number (for downlink data packet sets, the destination address and the destination port number are an address and a port number that are allocatable by the transmission client).

If a plurality of downlink data packet sets in one downlink service stream correspond to a plurality of different transmission requirements, for example, a downlink data packet set #1 corresponds to transmission requirement information #1, a downlink data packet set #2 corresponds to the transmission requirement information #1, and a downlink data packet set #3 corresponds to transmission requirement information #2, a QUIC encapsulation identifier corresponding to the downlink data packet set #1 and a QUIC encapsulation identifier corresponding to the downlink data packet set #2 may be an encapsulation identifier #1, and a QUIC encapsulation identifier corresponding to the downlink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the downlink data packet set #1 and the QUIC encapsulation identifier corresponding to the data packet set #2 may be [<IP #1, port #1>, <IP #2, port #3>], and the QUIC encapsulation identifier corresponding to the downlink data packet set #3 may be [<IP #1, port #1>, <IP #2, port #4>].

QUIC encapsulation identifiers of uplink data packet sets are used as an example. An IP address and port numbers that are allocatable by the transmission server are <IP #1, port #1> and <IP #1, port #2>, and an IP address and port numbers that are allocatable by the transmission client are <IP #2, port #3> and <IP #2, port #4>. In this case, QUIC encapsulation identifiers may include [IP #2, port #3], [IP #2, port #4], [<IP #2, port #3>, <IP #1, port #1>], [<IP #2, port #4>, <IP #1, port #1>], [<IP #2, port #3>, <IP #1, port #2>], and [<IP #2, port #4>, <IP #1, port #2>]. The first two identifiers each include a source address and a source port number (for uplink data packet sets, the source address and the source port number are an IP address and a port number that are allocatable by the transmission client), and the last four identifiers each include a source address and a source port number, and a destination address and a destination port number (for uplink data packet sets, the destination address and the destination port number are an address and a port number that are allocatable by the transmission server).

If a plurality of uplink data packet sets in one uplink service stream correspond to a plurality of different transmission requirements, for example, an uplink data packet set #1 corresponds to transmission requirement information #1, an uplink data packet set #2 corresponds to the transmission requirement information #1, and an uplink data packet set #3 corresponds to transmission requirement information #2, a QUIC encapsulation identifier corresponding to the uplink data packet set #1 and a QUIC encapsulation identifier corresponding to the uplink data packet set #2 may be an encapsulation identifier #1, and a QUIC encapsulation identifier corresponding to the uplink data packet set #3 may be an encapsulation identifier #2. In this way, two QUIC encapsulation identifiers may be selected from the foregoing QUIC encapsulation identifiers as the encapsulation identifier #1 and the encapsulation identifier #2. For example, the QUIC encapsulation identifier corresponding to the uplink data packet set #1 and the QUIC encapsulation identifier corresponding to the data packet set #2 may be [<IP #2, port #3>, <IP #1, port #1>], and the QUIC encapsulation identifier corresponding to the uplink data packet set #3 may be [<IP #2, port #4>, <IP #1, port #1>].

In this embodiment of this application, all QUIC encapsulation identifiers may be first determined, and then corresponding QUIC encapsulation identifiers are selected and determined from all the QUIC encapsulation identifiers based on data packet sets with different transmission requirements. Alternatively, corresponding QUIC encapsulation identifiers may be directly determined based on data packet sets with different transmission requirements.

S1308: The SEALDD server sends a connection/handshake response message to the SEALDD client.

In some embodiments, content of the response message may include information about an uplink service stream and QUIC encapsulation identifiers corresponding to data packet sets of the uplink service stream, and is used by the SEALDD client to process the data packet sets of the uplink service stream from the VAL client.

S1309: The SEALDD server sends the QUIC encapsulation identifiers and the QoS information that correspond to the data packet sets of the service stream to a PCF.

The SEALDD server sends, to the PCF network element, QUIC encapsulation identifiers and QoS information (for example, QoS importance information) that correspond to data packet sets of an uplink service stream, and/or QUIC encapsulation identifiers and QoS information (for example, QoS importance information) that correspond to data packet sets of a downlink service stream.

If the SEALDD server is trusted by a 5G network, the SEALDD server may directly send, to the PCF network element, the QUIC encapsulation identifiers and the QoS information that correspond to the data packet sets. If the SEALDD server is untrusted by a 5G network, the SEALDD server needs to send, to the PCF network element through an NEF network element, the QUIC encapsulation identifiers and the QoS information that correspond to the data packet sets.

Correspondingly, the PCF network element receives the QUIC encapsulation identifiers and the QoS information that correspond to the data packet sets of the service stream.

S1310: The PCF network element may generate a PCC rule based on the QUIC encapsulation identifiers and the QoS information that correspond to the data packet sets of the service stream.

In other words, the PCC rule may include the QUIC encapsulation identifiers and the QoS information that correspond to the data packet sets.

S1311: The UE initiates a PDU session establishment or modification request to an SMF network element.

S1312: The SMF network element sends a policy request message to the PCF network element, to request to obtain the QUIC encapsulation identifiers corresponding to the data packet sets of the service stream.

In some embodiments, the policy request message may be further used to request to obtain the QoS information corresponding to the data packet sets of the service stream.

S1313: The SMF network element receives a policy response message sent by the PCF network element, and determines QFIs of QoS flows corresponding to the data packet sets of the service stream.

The policy response message includes the QUIC encapsulation identifiers corresponding to the data packet sets of the service stream. The SMF may determine, based on the QUIC encapsulation identifiers corresponding to the data packet sets, the QFIs of the QoS flows corresponding to the data packet sets, that is, QoS flows of data packet sets with a same QUIC encapsulation identifier have a same QFI.

In some embodiments, the policy response message further includes the QoS information corresponding to the data packet sets.

In some embodiments, the SMF network element may further generate a PDR rule based on the QUIC encapsulation identifiers, the QoS information, and the like that correspond to the data packet sets. The PDR rule includes the QUIC encapsulation identifiers and the QoS information that correspond to the data packet sets.

S1314: The SMF network element sends, to the UPF network element, the QUIC encapsulation identifiers corresponding to the data packet sets of the downlink service stream and QFIs of QoS flows corresponding to the data packet sets of the downlink service stream.

In some embodiments, the SMF network element may further send, to the UPF, the QoS information corresponding to the data packet sets.

For example, the SMF network element sends, to the UPF network element, a PDR rule corresponding to the data packet sets and the QFIs of the QoS flows corresponding to the data packet sets. The PDR rule includes the QUIC encapsulation identifiers and the QoS information that correspond to the data packet sets.

S1315: The SMF network element sends, to the UE, the QUIC encapsulation identifiers corresponding to the data packet sets of the uplink service stream and QFIs of QoS flows corresponding to the data packet sets of the uplink service stream.

In some embodiments, the SMF network element sends, to the UE, the QoS information corresponding to the data packet sets of the uplink service stream.

For example, the SMF sends QoS enforcement rule information of the data packet sets to the UE. The QoS enforcement rule information includes a PDR rule (for example, the QUIC encapsulation identifiers and the QoS information) corresponding to the data packet sets and the QFIs of the QoS flows corresponding to the data packet sets.

S1316: The SEALDD server encapsulates the data packet sets of the downlink service stream based on the downlink QUIC encapsulation identifiers.

For example, after PDU session establishment or modification is completed, when the downlink service stream of the VAL server arrives, the SEALDD server may determine a data packet set (for example, determine which data packets belong to a data packet set #1) of the downlink service stream based on service stream protocol description information of the VAL server. Then, the SEALDD server encapsulates the data packet sets of the downlink service stream based on the downlink QUIC encapsulation identifiers.

For example, if a QUIC encapsulation identifier corresponding to a data packet set #1 is <connection ID #1>, the SEALDD server may encapsulate a downlink QUIC data packet for the data packet set from the VAL server based on <connection ID #1>. That is, the encapsulated downlink data packet set #1 carries the QUIC connection identifier <connection ID #1>.

S1317: The SEALDD server sends the encapsulated downlink data packet sets to the UPF network element.

Correspondingly, the UPF network element receives the downlink data packet sets sent by the SEALDD server.

S1318: The UPF network element maps the downlink data packet sets to the QoS flows based on the QUIC encapsulation identifiers in the downlink data packet sets and the QFIs of the QoS flows corresponding to the downlink data packet sets in S1314.

For example, when receiving the downlink data packet sets, the UPF network element may perform QUIC data packet detection and corresponding QFI marking on the downlink data packet sets according to the PDR rule, that is, may determine the QUIC encapsulation identifiers in the downlink data packet sets, and map downlink data packet sets with a same QUIC encapsulation identifier to QoS flows with a same QFI.

S1319: The SEALDD client encapsulates the uplink data packet sets based on the uplink QUIC encapsulation identifiers.

After PDU session establishment or modification is completed, when the uplink data packet sets of the VAL client arrive, the SEALDD client may determine a data packet or a data packet set (for example, determine which data packets belong to a data packet set #3) based on service stream protocol description information of the VAL client. Then, the SEALDD client encapsulates the uplink data packet sets based on the uplink QUIC encapsulation identifiers.

For example, if an uplink QUIC encapsulation identifier corresponding to an uplink data packet set #3 is <connection ID #3>, the SEALDD client may encapsulate an uplink QUIC data packet for the data packet set #3 from the VAL client based on <connection ID #3>. That is, the encapsulated uplink data packet set #3 carries the QUIC connection identifier <connection ID #3>.

S1320: The SEALDD client sends the encapsulated uplink data packet sets to the UE.

Correspondingly, the UE receives the uplink data packet sets sent by the SEALDD client.

S1321: The UE maps the uplink service stream to the QoS flows based on the QUIC encapsulation identifiers in the uplink data packet sets and the identifiers of the QoS flows corresponding to the uplink data packet sets in S1315.

For example, when receiving the uplink data packet sets, the UE may perform QUIC data packet detection and QoS flow identifier marking on the uplink data packet sets, that is, may determine the QUIC encapsulation identifiers in the uplink data packet sets and the QFIs of the QoS flows corresponding to the uplink data packet sets, and map uplink data packet sets with a same QUIC encapsulation identifier to QoS flows with a same QFI.

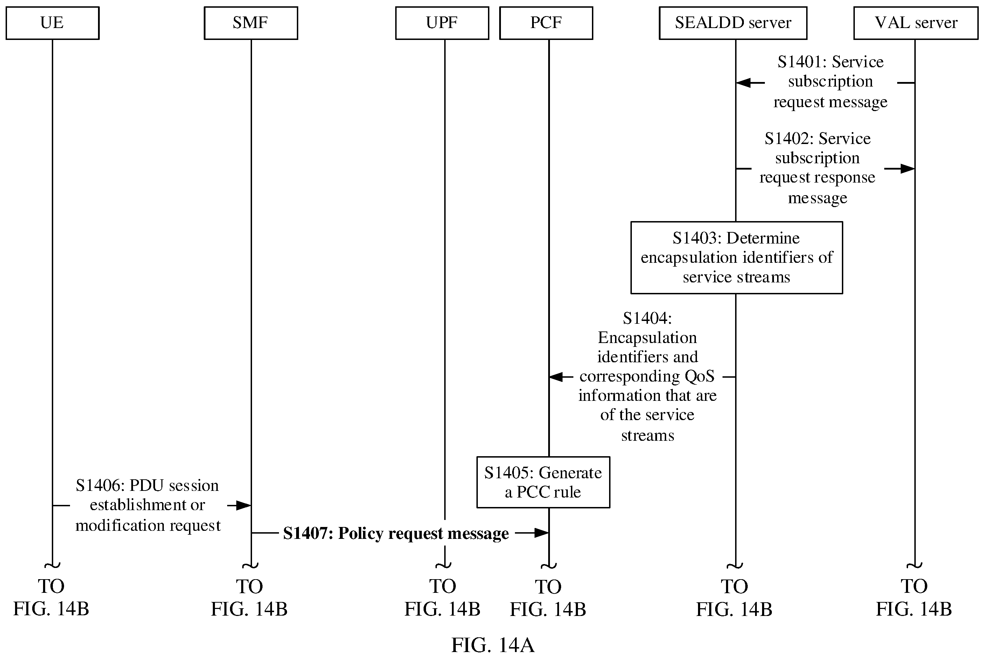

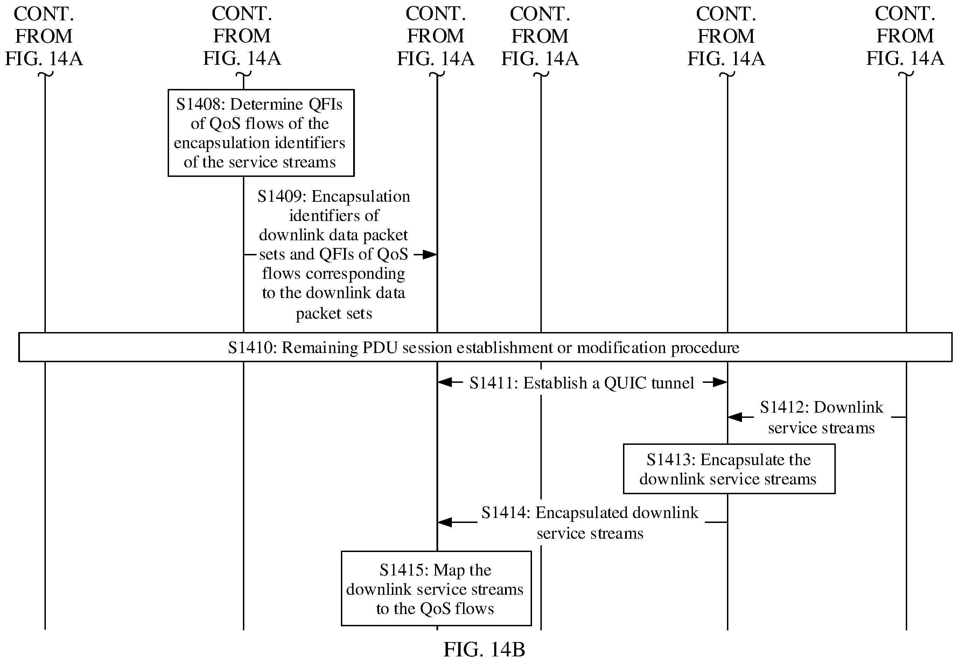

FIG. 14A and FIG. 14B are a diagram of a QUIC data processing method according to an embodiment of this application. For example, FIG. 14A and FIG. 14B show a transmission scenario of a plurality of downlink service streams.

S1401: A VAL server sends a service subscription request message to a SEALDD server.

The request message includes information about the plurality of service streams. For example, the information about the service streams may include descriptor information (for example, IP quintuples) of the service streams, QoS information corresponding to the descriptor information, and the like. The QoS information may include QoS requirement information and/or QoS importance information.

For example, the plurality of service streams include a service stream #1 and a service stream #2. Descriptor information of the service stream #1 is an IP quintuple #1, and corresponds to QoS information #1; and descriptor information of the service stream #2 is an IP quintuple #2, and corresponds to QoS information #2.

S1402: The SEALDD server sends a service subscription request response message to the VAL server.

S1403: The SEALDD server determines, based on the QoS information corresponding to the service streams, QUIC encapsulation identifiers corresponding to the service streams.

In this embodiment of this application, service streams with same QoS information such as a same QoS parameter/same importance correspond to a same QUIC encapsulation identifier; and service streams with different QoS information such as different QoS requirement information/importance information correspond to different QUIC encapsulation identifiers.

For example, a service stream #1 corresponds to QoS information #1, a service stream #2 corresponds to QoS information #2, and a service stream #3 corresponds to the QoS information #1. A QUIC encapsulation identifier corresponding to the service stream #1 and a QUIC encapsulation identifier corresponding to the service stream #3 may be the QoS information #1 or an encapsulation identifier #1, and a QUIC encapsulation identifier corresponding to the service stream #2 is the QoS information #2 or an encapsulation identifier #2.

In some embodiments, the QUIC encapsulation identifier may include information in a QUIC tunnel header. For example, some information in the QUIC tunnel header may be used as the QUIC encapsulation identifier, or QoS information may be encapsulated in the QUIC tunnel header.

S1404: The SEALDD server sends the QUIC encapsulation identifiers and the QoS information that correspond to the service streams to a PCF network element.

If the SEALDD server is trusted by a 5G network, the SEALDD server may directly send, to the PCF network element, the QUIC encapsulation identifiers and the QoS information that correspond to the service streams. If the SEALDD server is untrusted by a 5G network, the SEALDD server needs to send, to the PCF network element through an NEF network element, the QUIC encapsulation identifiers and the QoS information that correspond to the service streams.

Correspondingly, the PCF network element receives the QUIC encapsulation identifiers and the QoS information that correspond to the service streams.

S1405: The PCF network element may generate a PCC rule based on the QUIC encapsulation identifiers and the QoS information that correspond to the service streams.

The PCC rule may include the QUIC encapsulation identifiers and the QoS information that correspond to the service streams.

S1406: A UE initiates a PDU session establishment or modification request to an SMF network element.

S1407: The SMF network element sends a policy request message to the PCF network element, to request to obtain the QUIC encapsulation identifiers corresponding to the service streams.

In some embodiments, the policy request message may be further used to request to obtain the QoS information corresponding to the service streams.

S1408: The SMF network element receives a policy response message sent by the PCF network element, and determines QFIs of QoS flows corresponding to the service streams.

The policy response message includes the QUIC encapsulation identifiers corresponding to the service streams. The SMF network element may determine, based on the QUIC encapsulation identifiers corresponding to the service streams, the QFIs of the QoS flows corresponding to the service streams, that is, QoS flows of service streams with a same QUIC encapsulation identifier have a same QFI.

In some embodiments, the policy response message further includes the QoS information corresponding to the service streams.

In some embodiments, the SMF network element may further generate a PDR rule based on the QUIC encapsulation identifiers, the QoS information, and the like that correspond to the service streams. The PDR rule includes the QUIC encapsulation identifiers and the QoS information that correspond to the service streams.

S1409: The SMF network element sends, to a UPF network element, the QUIC encapsulation identifiers of the service streams and the QFIs of the QoS flows corresponding to the service streams.

In some embodiments, the SMF network element sends, to the UPF network element, the QoS information corresponding to the service streams.

For example, the SMF network element sends, to the UPF network element, the PDR rule corresponding to the service flows and the QFIs of the QoS flows corresponding to the service flows. The PDR rule includes the QUIC encapsulation identifiers corresponding to the service streams.

S1410: The UE completes a remaining PDU session establishment or modification procedure.

S1411: The UPF network element establishes a QUIC tunnel to the SEALDD server.

S1412: The VAL server sends the service streams to the SEALDD server.

S1413: The SEALDD server encapsulates the service streams based on the QUIC encapsulation identifiers corresponding to the service streams.

S1414: The SEALDD server sends the encapsulated service streams to the UPF network element.

S1415: The UPF network element maps the service streams to the QoS flows based on the QUIC encapsulation identifiers in the service streams and the QFIs of the QoS flows corresponding to the service streams in S1409.

When receiving the service streams, the UPF network element may perform QUIC data packet detection and QFI marking on the service streams according to the PDR rule, that is, may determine the QUIC encapsulation identifiers in the service streams, and map service streams with a same QUIC encapsulation identifier to QoS flows with a same QFI.

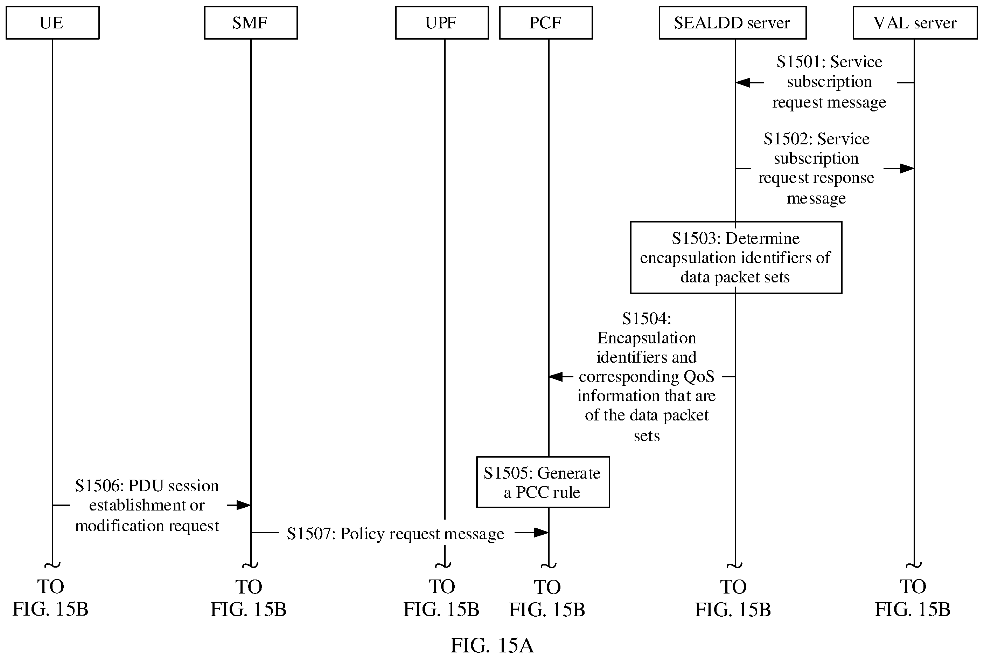

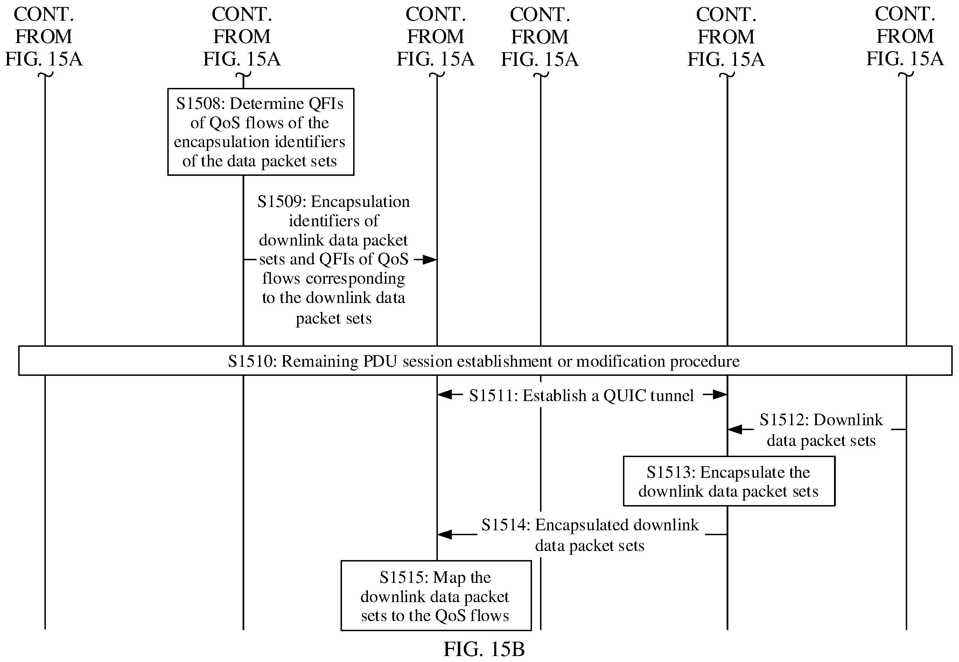

FIG. 15A and FIG. 15B are a diagram of a QUIC data processing method according to an embodiment of this application. For example, FIG. 15A and FIG. 15B show a scenario of a single downlink service stream. The single downlink service stream includes downlink data packet sets with different QoS information.

S1501: A VAL server sends a service subscription request message to a SEALDD server.

The request message may include information about the service stream. For example, the information about the service stream may include protocol description information of the service stream (the service stream is transmitted by using the RTP), or the information about the service stream may include protocol description information of the service stream, QoS information of the data packet sets that corresponds to the protocol description information, and the like. The QoS information may include QoS requirement information and/or QoS importance information.

For example, the service stream includes a data packet set #1 and a data packet set #2. The data packet set #1 corresponds to QoS information #1, and the data packet set #2 corresponds to QoS information #2.

S1502: The SEALDD server sends a service subscription request response message to the VAL server.

S1503: The SEALDD server determines, based on the QoS information corresponding to the data packet sets, QUIC encapsulation identifiers corresponding to the data packet sets.

In this embodiment of this application, data packet sets with same QoS information such as same QoS requirement information and/or importance information correspond to a same QUIC encapsulation identifier; and data packet sets with different QoS information such as different QoS requirement information/importance information correspond to different QUIC encapsulation identifiers.

For example, a data packet set #1 corresponds to QoS information #1, a data packet set #2 corresponds to QoS information #2, and a data packet set #3 corresponds to the QoS information #1. A QUIC encapsulation identifier corresponding to the data packet set #1 and a QUIC encapsulation identifier corresponding to the data packet set #3 may be an encapsulation identifier #1, and a QUIC encapsulation identifier corresponding to the data packet set #2 is an encapsulation identifier #2.

In some embodiments, the QUIC encapsulation identifier may include information in a QUIC tunnel header. For example, some information in the QUIC tunnel header may be used as the QUIC encapsulation identifier.

S1504: The SEALDD server sends the QUIC encapsulation identifiers and the QoS information that correspond to the data packet sets to a PCF network element.

If the SEALDD server is trusted by a 5G network, the SEALDD server may directly send, to the PCF network element, the QUIC encapsulation identifiers and the QoS information that correspond to the data packet sets. If the SEALDD server is untrusted by a 5G network, the SEALDD server needs to send, to the PCF network element through an NEF network element, the QUIC encapsulation identifiers and the QoS information that correspond to the data packet sets.

Correspondingly, the PCF network element receives the QUIC encapsulation identifiers and the QoS information that correspond to the data packet sets.

S1505: The PCF network element may generate a PCC rule based on the QUIC encapsulation identifiers and the QoS information that correspond to the data packet sets.

The PCC rule may include the QUIC encapsulation identifiers and the QoS information that correspond to the data packet sets.

S1506: A UE initiates a PDU session establishment or modification request to an SMF network element.

S1507: The SMF network element sends policy request information to the PCF network element, to request to obtain the QUIC encapsulation identifiers corresponding to the data packet sets.

In some embodiments, the policy request message may be further used to request to obtain the QoS information corresponding to the data packet sets.

S1508: The SMF network element receives a policy response message sent by the PCF network element, and determines QFIs of QoS flows corresponding to the data packet sets.

The policy response message includes the QUIC encapsulation identifiers corresponding to the data packet sets. The SMF network element may determine, based on the QUIC encapsulation identifiers corresponding to the data packet sets, the QFIs of the QoS flows corresponding to the data packet sets, that is, QoS flows of data packet sets with a same QUIC encapsulation identifier have a same QFI.

In some embodiments, the policy response message further includes the QoS information corresponding to the data packet sets.

In some embodiments, the SMF network element may further generate a PDR rule based on the QUIC encapsulation identifiers, the QoS information, and the like that correspond to the data packet sets. The PDR rule includes the QUIC encapsulation identifiers corresponding to the data packet sets.

S1509: The SMF network element sends, to a UPF network element, the QUIC encapsulation identifiers of the data packet sets and the QFIs of the QoS flows corresponding to the data packet sets.

In some embodiments, the SMF network element sends, to the UPF network element, the data packets/the QoS information corresponding to the data packets.

For example, the SMF network element sends, to the UPF network element, the data packets/the PDR rule corresponding to the data packets and the QFIs of the QoS flows corresponding to the data packets. The PDR rule includes the data packets/the QUIC encapsulation identifiers and the QoS information that correspond to the data packets.

S1510: The UE completes a remaining PDU session establishment or modification procedure.

S1511: The UPF network element establishes a QUIC tunnel to the SEALDD server.

S1512: The VAL server sends the data packet sets to the SEALDD server.

S1513: The SEALDD server encapsulates the data packet sets based on the QUIC encapsulation identifiers of the data packet sets.

For example, the SEALDD server may determine a data packet set (for example, determine which data packets belong to a data packet set #1) of the downlink service stream based on service stream protocol description information of the VAL server, and then encapsulate the data packet sets based on the QUIC encapsulation identifiers of the data packet sets.

S1514: The SEALDD server sends the encapsulated data packet sets to the UPF network element.

S1515: The UPF network element maps the data packet sets to the QoS flows based on the QUIC encapsulation identifiers in the data packet sets and the QFIs of the QoS flows corresponding to the data packet sets.

When receiving the data packet sets, the UPF network element may perform QUIC data packet detection and QFI marking on the data packet sets according to the PDR rule, that is, may determine the QUIC encapsulation identifiers in the data packet sets, and map data packet sets with a same QUIC encapsulation identifier to QoS flows with a same QFI.

In embodiments of this application, a message for carrying the information about the plurality of pieces of data, such as the information about the service stream, the QUIC encapsulation identifier, the identifier of the QoS flow, the second connection information, or the second IP information, is merely used as an example, and is not limited. For example, in S1202, the VAL server may send the service subscription request message to the SEALDD server to carry the information about the service streams; or another message may be used to carry the information about the service streams.

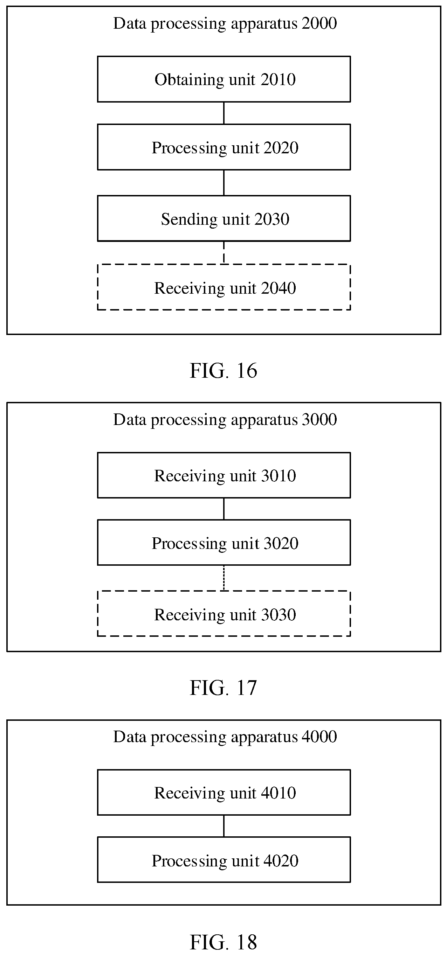

The foregoing describes the data transmission methods provided in embodiments of this application with reference to FIG. 1 to FIG. 15A and FIG. 15B. The following describes apparatus embodiments in embodiments of this application with reference to FIG. 16 to FIG. 21. It should be understood that the descriptions of the method embodiments correspond to descriptions of the apparatus embodiments. Therefore, for a part that is not described in detail, refer to the foregoing descriptions.

FIG. 16 is a block diagram of a data processing apparatus according to an embodiment of this application. The apparatus 2000 includes an obtaining unit 2010, a processing unit 2010, and a sending unit 2020. The obtaining unit 2010 is configured to obtain data, the processing unit 2020 is configured to process the data, and the sending unit 2030 may implement a corresponding communication function.

The obtaining unit 2010 is configured to obtain transmission requirement information of a plurality of pieces of data, where one of the plurality of pieces of data is a service stream or a data packet set, and the data packet set includes at least one data packet.

The processing unit 2020 is configured to determine QUIC encapsulation identifiers of the plurality of pieces of data based on the transmission requirement information of the plurality of pieces of data, where there is a correspondence between the transmission requirement information of the plurality of pieces of data and the QUIC encapsulation identifiers of the plurality of pieces of data.

The sending unit 2030 is configured to send the QUIC encapsulation identifiers of the plurality of pieces of data to a first network element, where the QUIC encapsulation identifiers of the plurality of pieces of data are used to determine identifiers of QoS flows corresponding to the QUIC encapsulation identifiers of the plurality of pieces of data.

In some embodiments, the plurality of pieces of data include a first service stream and a second service stream, and the processing unit 2020 is further configured to: when transmission requirement information of the first service stream is the same as transmission requirement information of the second service stream, determine that a QUIC encapsulation identifier of the first service stream and a QUIC encapsulation identifier of the second service stream are a first encapsulation identifier; or when transmission requirement information of the first service stream is different from transmission requirement information of the second service stream, determine that a QUIC encapsulation identifier of the first service stream and a QUIC encapsulation identifier of the second service stream are respectively a second encapsulation identifier and a third encapsulation identifier.

In some embodiments, the plurality of pieces of data include a first data packet set and a second data packet set of a same service stream, and the processing unit 2020 is further configured to: when transmission requirement information of the first data packet set is the same as transmission requirement information of the second data packet set, determine that a QUIC encapsulation identifier of the first data packet set and a QUIC encapsulation identifier of the second data packet set are a first encapsulation identifier; or when transmission requirement information of the first data packet set is different from transmission requirement information of the second data packet set, determine that a QUIC encapsulation identifier of the first data packet set and a QUIC encapsulation identifier of the second data packet set are respectively a second encapsulation identifier and a third encapsulation identifier.

In some embodiments, the apparatus 2000 further includes a receiving unit 2040, and the receiving unit 2040 is configured to receive information about the plurality of pieces of data from an application server, where the information about the plurality of pieces of data includes the transmission requirement information of the plurality of pieces of data; or the receiving unit 2040 is configured to receive information about the plurality of pieces of data from an application server, where the information about the plurality of pieces of data includes description information of the plurality of pieces of data and/or transmission requirement information corresponding to the description information; and the processing unit 2030 is configured to determine the transmission requirement information of the plurality of pieces of data based on the information about the plurality of pieces of data.

In some embodiments, the QUIC encapsulation identifiers of the plurality of pieces of data include information allocatable by a transmission server and/or a transmission client for indicating a QUIC connection; or the QUIC encapsulation identifiers of the plurality of pieces of data include an IP address and a port number that are allocatable by a transmission server, and/or an IP address and a port number that are allocatable by a transmission client.

In some embodiments, the processing unit 2020 is configured to: determine the QUIC encapsulation identifiers of the plurality of pieces of data based on the transmission requirement information of the plurality of pieces of data and first connection information; determine the QUIC encapsulation identifiers of the plurality of pieces of data based on the transmission requirement information of the plurality of pieces of data and second connection information; or determine the QUIC encapsulation identifiers of the plurality of pieces of data based on the transmission requirement information of the plurality of pieces of data, first connection information, and second connection information, where the first connection information is information allocatable by the transmission server for indicating a QUIC connection, the first connection information includes a QUIC connection identifier and/or other information indicating the QUIC connection that are/is allocatable by the transmission server, the second connection information is information allocatable by the transmission client for indicating a QUIC connection, and the second connection information includes a QUIC connection identifier and/or another identifier indicating the QUIC connection that are/is allocatable by the transmission client.

In some embodiments, the receiving unit 2040 is further configured to receive the second connection information sent by the transmission client.

In some embodiments, the processing unit 2020 is configured to: determine the QUIC encapsulation identifiers of the plurality of pieces of data based on the transmission requirement information of the plurality of pieces of data and first IP information; determine the QUIC encapsulation identifiers of the plurality of pieces of data based on the transmission requirement information of the plurality of pieces of data and second IP information; or determine the QUIC encapsulation identifiers of the plurality of pieces of data based on the transmission requirement information of the plurality of pieces of data, first IP transmission information, and second IP information, where the first IP information includes an IP address and a port number that are allocatable by the transmission server, and the second IP information includes an IP address and a port number that are allocatable by the transmission client.

In some embodiments, the receiving unit 2040 is further configured to receive the second IP information sent by the transmission client.

In some embodiments, the QUIC encapsulation identifiers of the plurality of pieces of data include information in a QUIC tunnel header.

In some embodiments, the sending unit 2030 is configured to send the transmission requirement information of the plurality of pieces of data to the first network element.

In some embodiments, the receiving unit 2040 is further configured to: receive the plurality of pieces of data from the application server, where the plurality of pieces of data are downlink data; and encapsulate the plurality of pieces of data by using the QUIC encapsulation identifiers of the plurality of pieces of data, to obtain the plurality of pieces of encapsulated data.

In some embodiments, the sending unit 2030 is configured to send the plurality of pieces of encapsulated data to a second network element, to map the plurality of pieces of encapsulated data to the QoS flows corresponding to the QUIC encapsulation identifiers of the plurality of pieces of data, where the second network element includes a network element responsible for a user plane function.

In some embodiments, the sending unit 2030 is configured to send the QUIC encapsulation identifiers of the plurality of pieces of data to the transmission client, to encapsulate the plurality of pieces of data through the transmission client by using the QUIC encapsulation identifiers of the plurality of pieces of data, where the plurality of pieces of data are uplink data.

In some embodiments, the application server includes a VAL server.

In some embodiments, the transmission client includes a SEALDD client, and the transmission server includes a SEALDD server.

In some embodiments, the first network element includes a network element responsible for session management, and the identifiers of the QoS flows corresponding to the QUIC encapsulation identifiers of the plurality of pieces of data are determined by the first network element.

In some embodiments, the first network element includes a network element responsible for network capability exposure or a network element responsible for policy control.

FIG. 17 is a block diagram of a data processing apparatus according to an embodiment of this application. The apparatus 3000 includes a receiving unit 3010 and a processing unit 3020. The receiving unit 3010 may implement a corresponding communication function, and the processing unit 3020 is configured to process data.

The receiving unit 3010 is configured to receive QUIC encapsulation identifiers of a plurality of pieces of data sent by a transmission server, where the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data includes a service stream or a data packet set, and the data packet set includes at least one data packet.

The processing unit is configured to determine, based on the QUIC encapsulation identifiers of the plurality of pieces of data, identifiers of QoS flows corresponding to the QUIC encapsulation identifiers of the plurality of pieces of data.

In some embodiments, the plurality of pieces of data include a first service stream and a second service stream, a QUIC encapsulation identifier of the first service stream and a QUIC encapsulation identifier of the second service stream are a first encapsulation identifier, and transmission requirement information of the first service stream is the same as transmission requirement information of the second service stream; or a QUIC encapsulation identifier of the first service stream and a QUIC encapsulation identifier of the second service stream are respectively a second encapsulation identifier and a third encapsulation identifier, and transmission requirement information of the first service stream is different from transmission requirement information of the second service stream.

In some embodiments, the plurality of pieces of data include a first data packet set and a second data packet set that are of a same service stream, a QUIC encapsulation identifier of the first data packet set and a QUIC encapsulation identifier of the second data packet set are a first encapsulation identifier, and transmission requirement information of the first data packet set is the same as transmission requirement information of the second data packet set; or a QUIC encapsulation identifier of the first data packet set and a QUIC encapsulation identifier of the second data packet set are respectively a second encapsulation identifier and a third encapsulation identifier, and transmission requirement information of the first data packet set is different from transmission requirement information of the second data packet set.

In some embodiments, information about the plurality of pieces of data includes the transmission requirement information of the plurality of pieces of data, and the information about the plurality of pieces of data is from an application server; or the transmission requirement information of the plurality of pieces of data is determined based on the information about the plurality of pieces of data, and the information about the plurality of pieces of data includes description information of the plurality of pieces of data and/or transmission requirement information corresponding to the description information.

In some embodiments, the QUIC encapsulation identifiers of the plurality of pieces of data include information allocatable by a transmission server and/or a transmission client for indicating a QUIC connection; the QUIC encapsulation identifiers of the plurality of pieces of data include an IP address and a port number that are allocatable by the transmission server, and/or an IP address and a port number that are allocatable by a transmission client; or the QUIC encapsulation identifiers of the plurality of pieces of data include information in a QUIC tunnel header.

In some embodiments, the QUIC encapsulation identifiers of the plurality of pieces of data are determined based on the transmission requirement information of the plurality of pieces of data and first connection information; the QUIC encapsulation identifiers of the plurality of pieces of data are determined based on the transmission requirement information of the plurality of pieces of data and second connection information; or the QUIC encapsulation identifiers of the plurality of pieces of data are determined based on the transmission requirement information of the plurality of pieces of data, first connection information, and second connection information, where the first connection information is information allocatable by the transmission server for indicating a QUIC connection, the first connection information includes a QUIC connection identifier and/or other information indicating the QUIC connection that are/is allocatable by the transmission server, the second connection information is information allocatable by the transmission client for indicating a QUIC connection, and the second connection information includes a QUIC connection identifier and/or another identifier indicating the QUIC connection that are/is allocatable by the transmission client.

In some embodiments, the second connection information is from the transmission client.

In some embodiments, the QUIC encapsulation identifiers of the plurality of pieces of data are determined based on the transmission requirement information of the plurality of pieces of data and first IP information; the QUIC encapsulation identifiers of the plurality of pieces of data are determined based on the transmission requirement information of the plurality of pieces of data and second IP information; or the QUIC encapsulation identifiers of the plurality of pieces of data are determined based on the transmission requirement information of the plurality of pieces of data, first IP information, and second IP information, where the first IP information includes an IP address and a port number that are allocatable by the transmission server, and the second IP information includes an IP address and a port number that are allocatable by the transmission client.

In some embodiments, the second IP information is from the transmission client.

In some embodiments, the receiving unit 3020 is further configured to receive the transmission requirement information of the plurality of pieces of data sent by the transmission server.

In some embodiments, the application server includes a VAL server.

In some embodiments, the transmission client includes a SEALDD client, and the transmission server includes a SEALDD server.

In some embodiments, the apparatus 3000 further includes a sending unit 3030, configured to send, to a second network element, the identifiers of the QoS flows corresponding to the QUIC encapsulation identifiers of the plurality of pieces of data, where the second network element includes a network element responsible for a user plane function.

FIG. 18 is a block diagram of a data processing apparatus according to an embodiment of this application. The apparatus 4000 includes a receiving unit 4010 and a processing unit 4020. The receiving unit 4010 may implement a corresponding communication function, and the processing unit 4020 is configured to process data.

The receiving unit 4010 is configured to receive a plurality of pieces of encapsulated data sent by a transmission server, where the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data includes a service stream or a data packet set, and the data packet set includes at least one data packet.

The processing unit 4020 is configured to map the plurality of pieces of encapsulated data to QoS flows corresponding to the QUIC encapsulation identifiers of the plurality of pieces of data.

In some embodiments, the receiving unit 4010 is further configured to receive, from a first network element, identifiers of the QoS flows corresponding to the QUIC encapsulation identifiers of the plurality of pieces of data, where the first network element includes a network element responsible for session management.

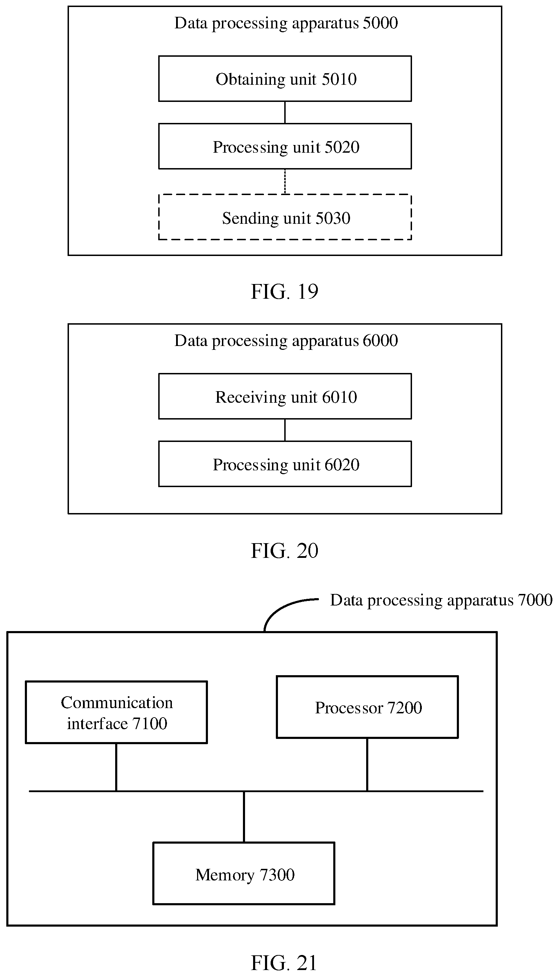

FIG. 19 is a block diagram of a data processing apparatus according to an embodiment of this application. The apparatus 5000 includes an obtaining unit 5010, a processing unit 5020, and a sending unit 5030. The obtaining unit 5010 is configured to obtain required data information, the processing unit 5020 is configured to process data, and the sending unit 5030 may implement a corresponding communication function.

The obtaining unit 5010 is configured to: obtain a plurality of pieces of data, where one of the plurality of pieces of data is a service stream or a data packet set, the data packet set includes at least one data packet, and the plurality of pieces of data are uplink data; and

obtain QUIC encapsulation identifiers of the plurality of pieces of data, where the QUIC encapsulation identifiers of the plurality of pieces of data are determined based on transmission requirement information of the plurality of pieces of data, and there is a correspondence between the transmission requirement information of the plurality of pieces of data and the QUIC encapsulation identifiers of the plurality of pieces of data.

The processing unit 5020 is configured to encapsulate the plurality of pieces of data based on the QUIC encapsulation identifiers of the plurality of pieces of data, to obtain the plurality of pieces of encapsulated data.

The sending unit 5030 is configured to send the plurality of pieces of encapsulated data to a user equipment, to map the plurality of pieces of encapsulated data to QoS flows corresponding to the QUIC encapsulation identifiers of the plurality of pieces of data.

In some embodiments, the apparatus 5000 further includes a receiving unit 5040, configured to receive the plurality of pieces of data from an application client.

In some embodiments, the receiving unit 5040 is further configured to receive the QUIC encapsulation identifiers of the plurality of pieces of data from a transmission server.

In some embodiments, the application client includes a VAL client.

FIG. 20 is a block diagram of a data processing apparatus according to an embodiment of this application. The apparatus 6000 includes a receiving unit 6010 and a processing unit 6020. The receiving unit 6010 may implement a corresponding communication function, and the processing unit 6020 is configured to process data.

The receiving unit 6010 is configured to receive a plurality of pieces of encapsulated data sent by a transmission client, where the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data is a service stream or a data packet set, the data packet set includes at least one data packet, and the plurality of pieces of data are uplink data.

The processing unit 6020 is configured to map the plurality of pieces of encapsulated data to QoS flows corresponding to the QUIC encapsulation identifiers of the plurality of pieces of data.

In some embodiments, the receiving unit 6010 is further configured to receive, from a first network element, identifiers of the QoS flows corresponding to the QUIC encapsulation identifiers of the plurality of pieces of data, where the first network element includes a network element responsible for network capability exposure.

FIG. 21 is a block diagram of another data processing apparatus according to an embodiment of this application. The communication apparatus 7000 shown in FIG. 21 may include a communication interface 7100, a processor 7200, and a memory 7300. The communication interface 7100, the processor 7200, and the memory 7300 communicate with each other through an internal connection path. The memory 7300 is configured to store instructions. The processor 7200 is configured to execute the instructions stored in the memory 7300, to control the communication interface 7100 to send a signal and/or receive a signal.

Optionally, the memory 7300 may be coupled to the processor 7200 through an interface, or may be integrated with the processor 7200.

It should be noted that the communication interface 7100 uses a transceiver apparatus, for example, but not limited to, a transceiver, to implement communication between the data processing apparatus and another device or a communication network. The communication interface 7100 may further include an input/output interface (input/output interface).

In some embodiments, the data processing apparatus may be a transmission server.

In some embodiments, the data processing apparatus may be the first network element.

In some embodiments, the data processing apparatus may be a second network element.

In some embodiments, the data processing apparatus may be a transmission client.

In some embodiments, the data processing apparatus may be a user equipment.

In an implementation process, steps of the foregoing methods may be completed by using an integrated logic circuit of hardware in the processor 7200 or instructions in a form of software. The methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 7300, and the processor 7200 reads information in the memory 7300 and completes the steps of the method in combination with hardware of the processor. To avoid repetition, details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that in embodiments of this application, the memory may include a read-only memory and a random access memory, and provide an instruction and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside in a process and/or an execution thread, and a component may be located on one computer and/or distributed between two or more computers. In addition, these components may be executed from various computer-readable media that store various data structures. For example, the components may perform communication by using a local process and/or a remote process and based on a signal with one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

## Claims

1. A data processing method, comprising:
obtaining transmission requirement information of a plurality of pieces of data, wherein one of the plurality of pieces of data is a data stream or a data packet set, and the data packet set comprises at least one data packet;
determining QUIC encapsulation identifiers of the plurality of pieces of data based on the transmission requirement information of the plurality of pieces of data, wherein there is a correspondence between the transmission requirement information of the plurality of pieces of data and the QUIC encapsulation identifiers of the plurality of pieces of data; and
sending the QUIC encapsulation identifiers of the plurality of pieces of data to a first network element, wherein the QUIC encapsulation identifiers of the plurality of pieces of data are used to determine identifiers of QoS flows corresponding to the QUIC encapsulation identifiers of the plurality of pieces of data.

2. The method according to claim 1, wherein the plurality of pieces of data comprise a first service stream and a second service stream, and determining the QUIC encapsulation identifiers of the plurality of pieces of data based on the transmission requirement information of the plurality of pieces of data comprises:
when transmission requirement information of the first service stream is the same as transmission requirement information of the second service stream, determining that a QUIC encapsulation identifier of the first service stream and a QUIC encapsulation identifier of the second service stream are a first encapsulation identifier; or
when transmission requirement information of the first service stream is different from transmission requirement information of the second service stream, determining that a QUIC encapsulation identifier of the first service stream and a QUIC encapsulation identifier of the second service stream are respectively a second encapsulation identifier and a third encapsulation identifier.

3. The method according to claim 1, wherein the plurality of pieces of data comprise a first data packet set and a second data packet set that are of a same service stream, and determining the QUIC encapsulation identifiers of the plurality of pieces of data based on the transmission requirement information of the plurality of pieces of data comprises:
when transmission requirement information of the first data packet set is the same as transmission requirement information of the second data packet set, determining that a QUIC encapsulation identifier of the first data packet set and a QUIC encapsulation identifier of the second data packet set are a first encapsulation identifier; or
when transmission requirement information of the first data packet set is different from transmission requirement information of the second data packet set, determining that a QUIC encapsulation identifier of the first data packet set and a QUIC encapsulation identifier of the second data packet set are respectively a second encapsulation identifier and a third encapsulation identifier.

4. The method according to any one of claims 1 to 3, wherein obtaining the transmission requirement information of the plurality of pieces of data comprises:
receiving information about the plurality of pieces of data from an application server, wherein the information about the plurality of pieces of data comprises the transmission requirement information of the plurality of pieces of data; or
receiving information about the plurality of pieces of data from an application server, wherein the information about the plurality of pieces of data comprises description information of the plurality of pieces of data and/or transmission requirement information corresponding to the description information; and
determining the transmission requirement information of the plurality of pieces of data based on the information about the plurality of pieces of data.

5. The method according to any one of claims 1 to 4, wherein the QUIC encapsulation identifiers of the plurality of pieces of data comprise information allocatable by a transmission server and/or a transmission client for indicating a QUIC connection; or
the QUIC encapsulation identifiers of the plurality of pieces of data comprise an IP address and a port number that are allocatable by a transmission server, and/or an IP address and a port number that are allocatable by a transmission client.

6. The method according to claim 5, wherein determining the QUIC encapsulation identifiers of the plurality of pieces of data based on the transmission requirement information of the plurality of pieces of data comprises:
determining the QUIC encapsulation identifiers of the plurality of pieces of data based on the transmission requirement information of the plurality of pieces of data and first connection information;
determining the QUIC encapsulation identifiers of the plurality of pieces of data based on the transmission requirement information of the plurality of pieces of data and second connection information; or
determining the QUIC encapsulation identifiers of the plurality of pieces of data based on the transmission requirement information of the plurality of pieces of data, first connection information, and second connection information, wherein
the first connection information is information allocatable by the transmission server for indicating a QUIC connection, the first connection information comprises a QUIC connection identifier and/or other information indicating the QUIC connection that are/is allocatable by the transmission server, the second connection information is information allocatable by the transmission client for indicating a QUIC connection, and the second connection information comprises a QUIC connection identifier and/or another identifier indicating the QUIC connection that are/is allocatable by the transmission client.

7. The method according to claim 6, wherein before determining the QUIC encapsulation identifiers of the plurality of pieces of data based on the transmission requirement information of the plurality of pieces of data and the second connection information, or before determining the QUIC encapsulation identifiers of the plurality of pieces of data based on the transmission requirement information of the plurality of pieces of data, the first connection information, and the second connection information, the method further comprises:
receiving the second connection information sent by the transmission client.

8. The method according to claim 5, wherein determining the QUIC encapsulation identifiers of the plurality of pieces of data based on the transmission requirement information of the plurality of pieces of data comprises:
determining the QUIC encapsulation identifiers of the plurality of pieces of data based on the transmission requirement information of the plurality of pieces of data and first IP information;
determining the QUIC encapsulation identifiers of the plurality of pieces of data based on the transmission requirement information of the plurality of pieces of data and second IP information; or
determining the QUIC encapsulation identifiers of the plurality of pieces of data based on the transmission requirement information of the plurality of pieces of data, first IP information, and second IP information, wherein
the first IP information comprises an IP address and a port number that are allocatable by the transmission server, and the second IP information comprises an IP address and a port number that are allocatable by the transmission client.

9. The method according to claim 8, wherein before determining the QUIC encapsulation identifiers of the plurality of pieces of data based on the transmission requirement information of the plurality of pieces of data and the second IP information, or before determining the QUIC encapsulation identifiers of the plurality of pieces of data based on the transmission requirement information of the plurality of pieces of data, the first IP information, and the second IP information, the method further comprises:
receiving the second IP information sent by the transmission client.

10. The method according to any one of claims 1 to 4, wherein the QUIC encapsulation identifiers of the plurality of pieces of data comprise information in a QUIC tunnel header.

11. The method according to any one of claims 1 to 10, wherein the method further comprises:
sending the transmission requirement information of the plurality of pieces of data to the first network element.

12. The method according to any one of claims 1 to 11, wherein the method further comprises:
receiving the plurality of pieces of data from the application server, wherein the plurality of pieces of data are downlink data; and
encapsulating the plurality of pieces of data by using the QUIC encapsulation identifiers of the plurality of pieces of data, to obtain the plurality of pieces of encapsulated data.

13. The method according to claim 12, wherein the method further comprises:
sending the plurality of pieces of encapsulated data to a second network element, to map the plurality of pieces of encapsulated data to the QoS flows corresponding to the QUIC encapsulation identifiers of the plurality of pieces of data, wherein the second network element comprises a network element responsible for a user plane function.

14. The method according to any one of claims 1 to 10, wherein the method further comprises:
sending the QUIC encapsulation identifiers of the plurality of pieces of data to the transmission client, to encapsulate the plurality of pieces of data through the transmission client by using the QUIC encapsulation identifiers of the plurality of pieces of data, wherein the plurality of pieces of data are uplink data.

15. The method according to claim 4 or 12, wherein the application server comprises a VAL server.

16. The method according to any one of claims 5 to 9, wherein the transmission client comprises a SEALDD client, and the transmission server comprises a SEALDD server.

17. The method according to any one of claims 1 to 16, wherein the first network element comprises a network element responsible for session management, and the identifiers of the QoS flows corresponding to the QUIC encapsulation identifiers of the plurality of pieces of data are determined by the first network element.

18. The method according to any one of claims 1 to 16, wherein the first network element comprises a network element responsible for network capability exposure or a network element responsible for policy control.

19. A data processing method, comprising:
receiving QUIC encapsulation identifiers of a plurality of pieces of data sent by a transmission server, wherein the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data comprises a service stream or a data packet set, and the data packet set comprises at least one data packet; and
determining, based on the QUIC encapsulation identifiers of the plurality of pieces of data, identifiers of QoS flows corresponding to the QUIC encapsulation identifiers of the plurality of pieces of data.

20. The method according to claim 19, wherein the method further comprises:
receiving the transmission requirement information of the plurality of pieces of data sent by the transmission server.

21. The method according to claim 19 or 20, wherein the method further comprises:
sending, to a second network element, the identifiers of the QoS flows corresponding to the QUIC encapsulation identifiers of the plurality of pieces of data, wherein the second network element comprises a network element responsible for a user plane function.

22. A data processing method, comprising:
receiving a plurality of pieces of encapsulated data sent by a transmission server, wherein the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data comprises a service stream or a data packet set, and the data packet set comprises at least one data packet; and
mapping the plurality of pieces of encapsulated data to QoS flows corresponding to the QUIC encapsulation identifiers of the plurality of pieces of data.

23. The method according to claim 22, wherein before mapping the plurality of pieces of encapsulated data to the QoS flows corresponding to the QUIC encapsulation identifiers of the plurality of pieces of data, the method further comprises:
receiving, from a first network element, identifiers of the QoS flows corresponding to the QUIC encapsulation identifiers of the plurality of pieces of data, wherein the first network element comprises a network element responsible for session management.

24. A data processing method, comprising:
obtaining a plurality of pieces of data, wherein one of the plurality of pieces of data is a service stream or a data packet set, the data packet set comprises at least one data packet, and the plurality of pieces of data are uplink data;
obtaining QUIC encapsulation identifiers of the plurality of pieces of data, wherein the QUIC encapsulation identifiers of the plurality of pieces of data are determined based on transmission requirement information of the plurality of pieces of data, and there is a correspondence between the transmission requirement information of the plurality of pieces of data and the QUIC encapsulation identifiers of the plurality of pieces of data;
encapsulating the plurality of pieces of data based on the QUIC encapsulation identifiers of the plurality of pieces of data, to obtain the plurality of pieces of encapsulated data; and
sending the plurality of pieces of encapsulated data to a user equipment, to map the plurality of pieces of encapsulated data to QoS flows corresponding to the QUIC encapsulation identifiers of the plurality of pieces of data.

25. The method according to claim 24, wherein obtaining the plurality of pieces of data comprises:
receiving the plurality of pieces of data from an application client.

26. The method according to claim 24 or 25, wherein obtaining the QUIC encapsulation identifiers of the plurality of pieces of data comprises:
receiving the QUIC encapsulation identifiers of the plurality of pieces of data from a transmission server.

27. The method according to claim 26, wherein the application client comprises a VAL client.

28. A data processing method, comprising:
receiving a plurality of pieces of encapsulated data sent by a transmission client, wherein the plurality of pieces of encapsulated data are obtained after encapsulating the plurality of pieces of data by using QUIC encapsulation identifiers of the plurality of pieces of data, the QUIC encapsulation identifiers of the plurality of pieces of data are determined based on transmission requirement information of the plurality of pieces of data, there is a correspondence between the transmission requirement information of the plurality of pieces of data and the QUIC encapsulation identifiers of the plurality of pieces of data, one of the plurality of pieces of data is a service stream or a data packet set, the data packet set comprises at least one data packet, and the plurality of pieces of data are uplink data; and
mapping the plurality of pieces of encapsulated data to QoS flows corresponding to the QUIC encapsulation identifiers of the plurality of pieces of data.

29. The method according to claim 28, wherein before mapping the plurality of pieces of encapsulated data to the QoS flows of the plurality of pieces of data, the method further comprises:
receiving, from a first network element, identifiers of the QoS flows corresponding to the QUIC encapsulation identifiers of the plurality of pieces of data, wherein the first network element comprises a network element responsible for network capability exposure.

30. A data processing apparatus, comprising at least one processor, wherein the at least one processor is coupled to a memory, and is configured to read and execute instructions in the memory, to perform the method according to any one of claims 1 to 29.
